Europäisches Patentamt

European Patent Office

Office européen des brevets

(19)

(11) **EP 0 700 211 B1**

(12) **EUROPEAN PATENT SPECIFICATION**

(45) Date of publication and mention
of the grant of the patent:
**26.02.2003 Bulletin 2003/09**

(51) Int Cl.⁷: **H04N 7/087**, H04N 7/088,
H04N 5/445

(21) Application number: **95304296.7**

(22) Date of filing: **20.06.1995**

(54) **Text broadcast and teletext decoding device**

Text-Runkfunk und Einrichtung zur Teletext-Dekodierung

Radiodiffusion de texte et dispositif pour décoder du télétexte

(84) Designated Contracting States:
**DE ES FR GB IT**

(30) Priority: **10.08.1994 JP 18830694**
**23.01.1995 JP 806795**

(43) Date of publication of application:
**06.03.1996 Bulletin 1996/10**

(73) Proprietor: **SHARP KABUSHIKI KAISHA**
**Osaka-shi, Osaka-fu 545-0013 (JP)**

(72) Inventor: **Mitani, Koichi**
**Utsunomiya-shi, Tochigi (JP)**

(74) Representative: **Brown, Kenneth Richard et al**
**R.G.C. Jenkins & Co.**
**26 Caxton Street**
**London SW1H 0RJ (GB)**

(56) References cited:
**EP-A- 0 339 675        EP-A- 0 343 636**
**EP-A- 0 497 235        US-A- 5 072 214**
**US-A- 5 298 995        US-A- 5 477 274**

• **MASAMI HARIGAI ET AL: "LSI CHIP SET FOR
CLOSED CAPTION DECODER SYSTEM" IEEE
TRANSACTIONS ON CONSUMER
ELECTRONICS, vol. 37, no. 3, 1 August 1991,
pages 449-454, XP000263222**
• **MEYER J: "TELETEXT: A TRUE MONOCHIP
SOLUTION" IEEE TRANSACTIONS ON
CONSUMER ELECTRONICS, vol. 36, no. 3, 1
August 1990, pages 693-698, XP000162908**
• **PATENT ABSTRACTS OF JAPAN vol. 017, no.
253 (E-1367), 19 May 1993 & JP 04 373284 A
(FUJITSU GENERAL LTD), 25 December 1992,**
• **TARRANT D R: "A NEW TELETEXT DECODER
WITH ADVANCED OSD FEATURES FOR WIDE
SCREEN TV" IEEE TRANSACTIONS ON
CONSUMER ELECTRONICS, vol. 39, no. 3, 1
August 1993, pages 166-174, XP000396276**
• **PATENT ABSTRACTS OF JAPAN vol. 018, no.
105 (E-1512), 21 February 1994 & JP 05 304641 A
(VICTOR CO OF JAPAN LTD), 16 November 1993,**
• **KINGHORN J R: "ENHANCED ON-SCREEN
DISPLAYS FOR SIMPLER TV CONTROL" IEEE
TRANSACTIONS ON CONSUMER
ELECTRONICS, vol. 38, no. 3, 1 August 1992,
pages 725-733, XP000311917**

**Description**

BACKGROUND OF THE INVENTION

The present invention relates to text-broadcast and teletext decoding devices and, more particularly, to text-broadcast and teletext decoding devices which have special facilities such as to receive text-broadcast and teletext data consisting of text and graphics, which is transmitted as a superimposed part of television broadcast signal transmitted during the normal vertical blanking period, and to demodulate and display the received teletext data on the screen of a television receiver in any of independent, superimpose and scroll modes.

In text-broadcasting systems currently working in the world, text-broadcast data is transmitted in the form of a data packet of a unit length superimposed upon a television signal in a specified horizontal scanning interval during a vertical blanking period. The text-broadcast data contains not only character information but also graphic information. Therefore, the data is hereinafter referred to as program data.

Detailed description of current text-broadcasting are found in the book "Hybrid location system - Guidance for receiving the text-broadcast" (Edited and Published by Japanese Broadcasting Association, Jan. 15, 1986). On the basis of this known reference, the text-broadcasting systems (including teletext systems) for which the present invention was made and to which subject matters of the present invention also relate will be described below.

The text-broadcasting is a broadcast information service in which visual information consisting of text and graphics coded in the form of digital signals is sent out as part of television broadcast signal and is captured, decoded and displayed by an adapted television receiver. The coded character signals containing the visual information are transmitted as superimposed upon unused lines being lines in an ordinary television video signal transmitted during the verticalblanking period, said unused lines which will not appear on the screen of a television receiver.

The text-broadcasting has the following features:

(1) Every program is repeatedly broadcast and, therefore, one can look any desired program at any desired time.

(2) In view of the time required for transmitting 1 page of text and the repeating frequency, it is possible to send a number of programs by one television video frequency. Accordingly, one can select a desired one of many programs with a short waiting time.

(3) It is possible to record (by hard copy) a content of a text displayed on a screen by using a printer attached to an adapted television receiver.

There are two text-broadcast transmission methods: one is a pattern transmission method by which a text (character and graphics) is dissolved into pixels and transmitted as sequential pixel data, and the other is a code transmission method by which a text is transmitted as coded signals. The code transmission method has a high transmission rate per page but requires a character generator. On the other hand, the pattern transmission method has a low transmission rate but can send out any desired graphics or characters. The current text-broadcasting system adopts a hybrid transmission method which can use combined advantages of the above-mentioned two methods.

The basic construction of the teletext system is as follows:

The sending side prepares text-broadcast images (pages), each consisting of various kinds of characters and graphics by using text-broadcasting program production equipment and converts characters and mosaics into coded data according to the predetermined standard. The coded data is provided with additional control codes representing, e.g., program number, page number and display mode to form respective pages of coded character data. A number of prepared text-broadcast programs are stored in a large capacity memory wherefrom they are then read out one by one in a specified transmission order and transferred to a text-broadcast program sending equipment whereby each program is completed with a synchronizing code and an error correction code and the coded signals of the text-broadcasting program are assigned to data packets. The packets are then transferred to a multiplexing device wherein each data-packet is superimposed upon specified horizontal scans in the vertical blanking period of a television transmission signal.

At the receiver side, the text-broadcast program transmitted from the sending side is received by either an adapted television receiver containing a decoder or an ordinary television receiver provided with a teletext adapter. The decoder extracts the text-broadcast program designated by a key pad (keyboard) from a demodulated video-signal, decodes signals of the text-broadcast program and generates dot-pattern data of the text corresponding to the codes by controlling a text generator. The text dot-pattern data for one page (i.e., one screenful) is stored in a page memory from which it is repeatedly read out every 1/60 second. The read-out dot-pattern data is fed to an image receiving tube and displayed as a page of the text on the screen of the TV receiver.

Text-broadcast programs are classified into three kinds: independent programs that have no relation to the content of the current television programs, complementary programs which complete the content of the current television programs and superimposable programs that are inserts of subtitles in the coincident television pictures. Examples of the independent programs are general programs as to livelihood information, various kinds of news and guidance information, and programs of a full-screen fixed presentation. The complementary examples are programs such as answers to quizzes, commentary text on television programs and may be of one-line horizontal scroll display. The superimposed examples are titles and dialogues in teleplays and telefilms, titles and words in short musical programs.

A text-broadcasting program may be presented in two forms - "uncollected" form in which elements of a page are sequentially displayed (without being previously stored) even from the middle thereof and "collected" form in which elements of a page are previously stored and, then, are collectively displayed at a time.

A text-broadcast program may be displayed in two kinds of presentation modes: sole mode in which the text program appears on the full screen of a television receiver set and superimposing mode in which the text program is superimposed on a current television picture on the screen. Furthermore, each text program may be displayed in any of six display modes:

(1) full-page still display mode in which a still image of text and graphics is displayed in a page display area on the screen of a television receiver set;
(2) superimposed still display mode in which a still image of text and graphics is superimposed on a part of a current television picture on the display screen;
(3) subtitle display mode in which a still image of the text and graphics is superimposed on a television program to which the text directly concerns;
(4) one-line horizontal-scroll mode in which text and graphics appears in a row and moves from right to left on the screen and disappears from the left end of the screen;
(5) full-page vertical-scroll mode in which the successive lines of text and graphics appears from the bottom of the text display area on the screen of the television receiver set, moves up and disappears off the top of the display area; and
(6) multi-frame display mode in which a text display area is divided into 4 quadrants (frames) and 4 different or the same still images of text and graphics are displayed in respective frames at a time.

The text broadcasting is a data transmission service system whereby any information consisting of text and graphics to be supplied is coded, divided into blocks of suitable length and transmitted as superimposed on horizontal lines in a television video-signal during the vertical blanking period. The process from data transmission to reproduction on a display screen is hierarchically organized according to the hierarchical model defined by the International Organization for Standardization (ISO) to assure conformability with other data transmissionsystems having different protocols.

A hierarchical structure of hybrid type character-signals will be described below:

In the hierarchy, the first layer relates to a transmission channel, the second layer relates to a data line consisting of data packets, the third layer relates to a data packet, the fourth layer relates to a data group consisting of one or more data blocks of transmitted information. A text program is composed of one or more data groups. Each data group is composed of a data-group header and succeeding thereto data header, data unit, an error detection code by cyclic rebundancy check (CRC) and start and end codes defining an error detection coding area.

The fifth layer relates to a text program data which is composed of one or more pages, each consisting of text, graphics and additional sound. The text program data includes common program control data in the head position and subsequent page data of successive pages. Each page may contain not only image information data but added information data. The program control data consists of a program data header and a data unit.

In the text broadcasting system, the eight-bit coding system adopted for data exchange in data communications and computer system is also used as the basic coding system for coding transmittable information consisting of text and graphics.

In an eight-bit code, a number (0 - 15) described by 4 high order bits (b8 - b5) represents a column number and a number (0 - 15) described by 4 low order bits (b4 - b1) represents a row number and a combination of these two numbers represents ( a column number)/(a row number). For example, 03/4 is coded into 00110100 (b8 - b1). The eight-bit coding can express 256 ($16 \times 16$) positions of codes since one code location can be set thus by an 8-bit code. A code area of the code table is divided into 4 blocks - CO (00, 01 columns) and C1 (08, 09 columns) are areas for reading a control code, GL (02 - 07 columns) and GR(10-15 columns) are areas for reading a character code. 02/0 (SP : Space), 07/15 (DEL : Delete), 10/0 and 15/15 are areas for particular codes. Both areas GL(Graphic-set left) and GR(Graphic-set right) can read each 94 characters. Namely, using the code table can call up any suitable group from a variety of code groups, assuring effective transmission of coded data.

Control codes are used for transmitting control information such as a display format specifying color, sizes and layout of text and graphics to be displayed on a display screen. The display format identifies the display area on the screen into which data may be entered, by specifying its reference point and operating (working) positions. The reference point is provided for clearly determining the operating position of the display even in case when the display area changes its size. It is usually set at the below left corner of the horizontal display area for horizontally written text of standard density or at the top middle point of the vertical display area for vertically written text of standard density. The operating position can be freely moved within the display area on the screen according to control codes and parameters.

Character sets comprise a set of Japanese KANJI characters (like Chinese letters), a set of alphanumeric characters, a set of Japanese KATAKANA characters, a set of Japanese HIRAGANA characters. The additional sound is a coded music information including sound basic elements (sound pitch, length and intensity) and additional information such as tone, which is transmitted, decoded and reproduced by driving an electronic sound generator. The mosaic graphics coding method is similar to the character coding method but is featured by particular facilities to enhance the expression by superposing and separating mosaic elements.

A TV broadcasting station mixes text program data on TV video signals by using the mixing device, modulates the signals by the modulator and sends it over the air through the antenna. A receiving side receives, by the tuner, the TV signals incoming through the antenna and extracts therefrom video and audio signals by the IF demodulating circuit. The text data is decoded by the text-broadcast decoder, mixed with relevant video signals and audio signals by the mixers respectively and then reproduced on the monitor.

A conventional text-broadcast receiving device comprises an input control portion, a central processing unit (CPU), a character generator (CG) on a read only memory (ROM) and a display control portion, a memory and an interface (I/F).

A video signal detected by a tuner is inputted into the input control portion which in turn extracts a text-broadcast program data from the received video signal and performs error correction on the data by using an error correction circuit. The error corrected program data with the program number is stored as a unit program in the memory. When a user wants reproducing of the recorded program data, he enters the program number by pressing keys on a keypad of the adapted television receiver set. The desired program number through the interface I/F is inputted into the CPU. The program data corresponding to the program number input is read from the memory under the control of the CPU.

The read-out program data (text and graphics) through the display control portion is outputted in the form of image signals (R, G, B, Y). The character generator (CG) on the memory (ROM) stores character fonts for text information and is used for converting character information into pictorial signals. Namely, the character generator is made on the read only memory in which sets of dot patterns of Japanese KANJI characters, alphanumeric characters, Japanese KATAKANA characters, Japanese HIRAGANA characters and mosaic graphics are written, and generates dot pattern data of characters and graphics corresponding to the decoded data to be displayed.

As mentioned above, the text program transmitted from the television broadcasting station is displayed in the same presentation mode as specified at the sending side (without making any modification at the receiver side).

Processing steps (S) for decoding text-broadcast program data in a conventional text-broadcast decoding device are as follows:

Firstly ,Step (S1) judges whether a received code is a character code or not. If not, Step (S2) performs processing with the control code (such as to specify a character size, display color, screen coordinates and other attributes). Step (S3) judges whether a page is completed or not. If not, the processing proceeds to Step (S1).

When the received code is a character code (at Step S1), Step (S4) processes and displays one character and proceeds to Step (S3).

Japanese Laid-open Patent Publication No. 57-192185 describes a conventional text-broadcast decoding device which usually displays text-broadcast information in mode F (a still page on a full screen) and in mode V (a still page on a full screen with scrolling up the screen) but allows said text information to be displayed on a part area of a display screen when a user operates keys on a keypad. This facility enables a the user to observe an ordinary television program on the same screen. Namely, a full-screen still image is developed as pixels on an image memory and is read therefrom so that it may be displayed in a single horizontal line on a part of the display screen, with horizontal scrolling.

Japanese Laid-open Patent Publication No. 59-105788 discloses a conventional text-broadcast decoding device which is intended to change a horizontal scroll location to a vertical scroll location to avoid overlapping a horizontally scrollable text over a character image of a main program on a display screen, thereby assuring the visibility of both character images. Namely, this device is capable of selectively changing the displaying location of text-broadcast information on the display screen.

Japanese Laid-open Patent Publication No. 1-143580 describes a conventional text-broadcast decoding device which is provided with a clock pulse generating circuit, a display control circuit, a memory, a synchro separating circuit and a switching circuit in order to realize freely setting a location and a size of character image on a display screen and which is capable of variably setting an area on a display screen, in which text information is superimposed according to a display timing signal and a display addressing signal in synchronism with a synchronizing signal.

Japanese Laid-open Patent Publication No. 62-57833 describes a conventional text-broadcast decoding device which has a programmable timer that can be adjusted to channel information, text program information and time information inputted from a program selecting keyboard. The device, therefore, enables a user to easily preset and obtain a text-broadcast program at a given time by using the program selecting keyboard.

Japanese Laid-open Patent Publication No. 63-185173 discloses a conventional text-broadcast decoding device for use in a television receiver set having a horizontally wide-display screen, which is devised to synthesize subtitles on movie-film-size images if they have subtitles at its top and bottom blanks in order to solve thereby such a problem that when the movie-film-size program with subtitles arranged at the top and bottom blank thereof is displayed on the display screen, the subtitles may sometime disappear out of the screen. Accordingly, this device is provided with a display having a different aspect ratio other than standardized one, a blank detecting circuit, a subtitle detecting circuit and a subtitle synthesizing circuit and which detects subtitles on the top and bottom blanks of a movie-film-size image and newly synthesizes the subtitles on the image.

Japanese Laid-open Patent Publication No. 2-305190 describes a conventional text-broadcast decoding device which is intended to process subtitle data of a movie-film sort with subtitles added during blanking intervals in such a way that the image and subtitles may be displayed within the display screen.

Japanese Laid-open Patent Publication No. 3-127565 describes a conventional text-broadcast decoding device which is intended to obtain easily readable subtitles on an image enlarged to full size of the display screen on such conditions that the original image is narrow and subtitles above or below the image must be synthesized on a suitable location, minimizing an effect of the original image signal. To realize the above-mentioned purpose, the device compares data delayed in a field memory with a previously specified value, obtains a differential signal output and changes the original image signal and the subtitle portion of the delayed image signal by the differential signal output. When a value to which the delayed data is compared is preset as near as the black level, a comparing signal may have larger width and may extract a wider area from the original signal. Furthermore, every character of the subtitle may have rounded front and rear edges by the effect of the restricted area. The resultant effect makes the synthesized subtitles be preferably modified and be easy to read.

Similar to the aforementioned text broadcasting systems, currently working teletext systems send out teletext data in the form of a packet of data having a unit length superimposed upon a television signal in a specified horizontal scanning interval during a vertical blanking period. The teletext data contains not only teletext information but also graphic information. Therefore, the teletext data is hereinafter referred to as page data.

Current teletext systems are described in detail for example in a well known reference material "WORLD SYSTEM TELETEXT AND DATA BROADCASTING SYSTEM (Department of Trade and Industry Kingsgate House, December 1987). On the basis of this reference, teletext systems for which the present invention was made and to which subject matters of the present invention relate will be described below.

The teletext is a broadcast information service in which visual information consisting of text and graphics is coded in the form of digital signals which are then sent out as part of television broadcast signal and are captured, decoded and displayed by a television receiver set. The teletext signals containing the visual information are transmitted as superimposed upon the vertical blanking period of an ordinary television video signal, which will not appear on the screen of a television receiver set.

The teletext has the following features:

(1) Every program is repeatedly broadcast and, therefore, a user can look any desired page at any time he desires.
(2) In view of time required for transmitting 1 page of text and repeating frequency, it is possible to send a number of programs by one television video frequency and, therefore, a user can select desired one of many programs with a short waiting time.
(3) It is possible to record (by hard copy) a content of text displayed on a screen by using a printer attached to an adapted teletext television receiver set.

The teletext uses a code transmission method that transmits information as coded signals. The code transmission method has a high transmission rate per page but requires a character generator.

The basic construction of the teletext system is as follows:

The sending side prepares teletext page each consisting of various kinds of characters and graphics by using teletext page production equipment and converts characters and specific mosaics into coded data according to a preset standard. The coded data is provided with additional control codes representing, e.g., page number, subpage number and display mode to form a page of teletext data. A number of prepared teletext pages are stored in a large capacity memory wherefrom they are then read out one by one in a specified transmission order and transferred to a teletext page sending equipment whereby each teletext page is completed with a synchronizing code and an error correction code and the coded teletext signals are assigned to data packets. The packets are then transferred to a multiplexing device wherein each data-packet is superimposed upon specified horizontal lines in a television transmission signal during vertical blanking period.

At the receiver side, the teletext pages transmitted from the sending side are received by either an adapted television receiver set containing a teletext decoder or an ordinary television receiver set provided with a teletext adapter. The decoder extracts the teletext pages designated by a keypad (keyboard) from a demodulated video-signal, decodes text signals of the page and generates dot-pattern data of the text corresponding to the codes by controlling a character generator. The dot-pattern character data for one page is stored in a page memory from which it is repeatedly read out every 1/50 second. The read-out dot-pattern data is fed to an image receiving tube and displayed as a page of the text on a display screen thereof.

Teletext pages are classified into three kinds - an independent page that has no relation to the content of a coincident television program, a complementary page that completes the content of a current television program and superimposable page that is an insert of subtitle in a coincident television picture. Examples of the independent pages are general pages of livelihood information, various kinds of news and guidance information, and a page of a full still image presentation and news flash page superimposed on a television picture. The complementary examples are pages containing, e.g., answers to quizzes, commentary text on television programs and may be of one-line horizontal scroll display. The examples of subtitle page are dialogues in teleplays and telefilms, subtitles and words in short musical programs.

A teletext page may be presented in two forms - "uncollected" form in which elements of a page are sequentially displayed (without being previously stored) even from the middle thereof and "collected" form in which elements of a page are first stored and, then, are collectively displayed at a time.

A teletext page may be displayed in two kinds of presentation modes: sole mode in which the teletext page appears on the full screen of a television receiver set and superimposing mode in which the teletext program is superimposed on a current television picture on the screen. Furthermore, each teletext page may be displayed in any of three display modes:

(1) full-page still display mode wherein a still image of text and graphics is displayed in display area on the screen of a television receiver set;

(2) superimposed still display mode wherein a still image of text and graphics is superimposed on a part of a current television picture on the display screen;

(3)subtitle display mode wherein a still image of the text and graphics is superimposed on a television program to which the text directly concerns.

The teletext is one kind of data transmission service system whereby any information consisting of text and graphics to be supplied is coded, divided into blocks of suitable length and transmitted as superimposed on horizontal lines in a television video-signal during the vertical blanking period.

The data line consists of 45 bytes: leading 2 bytes are a synchronizing clock (Clock run-in), 1 byte is a synchronizing byte (Framing Code) and 42 bytes are a data packet (transmission unit of a character signal superimposed upon one horizontal blanking period H). First two bytes of a data packet represent a magazine number (the hundreds digit of a page number) and a row address respectively. These 2 bytes are protected by a hamming code (8,4). In other 40 bytes, odd parity is set at the highest significant bit. Eight (8) bytes of a page header ROW0 are protected by a hamming code (8,4). These 8 bytes contain the units digit and tens digit of a page number, units, tens, hundreds and thousands digits of a subpage number and control bits C4 to C14. Remaining 32 bytes of the page header are allocated to characters and graphics to be presented in the first row.

ROW1 to ROW23 are called "text data" consisting of each 40 characters in a row. One (1) page consists of a page header and text data. ROW24 to Row31 for extension of packets are used for transmission of auxiliary data.

In the teletext, the eight-bit coding system, which is used for data exchange in data communications and computer systems, is adopted as the basic coding system for coding information consisting of text and graphics to be transmitted. Standard alphabetic characters are expressed each by 1 byte (7 bit + Parity bit). In a standard alphanumeric character set, numbers 0 - 7 by 3 high-order bits (b6 - b4) represent column numbers and numbers 0 - 15 by 4 low-order bits (b3 - b0) represent row numbers. A combination of two bits represents a column number/row number. For example, 3/4 is coded into 0110100 (b6 - b0). One code location can be set by a combination of seven bits. Accordingly, 128 ($8 \times 16$) code positions can be expressed. Codes 0/0 - 0/15 and 1/0 - 1/15 are areas for control codes representing attributes, e.g., character color and size.

A Japanese KANJI character is expressed by 2-byte data, 1-byte data, using a code table of eight-bit codes. In an eight-bit code, numbers 0 - 15 described by 4 high order bits b8 - b5 represent column numbers and numbers 0 - 15 described by 4 low order bits b4 - b1 represent row numbers and a combination of these two numbers represents (a column number)/(a row number). For example, 03/4 is coded into 00110100 (b8 - b1). The eight-bit coding can express 256 ($16 \times 16$) positions of codes since one code location can be set by an 8-bit code. The code table divides a code area into 4 blocks - CO (00, 01 columns) and C1 (08, 09 columns) are areas for reading a control code, GL (02 - 07 columns) and GR(10-15 rows) are areas for reading a character code. 02/0 (SP), 07/15 (DEL), 10/0 and 15/15 are areas for particular codes. Both areas GL and GR can read each 94 characters. Namely, using the code table can call up any suitable set from a variety of code sets, assuring effective transmission of coded data.

Control codes are used for transmitting control information such as a display format specifying color, sizes and layout of text and graphics to be displayed on a display screen.

Character sets comprise a set of Japanese KANJI characters, a set of alphanumeric characters, a set of Japanese KATAKANA characters, a set of Japanese HIRAGANA characters. The mosaic graphics coding method is similar to the character coding method but is featured by particular facilities to enhance the expression by superposing and separating mosaic elements.

A conventional receiving device used in the above-described teletext system is similar to the conventional text-broadcast receiving device.

As mentioned already in the conventional text-broadcasting station, a TV broadcasting station mixes teletext page data on TV video signals by using a mixing device, modulates the signals by a modulator and sends it over the air through an antenna. A receiving side receives by a tuner the TV signals incoming through an antenna and extracts therefrom teletext image signals by an IF demodulating circuit. The teletext data is decoded by the teletext decoder and mixed with relevant image signal and sound signal by a mixer, then the teletext page is reproduced on a display screen of the monitor.

A conventional teletext receiving device is described as follows:

A video signal detected by a tuner is inputted into an input control portion which in turn extracts a teletext page data from the received video signal and performs error correction on the data by using an error correction circuit. The error corrected page data with a page number is stored as a unit page in a memory. When a user wants reproducing the recorded page data, he enters the page number by pressing keys on a keypad of the adapted television receiver set. The designated page number through an interface is inputted into the CPU. The page data corresponding to the inputted page number is read from the memory under the control of the CPU.

When the read-out page data consists of text and graphics, the data through a display control portion is outputted in the form of image signals (R, G, B, Y). A character generator (CG) on a read-only memory (ROM) stores character fonts for teletext information and is used for converting character information into pictorial signals. Namely, the character generator is made on the read only memory in which sets of dot patterns of Japanese KANJI characters, alphanumeric characters, Japanese KATAKANA characters, Japanese HIRAGANA characters and mosaic graphics are written, and generates dot-pattern data of characters and graphics according to the decoded data to be displayed. As mentioned above, the teletext page transmitted from the television broadcasting station is displayed as it is in a given presentation mode.

Processing steps (S) for decoding teletext page data in a conventional teletext decoding device are as follows:

Step (S1) firstly judges whether a received code is a character code or not. If not, Step (S2) performs processing with the control code (such as to specify a character size, display color, screen coordinates and other attributes). Step (S3) judges whether a page is completed or not. If not, the processing returns to Step (S1). When the received code is a character code (at Step S1), Step (S4) processes and displays one character and then the operation proceeds to Step (S3).

Japanese Laid-open Patent Publication No. 60-134685 describes a conventional teletext decoding device which decodes teletext information containing binary coded control data and presentable information to be displayed on a display screen and which comprises a common storage for binary coded data; extracting means for extracting from a teletext signal previously selected data to be stored in the storage; processing means for processing the selected and stored data, generating the processed data to be stored in the storage; a display processor for displaying the presentable information on a display screen according to the processed and stored data; switching means for selectively interconnecting the extracting means, the processing means and the display processor to the common storage; and timing means for controlling the switching means so as to connect the extracting means, the processing means and the display processor to the common storage for respective time intervals within the specified time interval sequences.

Japanese Laid-open Patent Publication No. 62-136185 discloses a conventional teletext decoding device which is intended to receive, store and process teletext information transmitted as digital coded data containing a plurality of different pages identified by separate page numbers.

Japanese Laid-open Patent Publication No. 63-155887 describes a conventional teletext decoding device which is intended to receive, store and process teletext information transmitted as digital coded data containing a plurality of different pages identified by respective page numbers. The teletext information is transmitted as a television signal in a television line wherein there is no ordinary television video signal representing television video information. This television line is defined as data line.

Japanese Laid-open Patent Publication No. 1-251972 describes a conventional teletext decoder arrangement which is intended to receive, store and process teletext information transmitted as digital coded data that includes a plurality of different pages identified by respective page numbers. The teletext information is transmitted as a television signal in a television line wherein no ordinary television video signal representing television video information exists.

Japanese Laid-open Patent Publication No. 2-26189 discloses a conventional teletext decoding device for decoding teletext information consisting of a number of different pages that are identified by respective page numbers and consist each of a number of data packets. This decoder is provided with processing means, page selecting means for identifying pages by page numbers, detecting means for detecting a selectable page when receiving it and at least one page memory for storing data packets of the selected page, said memory having a number of memory rows for holding data packets corresponding to the selected page.

Text broadcast programs are displayed mainly in screen mode, i.e., a still-image (page) is displayed full on the screen of a display device. Namely, a still image occupies a full screen of a television receiver set and, therefore, makes it impossible to enjoy an ordinary television program at a time on the display screen. Programs can be prepared by using the superimposing technique, for example, a horizontally scrollable text or subtitle may be superimposed on a television picture on the display screen. Such programs, however, are not so much applied. Means for superimposing a full-screen still-image program can also be applied but may impair the visibility of both text and television picture because the former overlaps the latter. A full-screen still-image may be compressed in its vertical and horizontal directions to form a small frame in a television picture on a display screen. This method, however, causes that reduced in size text is difficult to read. Consequently, it is very difficult to obtain information from a text broadcasting program while viewing an ordinary television program on the screen of a television receiver set.

The method disclosed in Japanese Laid-Open Patent Publication No. 57-192185 generates characters by developing received pattern data on an image memory but may encounter with such a problem that character may be deformed in its shape or displaced from the given position in the process of development of the pattern data if the latter has been ill received. Distortion or dislocation of characters does not present a fatal defect when the entire pattern data developed on the image memory is presented. However, when one line of image is taken out from the image memory to display it in single-line horizontal scroll mode on the monitor screen, a break of character part may occur depending on the pattern image developing condition, causing a considerable impairment of character presentation.

When a still text program is viewed on a wide-aspect monitor, a part of received program may disappear or get out of a display frame or a subtitle moves and overlies a text display area or a telop depending on a screen mode of the monitor.

The method disclosed in Japanese Laid-Open Patent Publication No. 59-105788 requires a user to select a location for single-line horizontal scrolling display. If the user does nothing, the scrollable image may overlay on a television image.

Teletext pages are displayed mainly in screen mode, i.e., a still-image (page) is displayed full over the screen of a display device. Namely, a still image occupies a full screen of a television receiver set, prohibiting user to enjoy an ordinary television program at the same time on the display screen. News flash pages and subtitle pages can be superimposed on a television picture on the television receiver set, but such pages are not so much applied. Means for superimposing a page of still image can be applied but may impair the visibility of both text and television picture because the former overlies on the latter. A still-image page may be compressed in its vertical and horizontal directions to form a small page in a television image on display screen. This method, however, causes the reduced size text to be difficult to read. Consequently, it is very difficult to obtain information from a text broadcasting program while viewing an ordinary television program on the display screen.

When a still-image page is viewed on a wide-aspect monitor, a part of received page may disappear or get out or a display frame of a subtitle moves and overlaps a text display area or a telop depending on a screen mode of the monitor.

JP 04 373284A discloses a teletext decoder which stores character data in a memory card. A CPU including a ROM and a RAM expands the character data and stores it ready for later reproduction. Scrolling of teletext data is known from, for example EP-A-0 497 235; Masami Harigai et al: 'LSI CHIP SET FOR CLOSED CAPTION DECODER SYSTEM' IEEE TRANSACTIONS ON CONSUMER ELECTRONICS, vol. 37, no. 3, l Augus 1991, pages 449-454 and Tarrant D R: 'A NEW TELETEXT DECODER WITH ADVANCED OSD FEATURES FOR WIDE SCREEN TV' IEEE TRANSACTIONS ON CONSUMER ELECTRONICS, vol. 39, no. 3, 1 August 1993, pages 166-174. The latter document discloses the need for data conversion from acquired format to a different format for use by a display generator.

SUMMARY OF THE INVENTION

In view of foregoing, it is an aim of the present invention to provide a text-broadcast decoding device which is capable of converting a full-still-image into a scrollable image, thereby assuring the acquisition of text-broadcast information and teletext information while viewing a television picture on the screen of a television receiver set, the teletext information being displayed with minimum interference with visibility of the television picture.

According to the present invention there is provided a text-broadcast decoding device for use in a television receiver for receiving and decoding broadcast information including text-broadcast data, said broadcast information being superimposed upon unused lines in an ordinary television video signal transmitted during a vertical blanking period, the device including a memory for storing the text-broadcast data as character data for one or more programs of full-screen still image display, <u>characterized by</u> means operable in a text scrolling mode of the device for generating an image presentation and conversion table from character data read out of the memory, said table storing the text-broadcast data in information units, each of at least a character size of the text, a scrolling display control portion for controlling the display and scrolling of a sequence of the character images using said information units of the text-broadcast data as stored in and sequentially read out from the image presentation and conversion table, the text-broadcast character data including control data for each character representing the character's presentation coordinates and display features, a signal detecting portion for detecting signals of average brightness and peak brightness of a specified area on a television image, and an adaptive reproduction scrolling display control portion for displacing, on the basis of the detected brightness, an area for presenting a scrolled text-broadcast program to an optimal location where the presented program can be easily read and does not affect the television picture.

In an embodiment, the scrolling display control portion includes a coordinate-to-address converter for converting said presentation coordinates represented by the control data of the character data in the text-broadcast information into addresses of the image presentation and conversion table and the table generating means is arranged to prepare the image presentation and conversion table according to the addresses obtained by the coordinate-to-address converter.

In an embodiment, information to be scrollably displayed by the scrolling display control portion is a superimposable text.

In an embodiment, the image presentation and conversion table contains in each said information unit a character code and character data representing a character size, a color code representing a display color, and an attribute code representing an attribute, e.g., for ornamental character processing.

In an embodiment, the device includes a display mode discriminating portion for discriminating a screen mode involving displaying a text-broadcast program on a wide-aspect screen of a monitor, and an adaptive reproduction display control portion for automatically selecting an optimal location for displaying the text-broadcast program on a display screen according to the display mode discriminated by the display discriminating portion.

In an embodiment, the device includes a subtitle position detecting portion for detecting a displaceable subtitle location, and an adaptive reproduction display control portion operable when a text-broadcast program is superimposed on a television picture having a movable subtitle and the subtitle position detected by the subtitle position detecting portion overlaps the scroll displaying area of the text-broadcast information to displace said displaying area of the text-broadcast information to an optimal location apart from the subtitle.

In an embodiment, the device is arranged so that when a page of a full-screen still-image program transmitted from a television broadcasting station is to be converted into a scrollable image for display said page is also displayed as a reduced-size still-image insert in a display for several seconds.

In an embodiment, the table generating means is arranged to prepare the image presentation and conversion table for one page of text-broadcast data and the scrolling display control portion reads out the characters one by one from the beginning of the table and sequentially displays and scrolls them on a display screen.

In an embodiment, in case of displaying a horizontally scrollable single line of characters on a display screen, the scrolling display control portion first determines a reference character and then arranges all other characters in a line relative to the reference character.

In an embodiment, the device includes a timer for performing an interrupt to cause a previously designated and preset text-broadcasting program or a page to be displayed at a preset time interval or to update the program or page at a preset time interval.

In an embodiment, the memory is operable for storing the decoded text-broadcast data of each program together with a program number, and in that the device includes a central processing unit for reading the text-broadcast data from the memory by the program number and a signal detecting portion for converting an image signal portion of the ordinary television video signal into a digital signal, generating a scroll-displaying area on a display screen, detecting a peak intensity level and an average intensity level of said image in said area, comparing the image intensity levels, superimposing the text-broadcast program on the image and transferring the obtained data into the central processing unit which in turn determines a displaying area on the basis of the data received from the signal detecting portion to prevent the text-broadcast program image from overlapping any character in the television picture on the display screen.

In an embodiment, the signal detecting portion referred to in the preceding paragraph includes an A-D converter for converting an image signal into a digital signal, a timing pulse generating circuit for generating a synchronizing signal for creating a scroll-displaying area on a display screen, a peak detecting circuit for detecting peak levels of the image in two areas at the same time according to the synchronizing signal, an average level detecting circuit for detecting average levels of the image in two areas at the same time and a comparator circuit for comparing the signal levels from the peak detecting circuit and a comparator circuit for comparing the signal levels from the average detecting circuit.

BRIEF DESCRIPTION OF THE DRAWINGS

Figure 1 shows hierarchical structure of character signals in a conventional hybrid type text-broadcast system.

Figure 2 shows a code table of 8-bit codes in a conventional hybrid type text-broadcast system.

Figure 3 shows code sets usable by using the code table of Fig. 2.

Figures 4A and 4B are construction views for explaining a conventional text-broadcasting system and a teletext receiving system.

Figure 5 is a construction view of a conventional text-broadcast and teletext receiver set.

Figure 6 is a flow chart of conventional decoding processing.

Figure 7 is illustrative of conventional transmission line and data line.

Figures 8A and 8B are general construction views of a conventional data line.

Figure 9A shows a part (1) of the data line of Figs. 8A and 8B.

Figure 9B shows a part (2) of the data line of Figs. 8A and 8B.

Figure 10 is illustrative of a conventional table of codes representing standard alphabetic characters.

Figure 11 is a construction view of a conventional teletext receiving system.

Figure 12 is a construction view for explaining a text-broadcast decoding device according to the present invention.

Figure 13 is a functional block diagram (1) of a central processing unit (CPU) shown in Fig. 12.

Figure 14 is a functional block diagram (2) of a central processing unit (CPU) shown in Fig. 12.

Figures 15A, 15B and 15C are views for explaining a coordinate-to-address conversion method according to the present invention.

Figure 16 is a view for explaining a coordinate-to-address conversion method according to the present invention.

Figures 17A, 17B and 17C are construction views of a signal detecting portion shown in Fig. 12.

Figures 18A, 18B, 18C and 18D are views for explaining display form according to the present invention.

Figure 19 is a flow chart of decoding processing according to the present invention.

Figure 20 is illustrative of a remote control transmitter according to the present invention.

Figure 21 is illustrative of an area for displaying text-broadcast information according to the present invention.

Figure 22 is illustrative of a presentable image conversion table according to the present invention.

Figure 23 shows an example of display image layout according to the present invention.

Figure 24 is a flow chart of decoding processing according to the present invention.

Figures 25A, 25B, 25C and 25D show examples of display screen modes according to the present invention.

Figure 26 shows an example of a small screen image according to the present invention.

Figure 27 is a flow chart of decoding processing according to the present invention.

Figure 28 is a flow chart of processing for display mode judgment according to the present invention.

Figure 29 is a functional block diagram (1) of a central processing unit (CPU) shown in Fig. 12.

Figure 30 is a functional block diagram (2) of a central processing unit (CPU) shown in Fig. 12.

Figures 31A, 31B and 31C are views for explaining a coordinate-to-address conversion method according to the present invention.

Figure 32 is a view for explaining a coordinate-to-address conversion method according to the present invention.

Figure 33 is illustrative of an area for displaying teletext information according to the present invention.

Figure 34 shows an example of display imagelayout according to the present invention.

Figure 35 is a flow chart of processing for display mode judgment according to the present invention.

PREFERED EMBODIMENT OF THE INVENTION

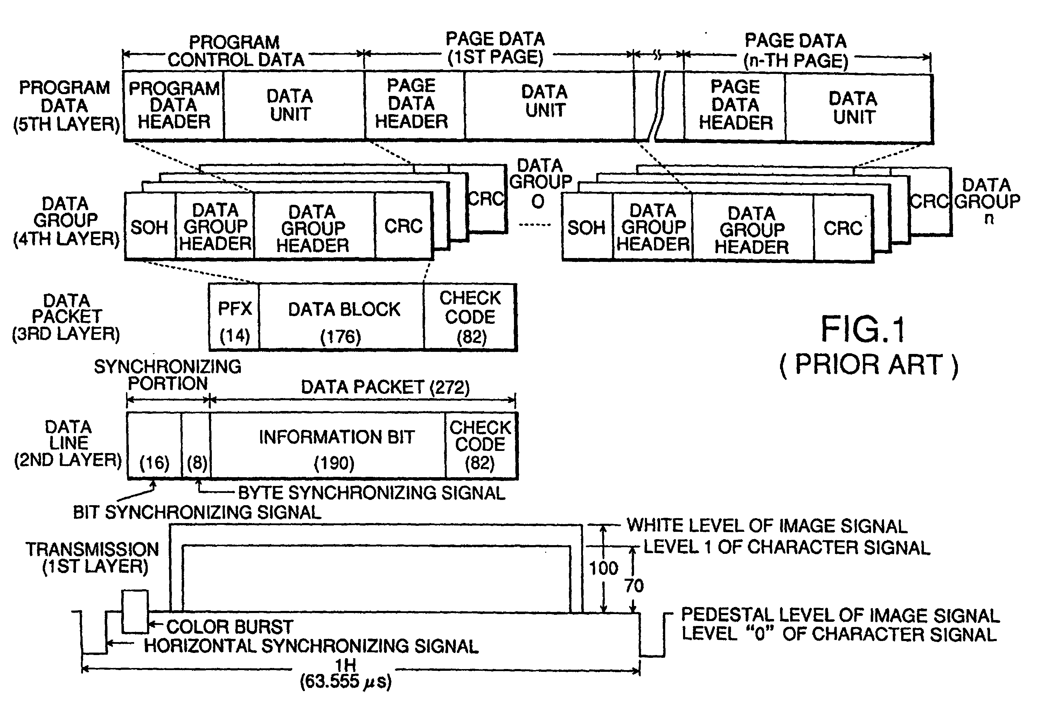

Figure 1 is illustrative of a hierarchical structure of hybrid type character-signals, which will be described bellow:

In the hierarchy, the first layer relates to a transmission channel, the second layer relates to a data line consisting of data packets, the third layer relates to a data packet, the fourth layer relates to a data group consisting of one or more data blocks of transmitted information. A text program is composed of one or more data groups. Each data group is composed of a data-group header and succeeding thereto data header, data unit, an error detection code by cyclic redundancy check (CRC) and start and end codes defining an error detection coding area.

The fifth order relates to a text program data which is composed of one or more pages, each consisting of text, graphics and additional sound. The text program data includes common program control data in the head position and subsequent page data of successive pages. Each page may contain not only image information data but added information data. The program control data consists of a program data header and a data unit.

In the text broadcasting system, the eight-bit coding system adopted for data exchange in data communications and computer system is also used as the basic coding system for coding transmittable information consisting of text and graphics.

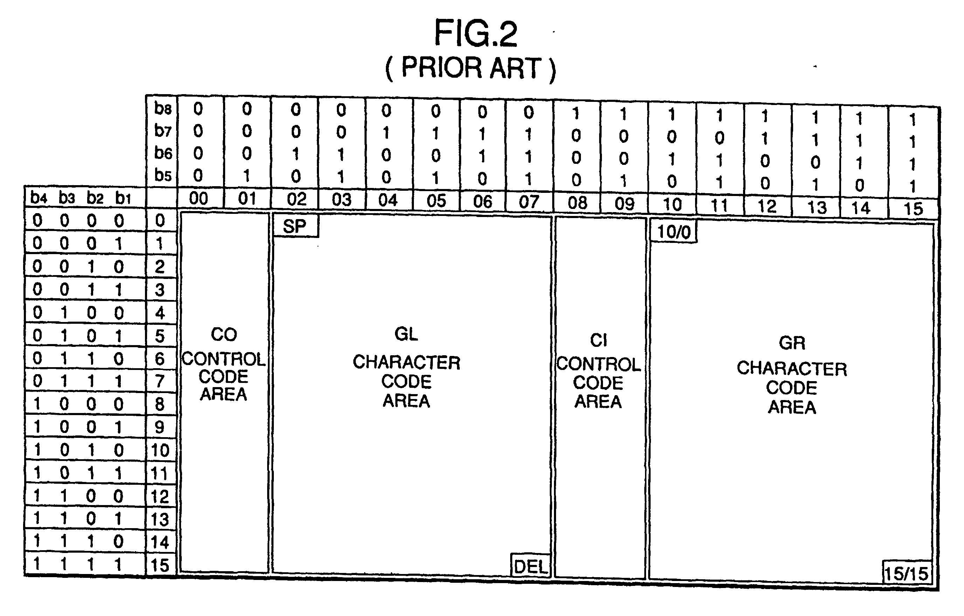

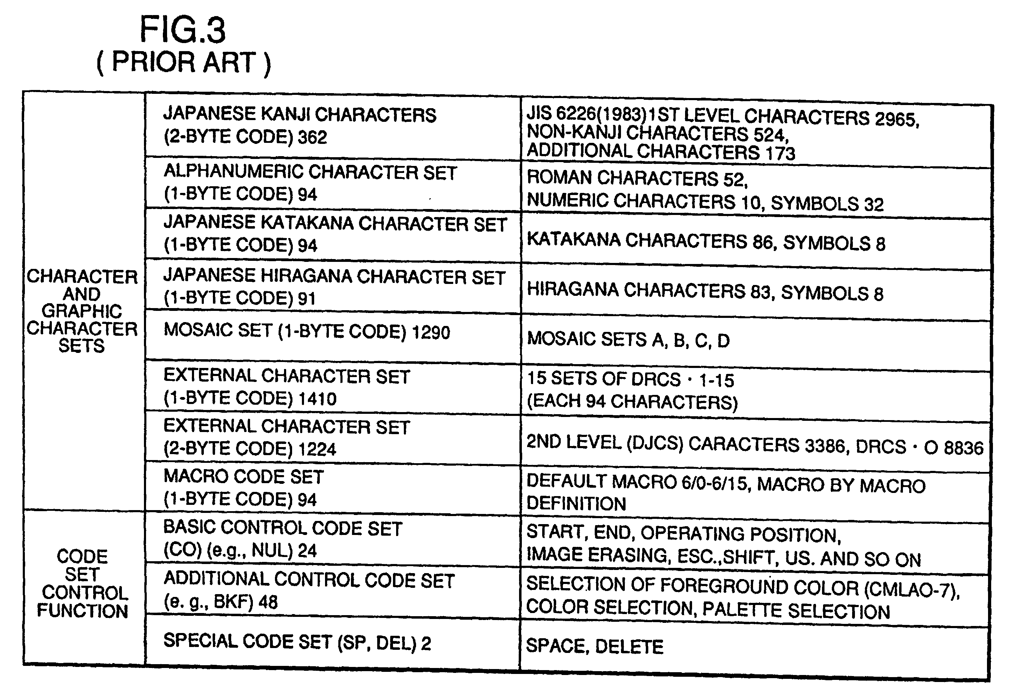

Figure 2 shows a code table of eight-bit codes. In an eight-bit code, a number (0 - 15) described by 4 high order bits (b8 - b5) represents a column number and a number (0 - 15) described by 4 low order bits (b4 - b1) represents a row number and a combination of these two numbers represents (a column number)/(a row number). For example, 03/4 is coded into 00110100 (b8 - b1). The eight-bit coding can express 256 (16 × 16) positions of codes since one code location can be set thus by an 8-bit code. A code area of the code table is divided into 4 blocks - CO (00, 01 column) and C1 (08, 09 columns) are areas for reading a control code, GL (02 - 07 columns) and GR(10-15 columns) are areas for reading a character code. 02/0 (SP), 07/15 (DEL), 10/0 and 15/15 are areas for particular codes. Both areas GL and GR can read each 94 characters. Namely, using the code table can call up any suitable group from a variety of code groups shown in Fig. 3, assuring effective transmission of coded data.

Control codes are used for transmitting control information such as a display format specifying color, sizes and layout of text and graphics to be displayed on a display screen. The display format identifies the display area on the screen into which data may be entered, by specifying its reference point and operating (working) positions. The reference point is provided for clearly determining the operating position of the display even in case when the display area changes its size. It is usually set at the below left corner of the horizontal display area for horizontally written text of standard density or at the top middle point of the vertical display area for vertically written text of standard density. The operating position can be freely moved within the display area on the screen according to control codes and parameters.

Character sets comprise a set of Japanese KANJI characters, a set of alphanumeric characters, a set of Japanese KATAKANA characters, a set of Japanese HIRAGANA characters. The additional sound is a coded music information including sound basic elements (sound pitch, length and intensity) and additional information such as tone, which is transmitted, decoded and reproduced by driving an electronic sound generator. The mosaic graphics coding method is similar to the character coding method but is featured by particular facilities to enhance the expression by superimposing and separating mosaic elements.

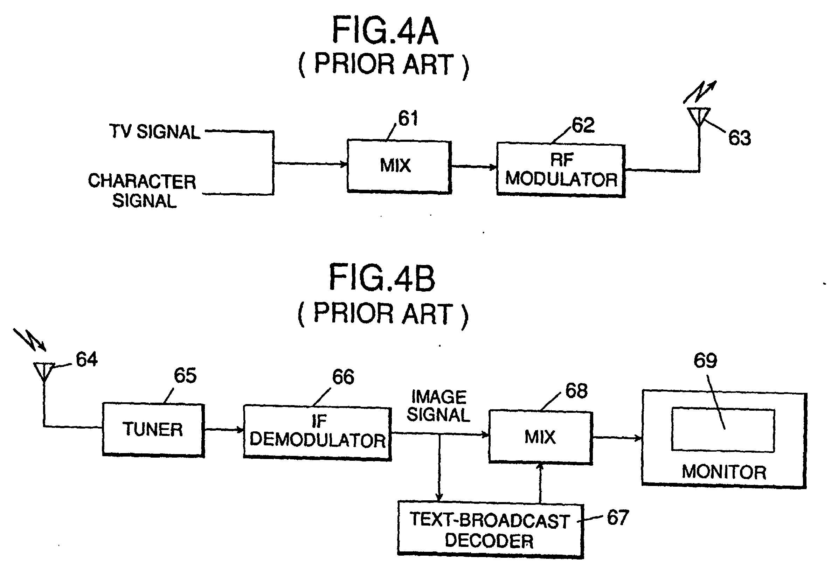

Figures 4A and 4B are construction views of a conventional transmitting and receiving devices used in text broadcasting systems. Fig. 4A is illustrative of a transmitting device and Fig. 4B is illustrative of a receiving device. There is shown a mixing device (MIX) 61, a RF modulator 62, a transmitting antenna 63, a receiving antenna 64, a tuner 65, an IF demodulator 66, a text-broadcast (teletext) decoder 67, a mixing device (MIX) 68 and a monitor 69.

As shown in Fig. 4A, a TV broadcasting station mixes text program data on TV video signals by using the mixing device 61, modulates the signals by the demodulator 62 and sends it over the air through the antenna 63. As shown in Fig. 4B, a receiving side receives, by the tuner 65, the TV signals incoming through the antenna 64 and extracts therefrom video and audio signals by the IF demodulating circuit 66. The text data is decoded by the text-broadcast decoder 67, mixed with relevant video signals and audio signals by the mixer 68 respectively and then reproduced on the monitor 69.

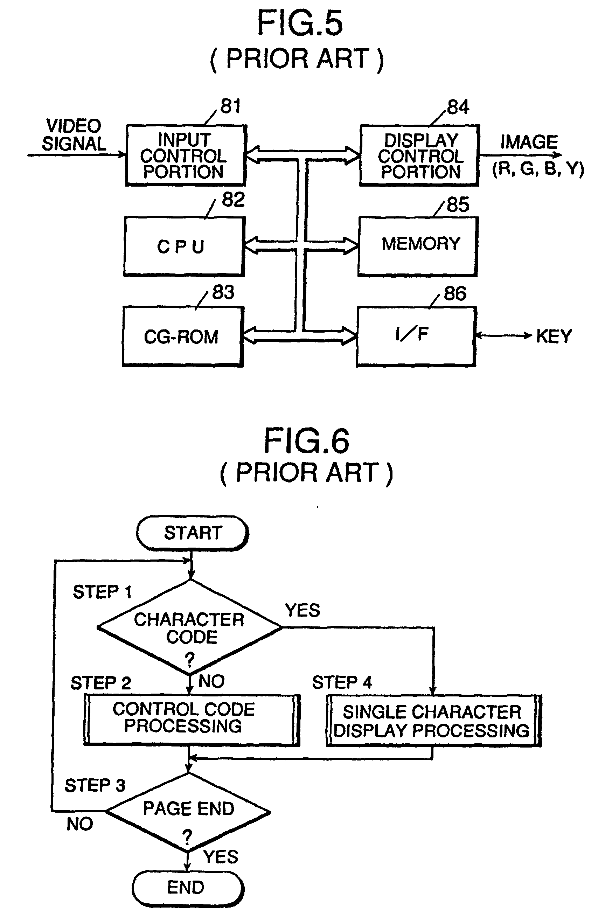

Figure 5 is a construction view of a conventional text-broadcast receiving device which comprises an input control portion 81, a central processing unit (CPU) 82, a character generator (CG) on a read only memory (ROM) 83 , a display control portion 84, a memory 85 and an interface (I/F) 86.

A video signal detected by a tuner (not shown) is inputted into the input control portion 81 which in turn extracts a text-broadcast program data from the received video signal and performs error correction on the data by using an error correction circuit. The error corrected program data with the program number is stored as a unit program in the memory 85. When a user wants reproducing of the recorded program data, he enters the program number by pressing keys on a keypad of the adapted television receiver set. The desired program number through the interface I/F 86 is inputted into the CPU 82. The program data corresponding to the program number input is read from the memory 85 under the control of the CPU 82.

The read-out program data (text and graphics) through the display control portion 84 is outputted in the form of image signals (R, G, B, Y). The character generator (CG) on the memory (ROM) 83 stores character fonts for text information and is used for converting character information into pictorial signals. Namely, the character generator 83 is made on the read only memory in which sets of dot patterns of Japanese KANJI characters, alphanumeric characters, Japanese KATAKANA characters, Japanese HIRAGANA characters and mosaic graphics are written, and generates dot pattern data of characters and graphics corresponding to the decoded data to be displayed.

As mentioned above, the text program transmitted from the television broadcasting station is displayed in the same presentation mode as specified at the sending side (without making any modification at the receiver side).

Figure 6 is a flow chart of processing for decoding text-broadcast program data in a conventional text-broadcast decoding device. The decoding steps (S) are as follows:

Firstly, Step S1 judges whether a received code is a character code or not.

If not, Step S2 performs processing with the control code (such as to specify a character size, display color, screen coordinates and other attributes).

Step S3 judges whether a page is completed or not. If not, the processing proceeds to Step S1.

When the received code is a character code (at Step S1), Step S4 processes and displays one character and proceeds to Step S3.

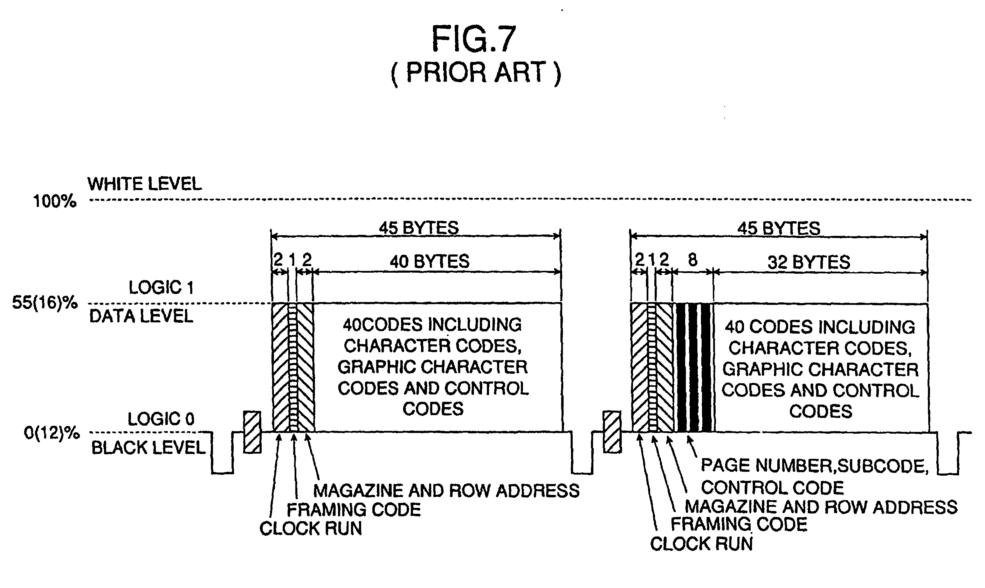

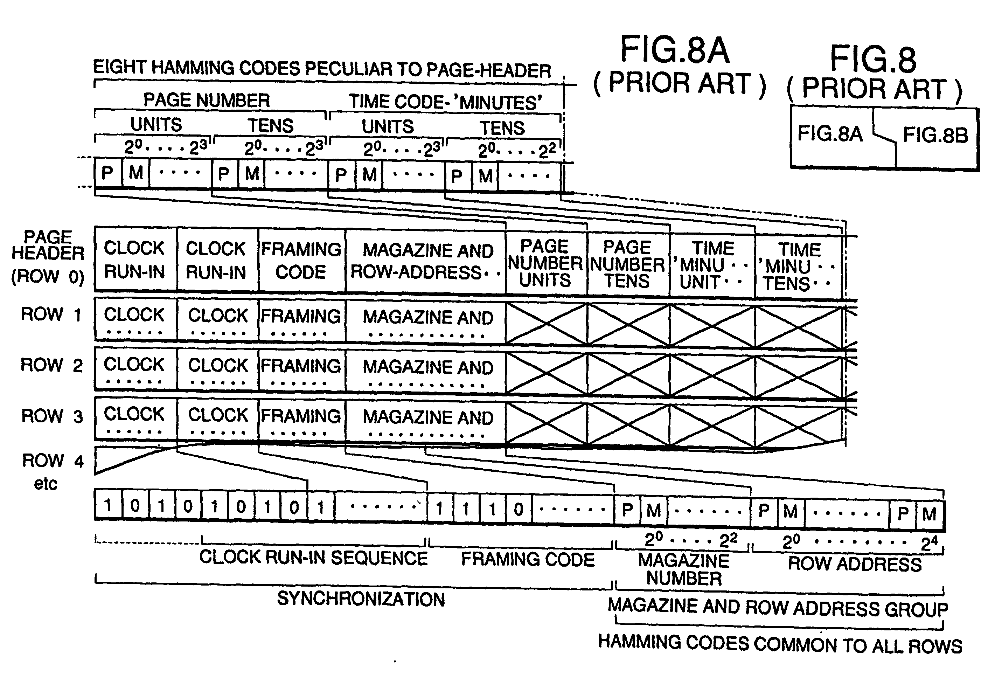

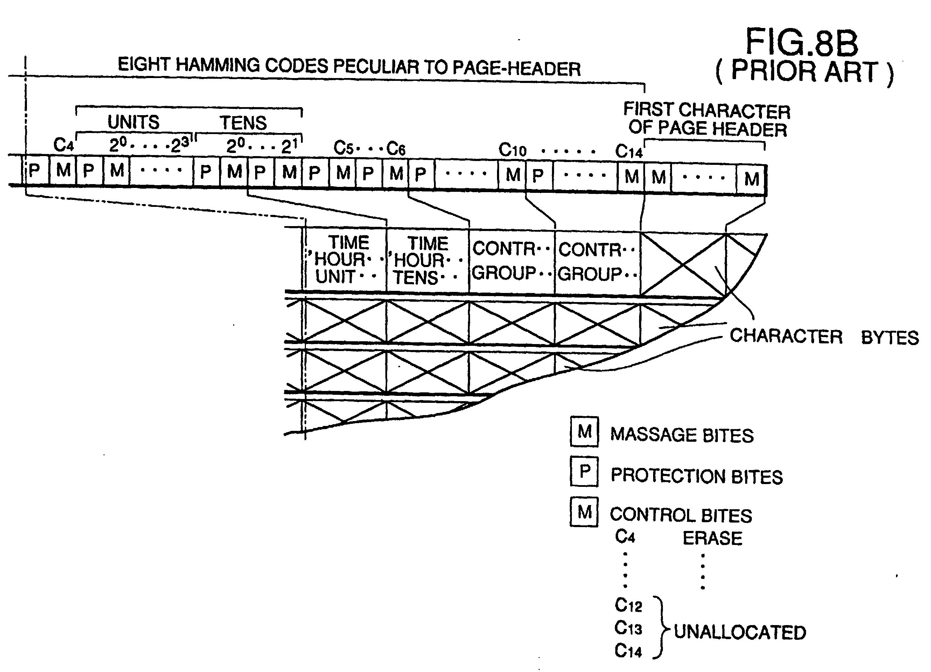

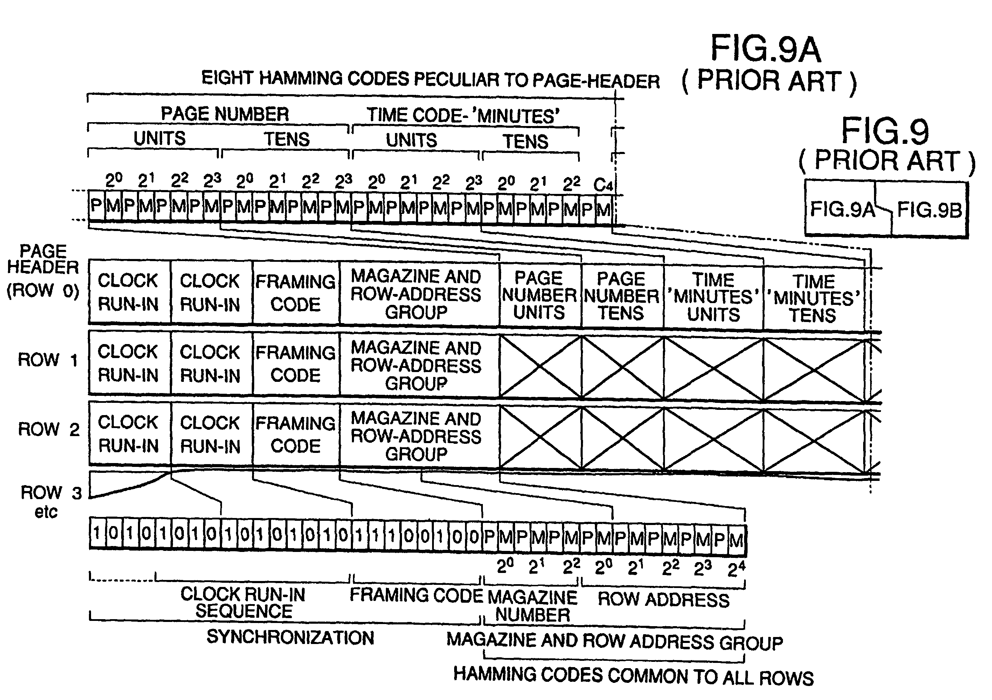

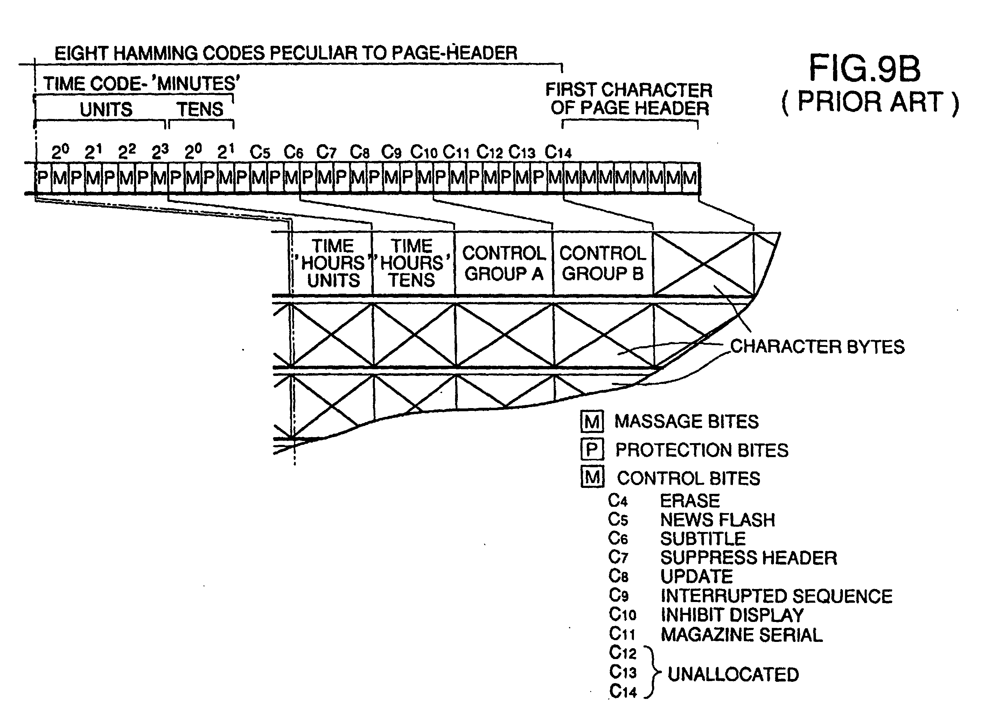

Figure 7 is illustrative of a data transmission channel and a data line consisting of data packets. The structure of the data line is shown in Figs. 8 (Figs. 8A, 8B) and Fig. 9 (Figs. 9A, 9B). Fig. 8 is a general view of the data line. Fig. 9 is enlarged fragments of Fig. 8.

The data line consists of 45 bytes: leading 2 bytes are a synchronizing clock (Clock run-in), 1 byte is a synchronizing byte (Framing Code) and 42 bytes are a data packet (transmission unit of a character signal superimposed upon one horizontal blanking period H). First two bytes of a data packet represent a magazine number (the hundreds digit of a page number) and a row address respectively. These 2 bytes are protected by a hamming code (8,4). In other 40 bytes, odd parity is set at the highest significant bit. Eight (8) bytes of a page header ROW0 are protected by a hamming code (8,4). These 8 bytes contain the units digit and tens digit of a page number, units, tens, hundreds and thousands digits of a subpage number and control bits C4 to C14. Remaining 32 bytes of the page header are allocated to characters and graphics to be presented in the first row.

ROW1 to ROW23 are called "text data" consisting of each 40 characters in a row. One (1) page consists of a page header and text data. ROW24 to ROW31 for extension of packets are used for transmission of auxiliary data.

In the teletext, the eight-bit coding system, which is used for data exchange in data communications and computer systems, is adopted as the basic coding system for coding information consisting of text and graphics to be transmitted. Standard alphabetic characters are expressed each by 1 byte (7 bit + Parity bit).

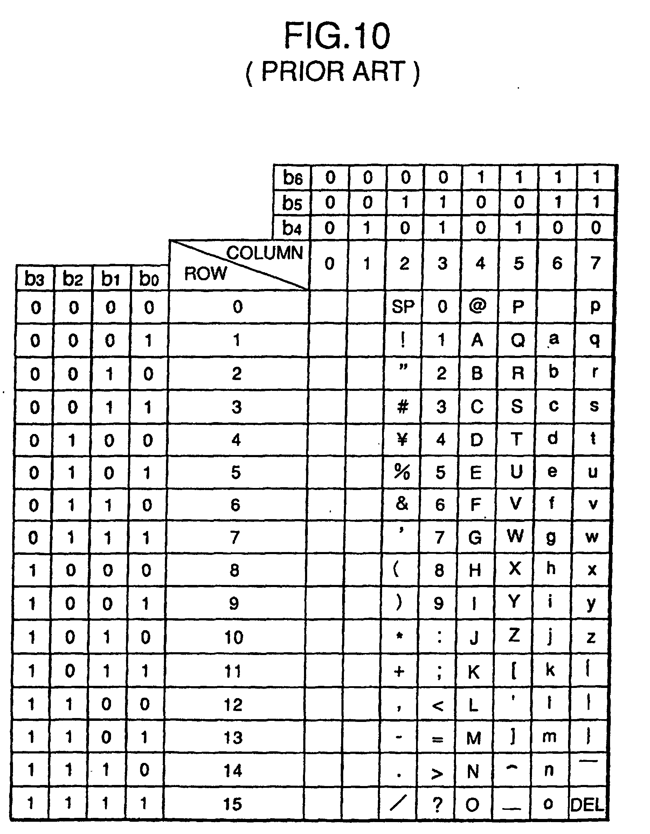

Figure 10 shows standard alphanumeric character set. Numbers 0 - 7 by 3 high-order bits (b6 - b4) represent column numbers and numbers 0 - 15 by 4 low-order bits (b3 - b0) represent row numbers. A combination of two bits represents (a column number)/(a row number). For example, 3/4 is coded into 0110100 (b6 - b0). One code location can be set by a combination of seven bits. Accordingly, 128 ($8 \times 16$) code positions can be expressed. Codes 0/0 - 0/15 and 1/0 - 1/15 are areas for control codes representing attributes, e.g., character color and size.

A Japanese KANJI character is expressed by 2-byte data, 1-byte data of which is shown in Fig. 2.

Figure 2 shows a code table of eight-bit codes. In an eight-bit code, numbers 0 - 15 described by 4 high order bits b8 - b5 represent column numbers and numbers 0 - 15 described by 4 low order bits b4 - b1 represent row numbers and a combination of these two numbers represents (a column number)/(a row number). For example, 03/4 is coded into 00110100 (b8 - b1). The eight-bit coding can express 256 ($16 \times 16$) positions of codes since one code location can be set by an 8-bit code. The code table divides a code area into 4 blocks - CO (00, 01 columns) and C1 (08, 09 columns) are areas for reading a control code, GL (02 - 07 columns) and GR(10-15 columns) are areas for reading a character code. 02/0 (SP), 07/15 (DEL), 10/0 and 15/15 are areas for particular codes. Both areas GL and GR can read each 94 characters. Namely, using the code table can call up any suitable set from a variety of code sets shown in Fig. 3, assuring effective transmission of coded data.

Control codes are used for transmitting control information such as a display format specifying color, sizes and layout of text and graphics to be displayed on a display screen.

Character sets comprise a set of Japanese KANJI characters, a set of alphanumeric characters, a set of Japanese KATAKANA characters, a set of Japanese HIRAGANA characters. The mosaic graphics coding method is similar to the character coding method but is featured by particular facilities to enhance the expression by superimposing and separating mosaic elements.

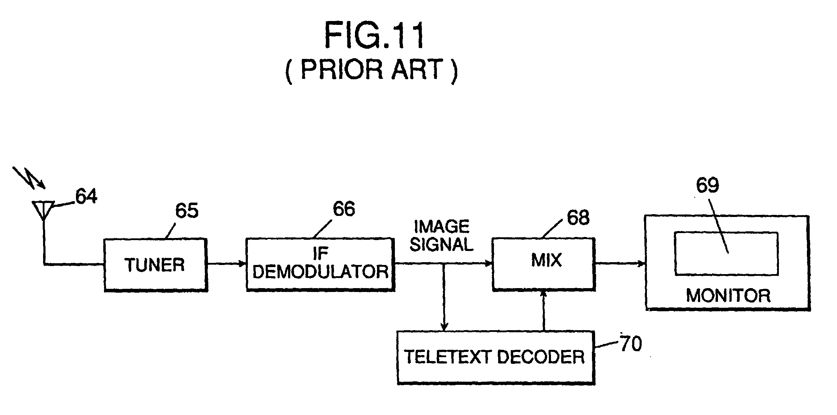

Figure 11 is a construction view of a conventional receiving device used in the above-described teletext system. The transmitting device is the same as that shown in Fig. 4A. In Fig. 11, numeral 70 designates a teletext decoder and others similar in function to those of Fig. 4B are given like reference numerals.

As shown in Fig. 4A, a TV broadcasting station mixes teletext page data on TV video signals by using a mixing device 61, modulates the signals by a demodulator 62 and sends it over the air through an antenna 63. As shown in Fig. 11, a receiving side receives by a tuner 65 the TV signals incoming through an antenna 64 and extracts therefrom teletext image signals by an IF demodulating circuit 66. The teletext data is decoded by the teletext decoder 70 and mixed with relevant image signal and sound signal by a mixer 68, then the teletext page is reproduced on a display screen of the monitor 69.

Referring Fig. 5, a conventional teletext receiving device is described as follows:

A video signal detected by a tuner (not shown) is inputted into an input control portion 81 which in turn extracts a teletext page data from the received video signal and performs error correction on the data by using *an* error correction circuit. The error corrected page data with a page number is stored as a unit page in a memory 85. When a user wants reproducing the recorded page data, he enters the page number by pressing keys on a keypad of the adapted television receiver set. The designated page number through an interface 86 is inputted into the CPU 82. The page data corresponding to the inputted page number is read from the memory 85 under the control of the CPU 82.

When the read-out page data consists of text and graphics, the data through a display control portion 84 is outputted in the form of image signals (R, G, B, Y). A character generator (CG) on a read-only memory (ROM) 83 stores character fonts for teletext information and is used for converting character information into pictorial signals. Namely, the character generator 83 is made on the read only memory in which sets of dot patterns of Japanese KANJI characters, alphanumeric characters, Japanese KATAKANA characters, Japanese HIRAGANA characters and mosaic graphics are written, and generates dot-pattern data of characters and graphics according to the decoded data to be displayed. As mentioned above, the teletext page transmitted from the television broadcasting station is displayed as it is in a given presentation mode.

Figure 6 is a flow chart of processing for decoding teletext page data in a conventional teletext decoding device.

The decoding steps (S) are as follows:

Step S1 first judges whether a received code is a character code or not.

If not, Step S2 performs processing with the control code (such as to specify a character size, display color, screen coordinates and other attributes).

Step S3 judges whether a page is completed or not. If not, the processing returns to Step S1.

When the received code is a character code (at Step S1), Step S4 processes and displays one character and then the operation proceeds to Step S3.

Referring now to the accompanying drawings, preferred embodiments of the present invention will be be described in detail.

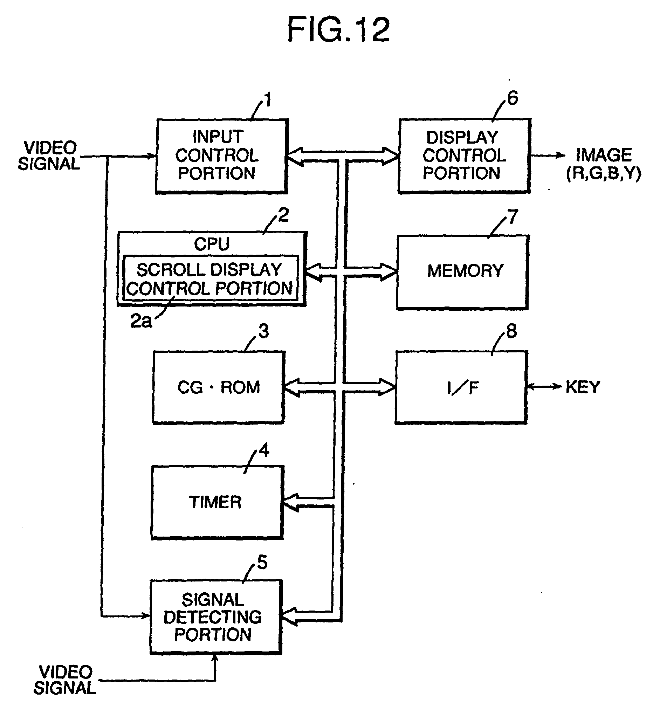

Figure 12 is a construction view for explaining a broadcast information decoding device embodying the present invention, which comprises an input control portion 1, a central processing unit (CPU) 2, a decoding control portion 2a, a character-generating read-only memory (CG-ROM) 3, a timer 4, a signal detecting portion 5, a display control portion 6, a memory 7 and an interface (I/F) 8.

A video signal detected by a tuner (not shown) is inputted into the input control portion 1 which in turn extracts a text-broadcast program data from the received video signal and performs error correction on the data by using an error correction circuit. The error corrected program data with the program number is stored as a unit program in the memory 7. When a user desires reproducing the recorded program data, he enters the program number by pressing keys on a keypad of the adapted television receiver set. The desired program number through the interface I/F 8 is inputted into the CPU 2. The program data corresponding to the inputted program number is read from the memory 7 under the control of the CPU 2.

When the read-out program data consists of text and graphics, it is outputted in the form of image signals (R, G, B, Y) through the display control portion 6. The character generating memory (CG-ROM) 3 holds therein character fonts which are used for converting character information into image signals. The timer 4 can generate an interrupt to display a desired program or change a current program by new one at preset time intervals.

Every time when a text-broadcast program is received, the timer generates an interrupt requesting the CPU 2 to display a text-broadcast program even if its content, for example, "news" changes only a few times a day. Such frequent updating can be avoided by changing the settings of the timer 4. The signal detecting portion 5 converts an image signal into a digital signal, generates an area for scrolling a text on a display screen, simultaneously detects average and peak values of image intensity levels in two areas on the display screen, compares the values, selectively superimposes the text image on the television image and transfers the data to the CPU 2. The CPU 2 decides a scroll-displaying area based upon the received data in such a manner that the text image may not overlap any character information indicated on the television image and may not be adversely affected by highly intensive television signal.

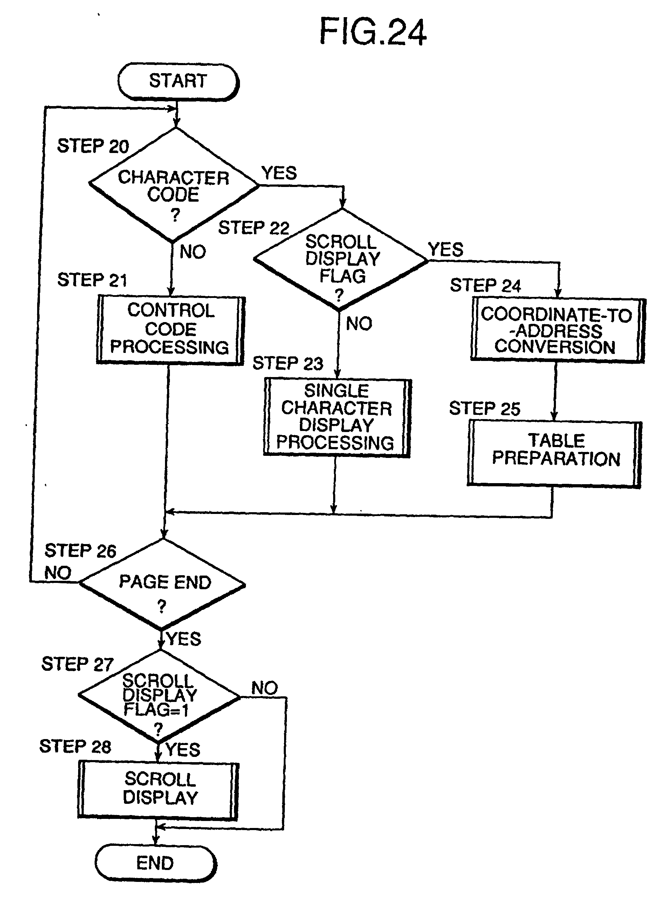

Text-broadcast program data superimposed on television video signal transmitted during the vertical blanking period is entered into the input control portion 1 which in turn extracts the program data from the received video signal and generates and transmits an interrupt signal to the CPU 2. The CPU 2 recognizes the receipt of the text-broadcast program by the interrupt and performs error correction on the data (BEST), decodes a complete set of the program data, recognizing the continuity of the data, and stores the data into a received program data storing portion of the memory 7. When a user selects the program, the CPU 2 reads the program data from the memory 7 and, then, performs the processing operation according to a processing flow chart of Fig. 24. Namely, the CPU 2 prepares a presentable image conversion table for one page and outputs characters one by one from the beginning of the table to display them in the scroll mode on the display screen. The decoding control portion 2a is used for preparing the presentable image conversion table and displaying the data in the display control portion 6 according to the prepared presentable image conversion table.

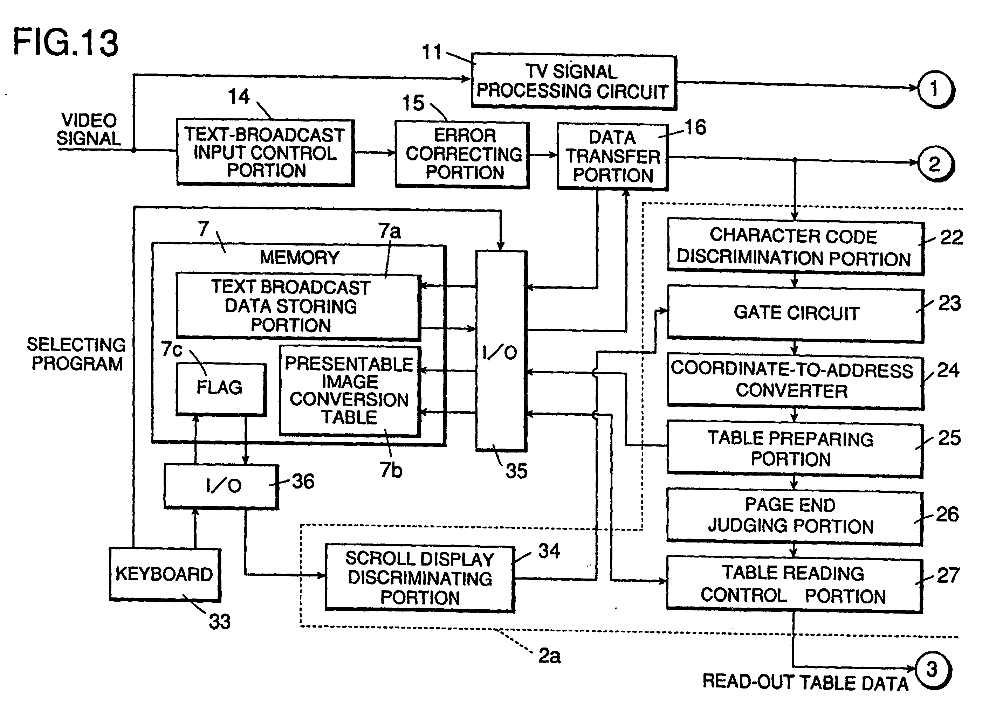

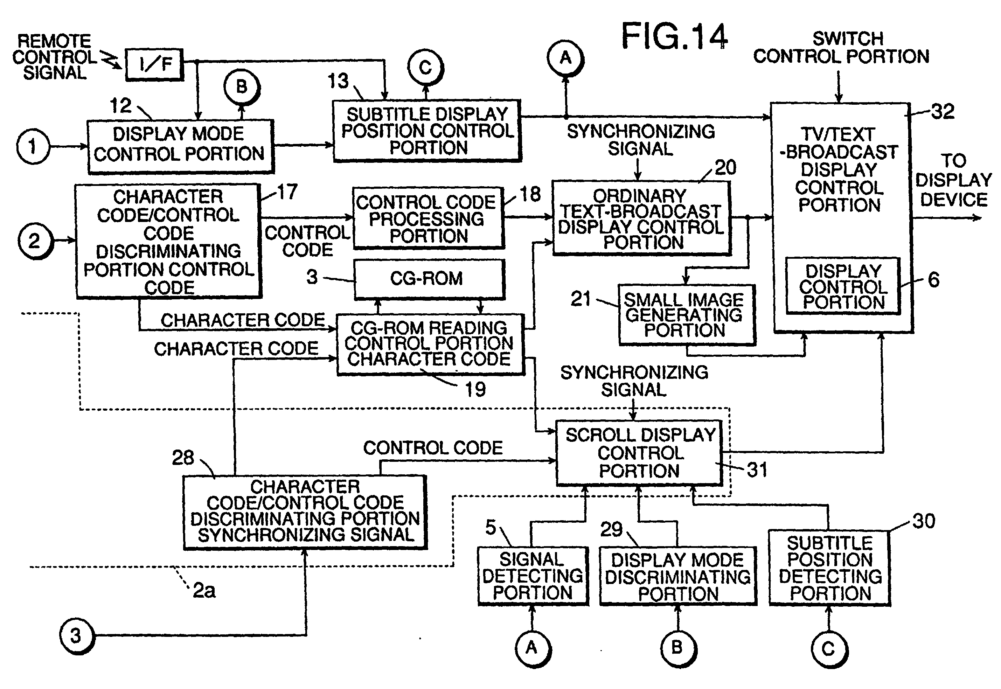

Figures 13 and 14 are block diagrams for showing functions, mainly, of the CPU 2 in this embodiment of the present invention, where is shown a text-broadcast data storing portion 7a, a presentable image conversion table 7b, a decoding flag 7c, a television signal processing circuit 11, a display mode control portion 12, a subtitle location control portion 13, a text-broadcast input control portion 14 (corresponding to the input control portion 1 of Fig. 12), an error correcting portion 15, data transfer portion 16, a character code/a control code discriminating portion 17, a control code processing portion 18, a CG-ROM (character-generating read-only memory) reading control portion 19, an ordinary text-broadcasting display control portion 20, a small image generating portion 21, a character code discriminating portion 22, a gate circuit 23, a coordinate-to-address converting portion 24, a table preparing portion 25, a page-end judgment portion 26, a table reading control portion 27, a character code/control code discriminating portion 28, a display mode discriminating portion 29, a subtitle position detecting portion 30, a scroll display control portion 31, a text-broadcast display control portion 32, a keyboard 33, a scroll display discriminating portion 34 and input-output control portions 35, 36. Other components which are similar in function to those shown in Fig. 12 are given same reference numbers.

The decoding control portion 2a of Fig. 12 consists of a character code discriminating portion 22, a gate circuit 23, a coordinate-to-address converting portion 24, a table preparing portion 25, a page-end judgment portion 26, a table reading control portion 27, a character code/control code discriminating portion 28, a scroll display control portion 31 and a scroll display discriminating portion 34.

In the above-mentioned construction of the embodiment, a section for processing ordinary television signals consists of a television signal processing circuit 11, a display mode control portion 11 and a subtitle location control portion 13. A section for processing ordinary text-broadcast signals consists of a text-broadcast input-control portion 14, an error correction portion 15, data transfer portion 16, a character code-control code discriminating portion 17, a control code processing portion 18, a CG-ROM reading control portion 19, an ordinary text-broadcast display control portion 20, a memory 7, a television/text broadcast display control portion 32, a keyboard 33, an input-output control portion 35 and a character-generating read-only memory 7.

A text-broadcast signal processing section which directly relates to the present embodiment consists of a character code discriminating portion 22, a gate circuit 23, a coordinate-to-address converting portion 24, a table preparing portion 25, a page-end judging portion 26, a table reading control portion 27, a character code/control code discriminating portion 28, a display mode discriminating portion 29, a subtitle position detecting portion 30, a scroll display control portion 31, a text-broadcast display control portion 32, a keyboard 33, a scroll display discriminating portion 34, an input-output control portion 36, a signal detecting portion 5 and small frame generating portion 21.

Referring to Figs. 13 and 14, the above-mentioned components will be described as follows:

The display mode control portion 12 controls different aspect screen modes according to a remote control signal input. The subtitle display position control portion 13 can change a subtitle location according to a remote control input. The text-broadcast input control portion 14 extracts text-broadcast program data from an input video signal. The error correction portion 15 performs error correction of the text-broadcast data. The data transfer portion 16 performs writing and reading the text-broadcast data per program into and from the memory 7. The character code/control code discriminating portion 17 recognizes classification (character and control) of each code in a code set of the text-broadcast data. The control code processing portion 18 performs processing operations for specifying character sizes, colors and coordinates and setting attributes according to respective control codes.

The CG-ROM reading control portion 19 receives a character code and reads a designated character from the CG-ROM 3. The ordinary text-broadcast display control portion 20 displays an ordinary text-broadcast program. The small image generating portion 21 generates a small image for displaying an ordinary text-broadcast image, which is compressed to 1/2 ordinary screen-image size. The character code discriminating portion 22 discriminates whether a received code is character code or not. The gate circuit 23 allows a signal when a display mode is scroll display mode. The coordinate-to-address converting portion 24 determines an address of a presentable image conversion table 7b from the coordinates of a character display location, which is contained in a control code. The table preparing portion 25 prepares a presentable image conversion table 7b according to the determined address.

The page-end judgment portion 26 recognizes that a page (i.e., a screenful) is completed. The table reading control portion 27 sequentially reads data from the table, starting from the least address therein. The character code/control code discriminating portion 28 classifies the read-out table data into character codes and control codes. The display mode discriminating portion 29 recognizes a display mode according to a control signal from the display control portion 12. The subtitle position detecting portion 30 detects a subtitle location according to a control signal from the subtitle control portion 13. The scroll display control portion 31 determines a subtitle position on the basis of the detection results received from the signal detecting portion 5, the display mode discriminating portion 29 and the subtitle position detecting portion 30.

The television/text-broadcast display control portion 32 receives a switch control signal, changes over the display mode to a TV video image or ordinary text-broadcast image or small-frame ordinary text-broadcast image or scroll-display image and separately outputs the image onto a screen of a display device (not shown) or superimposes the text-broadcast image on an ordinary television image displayed thereon. Namely, an image on the display screen is selected according to the switch control signal. But, a small insert, for example, may be shown not continuously but a few seconds before and after scroll displaying.

The television/text-broadcast display control portion 32 includes the display control portion 6 (for text-broadcast) shown in Fig. 12. The keyboard 33 is used for selecting a desired program and designating a scroll display mode in which a scroll flag 7c is set on the memory 7. The scroll display discriminating portion 34 checks whether the scroll flag 7c is set on the memory 7. The scroll flag 7c is set in an area of the ROM whereto the CPU 2 may access at a high speed.

When an ordinary television program is received, a TV signal received is first processed through the television signal processing circuit 11, the display mode control portion 12 and the subtitle position control portion 13. In this case, the televison/text-broadcast display control portion selects the television program receiving mode and transmits the processed data to the display device. In case of viewing an ordinary television program on a wide-aspect screen of a TV receiver set, a user is required only to control the display mode control portion through a remote control to change over the screen image to a wide screen image. If, at this time, a subtitle of a telefilm, for example, is displaced to undesirable position, the user controls the remote control unit to make the subtitle location control portion 13 adjust the location of the subtitle.

In case of reproducing a text-broadcast at a television receiver set, the text-broadcast input control portion 14 receives all text-broadcast signals superimposed on the specified positions in a television video signal, the error correcting portion 15 performs error correction of the extracted text-broadcast signals and the data transfer portion 16 transfers the error-corrected signals through the memory input-output control portion 35 into the text-broadcast data storing portion 7a of the memory 7. The stored text-broadcast program is read out from the text-broadcast data storing portion 7a when the users requests reproduction of the program designated by its number through the keyboard 33 of a remote control unit.

The character code/control code discriminating portion 17 classifies the read-out text-broadcast data into control codes and character codes. The control codes are processed by the control code processing portion 18 and usually used for controlling the text-broadcast receiving through the text-broadcast control portion 20. For example, the text-broadcast data transmitted in a full-screen still-display mode is controlled to be displayed in the full-screen still-display mode or the text-broadcast data transmitted in a scroll display mode is controlled to be displayed in the scroll display mode.

The character codes are transferred to the CG-ROM (character-generating read-only-memory) control portion 19 which may output dot patterns, each representing actual characters corresponding to the received character codes. These dot-pattern data sets are usually sent to the text-broadcast display control portion 20 wherein they are processed to form image signals to be displayed in the full-screen still-display mode or image signals to be displayed in the scroll display mode on the display screen depending upon the control code. The image signals are transferred to the television/text-broadcast display control portion 32 whereby they are displayed in place of an ordinary television picture or superimposed on the picture depending upon a selector control signal from the remote control unit (not shown). The above-mentioned operations are intended to display an ordinary television program and text-broadcast program in the modes in which they were transmitted from a broadcast station.

The operation of the embodiment of the present invention when an image transmitted in the full-screen still-display mode is displayed in scroll-display mode is as follows:

An image signal inputted into the text-broadcast input portion 14 is corrected for transmission error by the error correcting portion 15 and then transferred to the data transfer portion 16 which in turn writes the received text-broadcast data of a unit program into the memory 7 and reads-out therefrom later for display. The character code discriminating portion 22 checks the received code whether it is character code or not. The text-broadcast data to be displayed in the scroll display mode passes the gate circuit 23.

For instance, when a user designates the scroll display mode through the keyboard 33, a scroll display flag 7c is set on the memory 7 and recognized by the scroll display discriminating portion 34 which generates a discriminating signal to drive the gate circuit 23. When the scroll display discriminating portion 34 recognized the scroll display flag 7c, the coordinate-to-address converting portion 24 calculates address of the presentable image conversion table 7b according to the received character data.

On the basis of the address determined by the coordinate-to-address converting portion 24, the table preparing portion 25 prepares a presentable image conversion table 7b which is then entered into the memory 7 through the input-output (I/O) control portion 35. The page-end judgment portion 26 recognizes that one page (i.e., a screenful) is prepared. The table reading control portion 27 through the I/O control portion 35 sequentially reads data from the table stored in the memory 7, starting from the least address therein. The character code/control code discriminating portion 28 classifies the read-out table data into character codes and control codes. The character codes are transferred to the CG-ROM reading control portion 19 wherein the aforementioned operation for receiving the ordinary text-broadcast program is performed. The control codes are transferred to the scroll display control portion (adaptive reproduction display control portion) 31.

On the other hand, the display mode discriminating portion 29 recognizes a display mode according the control signal from the display control portion 12. The subtitle position detecting portion 30 detects a subtitle location according to a control signal from the subtitle display control portion 13. The signal detecting portion 5 detects an optimal location for scroll-display of the page.

The scroll display control portion 31 determines a scroll displaying area on the basis of the detection results received from the signal detecting portion 5, display-mode discriminating portion 29 and subtitle-location detecting

**15**

portion 30 and then transfers the determined location data to the television/text-broadcast display control portion 32 which generates an image signal for scroll display screen. The television/text-broadcast display control portion 32 also generates an image signal for a small display which is prepared by the small image preparing portion 21 to be inserted in the display.

As described above, a video signal inputted into the text-broadcast input control portion 14 is transferred to the transfer portion 16 of the CPU 2, whereby the program data is extracted from the video signal and transferred into the memory 7. The program data to be reproduced is read from the memory 7 and transferred to the data transfer portion of the CPU 2. The character code/control code discriminating portion 17 examines whether the received code of the program data is character code or not. If the code is judged not to be a character code, it is transferred to the control code processing portion 18 which, according to the received control information, determines size and color of each character, specifies coordinates of character to be displayed on the display screen and presets the attributes of each character.

When the code is judged by the character code/control code discriminating portion 17 to be character code, it is transferred to the CG-ROM reading control portion 19 whereby dot-pattern data representing an actual character corresponding to the character code received is read out and sent usually to the text-broadcast display control portion 20. The scroll display discriminating portion 34 examines whether the scroll display flag is 1 (i.e., the flag is set ON). When the scroll display flag 7c is not 1 (i.e., the flag is set OFF), the processing for displaying one character is conducted. When the scroll display flag 7c is 1, the coordinate-to-address converting portion 24 converts coordinates of the transferred character into address of the presentable image conversion table 7b. The coordinate-to-address conversion processing is as follows:

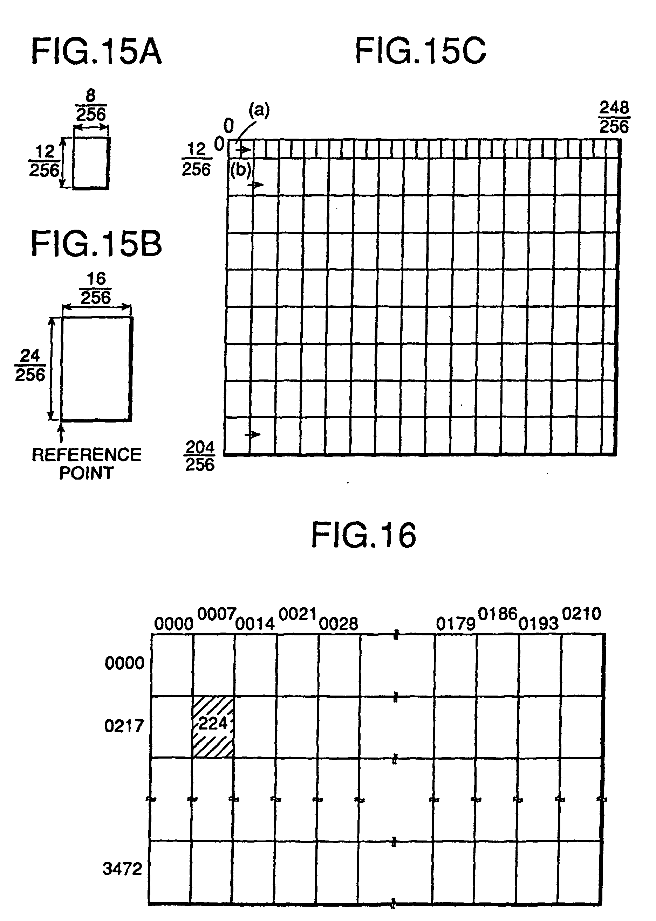

An address of a presentable image conversion table 7b is calculated from a specified presentation coordinate (reference points shown Figs. 15C). Fig.16 shows a memory map of a presentable image conversion table. The number of presentable pixels is 248 pixels in a (vertical) column by 204 pixels in a (horizontal) row. Fig. 15A shows a block of 12 dots in a column by 8 dots in a row. Fig. 15B illustrates a map of $24 \times 16$ dots (column $\times$ row) corresponding to 4 blocks shown in Fig. 15A. Fig. 15C shows a map consisting of 527 blocks including 31 blocks per row and 17 blocks per column. Similarly, Fig. 16 shows addresses corresponding to the respective coordinates shown in Fig. 15C.

An example of determination of addresses is described as follows:

The numbers of pixels in a column and in a row are divided by 12 dots and 8 dots (a minimal unit of a character size) respectively and respective rest values are rounded.

| Column: Rest | 0 = Quotient | Row: Rest | 0 = Quotient |
|---|---|---|---|
| | 4 = Quotient | | 4 = Quotient |
| | 8 = Quotient + 1 | | |

On the assumption that the number of bytes per block (character) is 7 and the number of horizontal blocks is 31, and, for example, X=12 and Y=16, 12 is divided by 8 to get a quotient 1 with a rest of 4 and 16 is divided by 12 to get a quotient 1 with a rest of 4. Consequently, the table address is determined as follows:

$$\text{Table Address} = (12/8) \times 7 + (16/12) \times 31 \times 7 =$$

$$= 1 \times 7 + 1 \times 217 = 224.$$

According to the thus determined address, a presentable image conversion table 7b is prepared by the table preparing portion 25 and stored in the memory 7.

Upon completion of the above-mentioned operation, the page-end judging portion 26 judges whether a page is completed or not. If not, the above-mentioned operation cycle is repeated beginning with examination of subsequent code of the program by the character code/control code discriminating portion 17.

The completion of the table is recognized by the character code/control code discriminating portion 17, then the scroll display discriminating portion 34 judges whether the scroll display flag is set or not. When the flag is set (at 1), the scroll display control portion 31 starts scroll displaying according to the presentable image conversion table 7b prepared by the table preparing portion 25. Namely, the character information data through the memory 7 is converted into an image signal by the CG-ROM portion 3 storing character font corresponding to the character information. The image signal is then outputted through the television/text-broadcast display control portion 32, On the other hand, the display mode discriminating portion 29 examines what display mode (scroll display mode or full-screen still-display mode) is required. The respective display mode is obtained through the scroll display control portion 31.

In case of superimposing a scrollable text information on a television picture having a subtitle movable by a subtitle moving facility, the subtitle location is detected by the subtitle position detecting portion 30 and the scrolling display is located at an optimal area by scroll area control portion 31, whereat no interference may happen between the subtitle and scrollable text information on the display screen.

Furthermore, the signal detecting portion 5 detects a peak and average values of brightness on a specified area of a television image and the scrolling area control portion 31 moves a scroll display to an area where the scrollable character image may be easily read and visible at a relatively low surrounding brightness without impairing the visibility of the television picture.

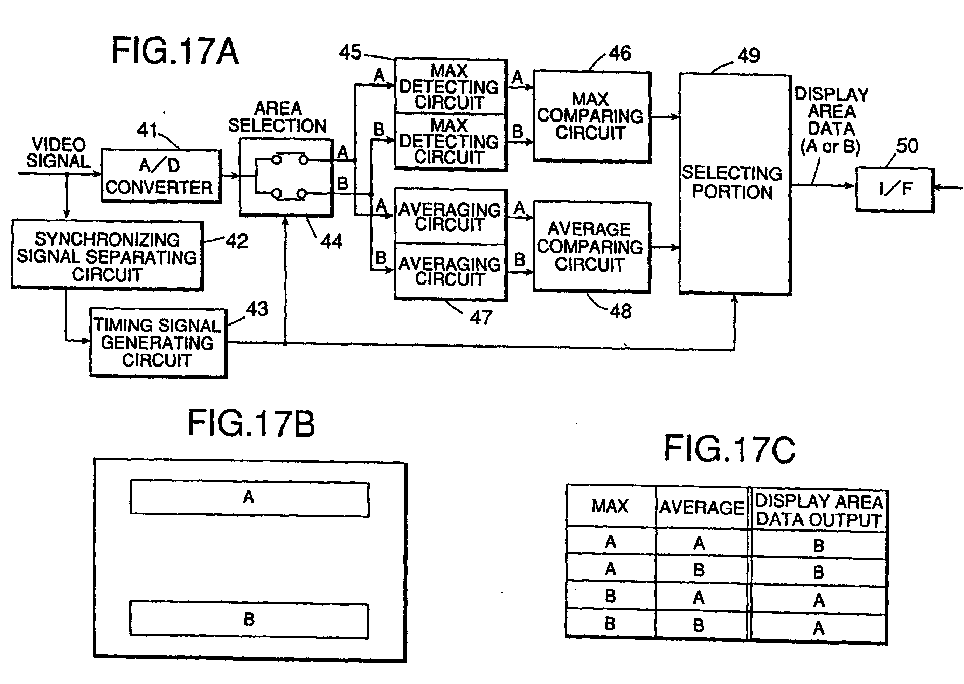

Figures 17A to 17C are illustrative of the signal detecting portion 5 shown in Figs. 12 and 14. In Figs. 17A to 17C, there is shown an A/D converter 41, a synchronizing signal separating circuit 42, a timing signal generating circuit 43, an area selector switch 44, a peak level (MAX) detecting circuit 45, a MAX comparator circuit 46, an averaging (average level detecting) circuit 47, an average comparator circuit 48, a selecting portion 49 and an interface (I/F) 50.

The A/D converter 41 converts an input image signal into a digital signal. The synchronizing signal separating circuit 42 extracts a synchronizing signal from an input image signal. The timing signal generating circuit 43 generates timing signals representing two scroll areas A and B, respectively, as shown in Fig. 17A according to the synchronizing signal. The area selector switch 44 selectively outputs image signals in two display areas according to the corresponding timing signals.

The MAX detecting circuit 45 detects peak levels of images of two areas A and B respectively. The MAX comparing circuit 46 compares maximal level values of two area images. The averaging circuit 47 detects average values of image level of two areas respectively. The average comparator circuit 48 compares the average level values of two area images. According to an exemplified logic table of Fig. 17C, the selector circuit 49 selects one of two display areas, where a superimposable image may be more visible and the signal brightness level is lower than the other.

The image signal is converted into a digital signal by the A/D converter 41. Two scroll display areas on a screen image is generated by the timing circuit 43 according to a synchronizing signal and, at the same time, peak levels and average levels of images in two scroll display areas are detected by the MAX detecting circuit 45 and the averaging circuit 47 respectively and two peak values and two average values are compared by the comparing circuits 46 and 47 respectively. The selecting portion 49, on the basis of the comparison results, selects one of two areas, wherein the superimposable scroll display is more visible and the brightness (image level) of the screen image is lower than the other area. The selected area data is transferred to the CPU 2.

In the present embodiment, two display areas A (at the top) and B (at the bottom) of the screen image shown in Fig.17B are generated and compared with each other for selection of an area having less brightness and assuring higher visibility of a superimposable display. This facility, however, is not limited to the above-mentioned example but two areas to be examined for selection may be set at any other location, for example, the left side and the right side of the screen image, and, furthermore, three or more areas may be set for selection of optimal one among them.

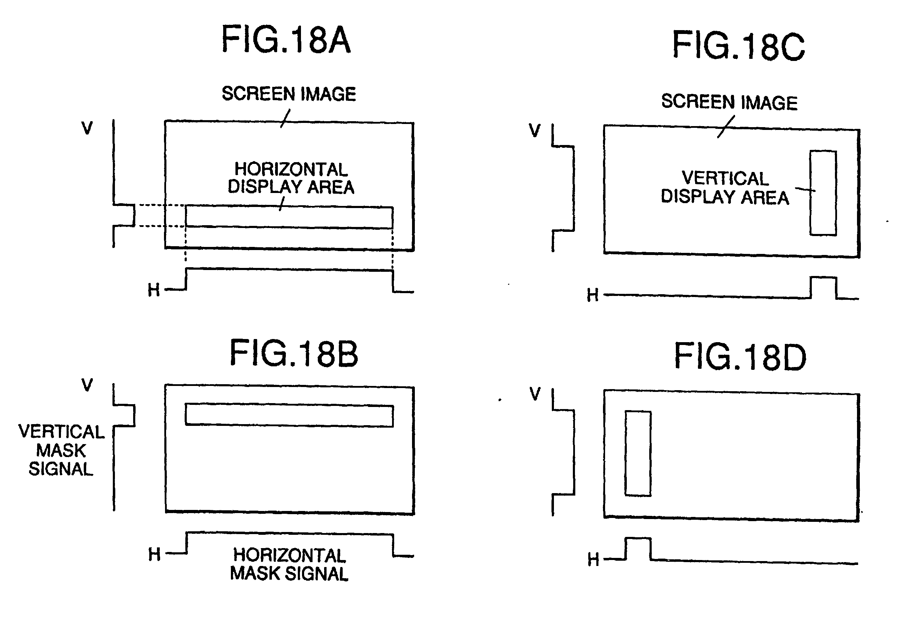

The CPU 2 finally decides the scroll display area, for example, as shown in Fig. 18A or 18B or 18C or 18D on the basis of the data received from the selecting portion 49. Fig. 18A shows a horizontal display area (a window for transverse scroll mode) set below on the screen image, whose width in the horizontal direction is limited by a horizontal mask signal (H) and whose width in the vertical direction is limited by a vertical mask signal (V). Fig. 18B shows a horizontal display area above on the screen image, wherein a sequence of characters is scrolled from right to left within the area. Fig. 18C shows a vertical display area (a window for longitudinal scroll mode) set right on the screen image and Fig. 18D shows a vertical display area set left on the screen image. Information is displayed within the vertical display area, being scrolled upward. The above-mentioned facility can prevent the scroll display from overlapping any character image (e.g., a subtitle) of a television picture and can improve the visibility of the scroll display by selecting an area of screen image having a relatively low brightness.

One of the advantages of the decoding device according to the present invention against the conventional devices is the provision of the signal detecting portion 5 that is a circuit for searching an optimal display area wherein the scrollable display proposed by the present invention is easily viewed by a user. A scrollable text image displayed as superimposed on an ordinary television picture may become unreadable by affection of the television picture elements. In this case, the signal detecting portion 5 is effective to recognize the content of the television picture and search an area wherein the information is easy to read. Conventional devices which are not provided with the signal detecting circuit proposed by the present invention can not replace the scroll display area or requests a user to replace the area to a suitable position by manually adjusting the display device.

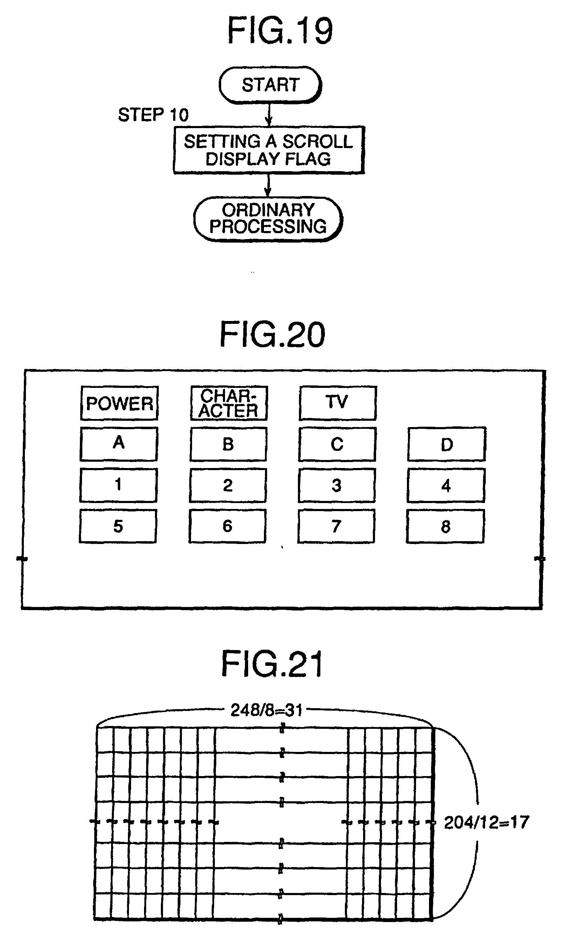

Figure 19 is a flow chart for decoding a text-broadcast program by a text-broadcast decoding device according to the present invention. Figure 20 is depicts an example of a remote control transmitter according to the present invention. In Fig. 20, reference character A designates a trigger key for selecting a mode of the present invention, characters B, C and D designate screen-mode selecting keys and numerals 1 to 8 designate channel selecting keys. When a user presses the key A, a code A is entered into the interface 8. The CPU 2 reads code A and begins decoding operation according the flow chart of Fig. 19. The CPU 2 sets a scroll display flag on the memory 7 at Step S10 and returns to the ordinary processing mode. A decoding protocol is modified by the CPU 2 by the flag. Namely, when scroll display flag 7c is set, the CPU performs coordinate-to-address conversion and prepares a presentable image conversion table 7c. If the scroll display flag is not set, the CPU 2 performs ordinary "single-character display processing" in the same way as the aforementioned conventional display processing.

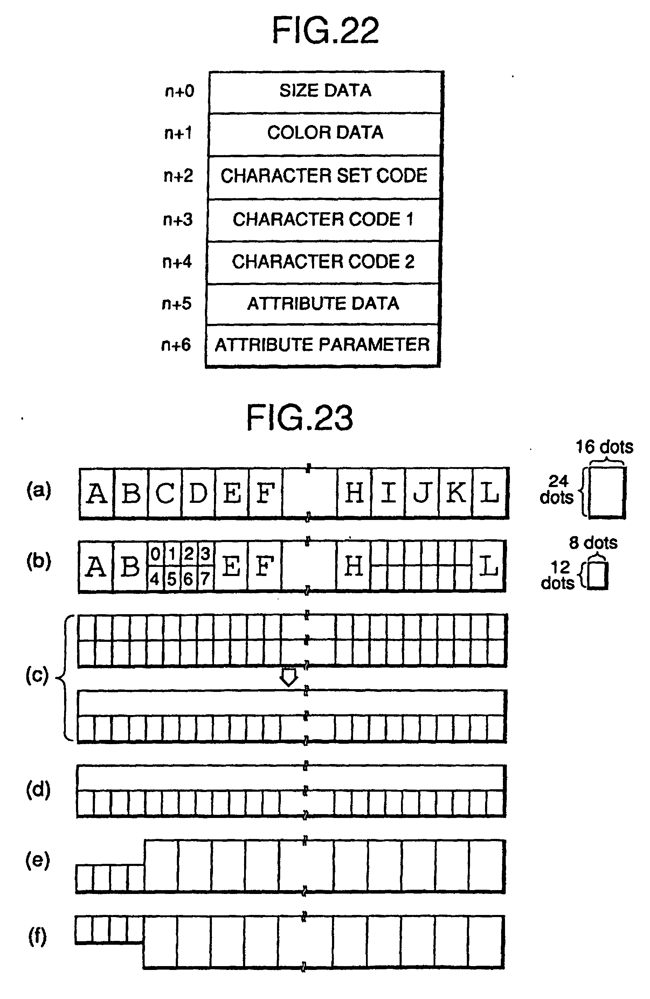

Figure 21 is illustrative of a display area for text-broadcast, which corresponds to the display area shown in Fig. 15C. Figure 22 is illustrative of a presentable image conversion table.

As described before with reference to Fig. 15C, the number of presentable pixels is 204 dots in a (vertical) column by 248 dots in a (horizontal) row. In the embodiment of the present invention, the display area is divided into 527 blocks each having 8 dots in a row and 12 dots in a column. Each block has a respective table. The presentable image conversion table shown in Fig. 22 is a table in which character data is written in the following manner:

The coordinates of a character data contained in a control code transmitted from a TV broadcasting station is first converted into a table address and, then, character data such as a character size, color, code and attribution (e.g., underline and other ornaments) are written into the addressed table area. in the text-broadcast, the minimum character size is defined as 8 by 12 dots and the minimum character display coordinates is defined as 4 by 4 dots. A row of characters is formed in such a manner that a reference character is first determined and other characters are arranged in a row relative to the reference character therein.

As described above, the number of presentable pixels is 248 dots in a row × 204 dots in a column. When a display area is divided by a unit block of 8 × 12 dots, 31 blocks (248/8=31) in the horizontal direction and 17 blocks (204/12=17) in the vertical direction are obtained and a total number of blocks in an image screen is 527 (31 × 17= 527). Each block has a presentable image conversion table shown in Fig. 22.

The presentable image conversion table of Fig. 22 consists of seven elements - size data, color data, code of character set, character code 1, character code 2, attribute data and attribute parameters. In the element "size data", there is written a code indicating a character size, e.g., "vertically twice enlarged character" code or "horizontally twice enlarged character" code. In the element "color data", there is written color dataof a character or graphics, which is a 1-byte record consisting of higher-order 4 bits describing a foreground image color and lower-order 4 bits describing a background color, each selectable from 16 colors.

In the element "character-set code", there is written a previously defined code specifying a character-set selected from following character sets: Japanese KANJI character set (2 byte code), alphanumeric set (1 byte code), Japanese KATAKANA character set (1 byte code), Japanese HIRAGANA character set (1 byte code), mosaic set (1 byte code), external character set (1 byte or 2 byte code). The elements "character 1" and "character 2" contain each one record of a character code having a length specified by each character-set code.

For instance, when the Japanese KANJI character set is selected as "character set", a 2-byte character code (the first 1 byte is segment data and the second 1 byte data is dot data) is written. When the Japanese HIRAGANA character set is selected, a 1-byte character code is written. The attribute data is used when a character is ornamentally processed, for example, by putting an underline. The attribute parameter is a parameter relating to the attribute data. The size data, color data, character-set code, attribute data and attribute parameters are control codes.

Referring to Fig. 16, a presentable image conversion table consists of seven elements and, therefore, there are addresses corresponding to 31 blocks "0000", "0007"..."0210" in the horizontal direction and addresses corresponding to 17 blocks "0000", "0217" (31 blocks × 7) ...."3472" in the vertical direction.

Accordingly, the minimum character size of 8 × 12 dots may be a reliable standard character size. Therefore, at the stage of expressing any character, address of a block table is calculated from its coordinates. The coordinate values are rounded along the block of 8 × 12 dots and then a character size, color code, character-set code (e.g., Japanese KANJI characters, KATAKANA characters, HIRAGANA characters, alphanumeric characters, external characters), a character code, attribute (e.g., enclosure, underline, flashing) are entered into the table. There are 16 display colors half of which may vary and have two levels (full and half) of brightness relative to RGB. When an image is superimposed on a television picture, its color brightness level must be turned from the half-brightness to full-brightness since the half-brightness color may be dark and indistinct in the television picture.

When tables for one page is prepared, information is read out for display from each table, beginning at the beginning thereof. In the display processing, a scroll-display area of 24 dots in height is produced for a reference character of 24 dots in height. If a reference character is of 12 dots in height, two rows of characters may be displayed at a time within the area or a space (blank) is given to upper half (12-dots) of the area and a single row of characters is displayed in the lower half (12 dots) of the area. This judgment is made according to decisions predetermined respectively for assumable images of Fig. 23(a) to (f). For example, in the case of Fig. 23(c), the decision is made for single-line display.

Namely, in an ordinary decoding process, a presentable image conversion table is prepared instead of displaying characters. The presentable image conversion table is a table that stores character information within a block having 12 dots in a column and 8 dots in a row, which is a unit division of a display area (of 204 dots in a column × 248 dots in a row) for displaying a text-broadcast information. A block wherein an operating reference point of a character or graphic character exists stores the character or graphic character size, color, character set code (e.g., Japanese KANJI characters, KATAKANA characters, HIRAGANA characters, alphanumeric characters and external characters), character code, attribute (e.g., enclosure, underline and flashing} and attribute parameters. A presentable image conversion table for all data units within a page is prepared. Upon completion of the presentable image conversion table, characters are decoded in the order of ascending order of addresses (i.e., first from the least address) from the table and displayed one by one in the scroll mode.

Character information is written only in area blocks each containing a character. Other blocks containing no character information (space or blank blocks) cause blank periods during display of text information in the scroll mode. Accordingly, a soft counter is provided, which operates with each vacant block (i.e., block table wherein no information is contained) and may skip the vacant block when it counts the preset threshold value.

Figure 24 is a flow chart of processing for decoding a text-broadcast information by a decoding device according to the present invention. The decoding process is executed by a central processing unit (CPU). As previously described with reference to Figs. 13 and 14, a received code is checked whether it is a character code or not (Step S20). If not, the control code processing is made for specifying a character size, color, coordinates and other attributes) (Step S21) and the operation proceeds to Step S26.

When the received code is recognized by Step S20 to be a character code, Step S22 examines whether the scroll display flag is set or not. If not, Step S23 performs displaying the character and the operation proceeds to Step S26. While the flag is set, an address of an added table is calculated by Step S24 from the currently specified coordinates by the method described with reference to Figs. 15C and 16. The character size, character code and other attributes are written into the addressed table and then the operation proceeds to Step S26.

Step S26 examines whether a page is decoded to the end. If not, the operation returns to Step S20. When the page is completely decoded, Step S27 examines whether the scroll display flag is set. If not, the operation is finished. While the flag is set, Step S28 starts the scroll display according to the presentable image conversion table prepared in decoding process.

The operation of the text-broadcast decoding device according to the present invention is performed according to a software loaded in the CPU 2.

Referring to Fig. 12, the operation is described below:

The CPU 2 reads page data by 1 byte at a time from a memory 7 wherein the text-broadcast data is stored and judges the data is a character code or a control code. When it is a character code, the CPU 2 recognizes that the display is conducted in the scroll mode, and then calculates an address of a presentable image conversion table 7b from the current coordinate values and enters the character information into the addressed table.

The presentable image conversion table is an area of the memory 7, which is previously assigned to a conversion table. After decoding a page data (preparing a table), the character information is read from a least address within the table in the memory 7 in case of displaying a text-broadcast in the scroll mode, and font data is read from the character generating read-only memory (CG-ROM) 3 for the character code and transferred into the display control portion 6 for scrollably displaying the information.

During the decoding operation, pattern data units of graphics, mosaics and added sound data are not processed (cancellation of data units). When displaying, half-tone is set and a string of characters is scrolled from right to left on a display screen in case of horizontal scroll mode or from bottom to top on the display screen in case of vertical scroll mode. Figs. 18A to 18D show examples of scroll-mode text display. This enables a user to read a text-broadcast information while enjoying television program on the display screen.

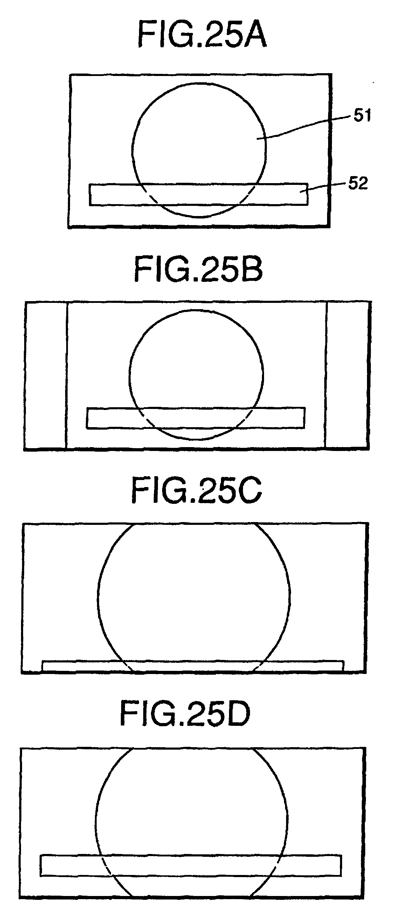

Figures 25A to 25D illustrate examples of images displayed in different modes on the screen of a wide-aspect monitor. Fig. 25A shows an ordinary screen-mode image (aspect ratio of 4:3), Fig. 25B shows a screen image in mode A, Fig. 25C shows a screen image in mode B (aspect ratio of 16:9) and Fig. 25D shows another screen image in mode B. Numeral 51 designates an ordinary television picture image and numeral 52 designates a display area for text-broadcast data according to the present invention.

As is apparent from Figs. 25A to 25D, the different mode screen images have different screen sizes. This means that an ordinary scrolling display may disappear out of screen, for example, as shown in Fig. 25C. In case when a subtitle is replaced on the television picture by using a subtitle replacing function, the subtitle may overlap an area for scrollably displaying text-broadcast information. Accordingly, the CPU 2 reads current screen mode and current state of the subtitle replacing function from the interface 8 and selects an optimal location of the scroll-display area on the display screen. In Fig. 20, there is shown a remote control transmitter having screen mode selecting keys B, C and D.

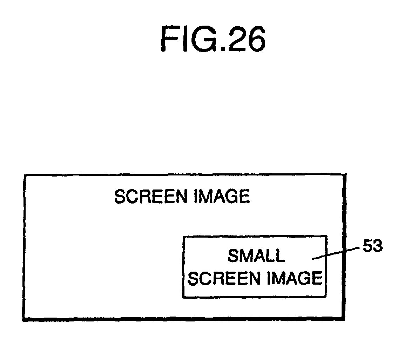

Figure 26 shows an example of generating a small insert by reducing a full-screen still page by a factor of 2 in both width and height. The scrolling display function according to the present invention may change the structure of a broadcast transmitted from a TV-broadcasting station. This may cause a problem of infringement of copyright. To avoid this and to check the page structure, a small insert is displayed a few seconds before or after displaying the page in scroll mode.

A text-broadcast receiver which demodulates a subtitle program to be superimposed on a television picture will be described below:

The text-broadcast display may display a page of 204 pixels in a column by 248 pixels in a row. In the television system NTSC (National Television System Committee Color System) which uses about 240 effective scanning lines per field, a text-broadcast image can be displayed on a television receiver. In case of superimposing a subtitle-broadcast on a television picture on the screen of wide television receiver which may change the width and height of screen image, the above-mentioned display area of 204 x 248 dots can not be assured if the television picture is enlarged. In this case, a user can not obtain correct text information.

Accordingly, the present invention provides the device which comprises a detecting portion for detecting a text-broadcast display area in the stage of decoding text-broadcast, a calculating portion for determining an optimal location of an area for displaying whole character information when the display area detected by the detecting portion is reduced (to view wide-vision TV-picture), and a display portion for displaying text-broadcast in the display area selected by the calculating portion. The application of this device enables a user to view a complete and easily readable image of text information even on the wide screen of a wide television receiver.

In the process of decoding a text-broadcast data, a table of character coordinates for detecting an area for displaying text-broadcast information is prepared and, after decoding all data for a page, the display mode is judged according to the prepared table and the information is then displayed.

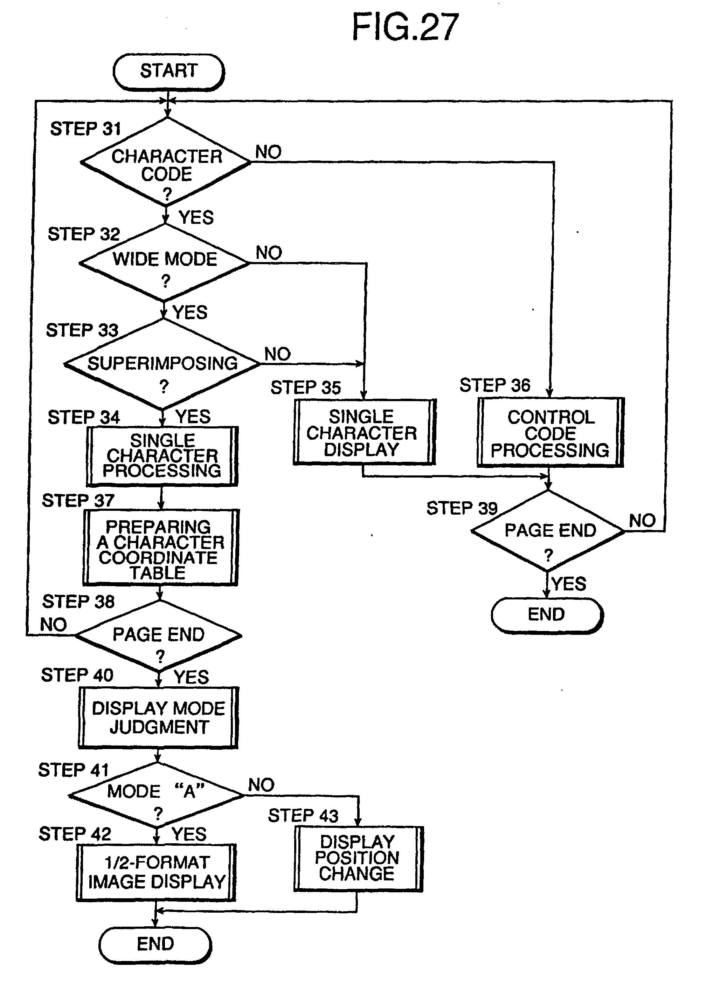

Figure 27 is a flow chart of data processing in the above-mentioned embodiment of the present invention.

The decoding processing is executed by the CPU 2. A received code is first checked whether it is a character code or not (Step S31). If not, the control code processing is performed (Step S36) and the operation proceeds to Step S39. When the code is judged to be a character code (Step S31), the current display mode is examined whether it is wide aspect display mode (the number of effective scanning lines per field is less than 204) (Step S32) and the page display mode is checked whether it is a superimposing display (Step S33). If the current modes are different from the above-mentioned modes, an ordinary single character display is carried out (Step S35). When the superimpose mode is designated (Step S33), single character processing is performed (Step S34).

A character is decoded and character font data is written into an image memory but it is not displayed. The coordinates of the character are converted into an address of the memory, wherein a flag (FFH) is set for marking that a 1-byte character is recorded therein (Step S37). This table is of 204/12 dots (in vertical direction). When the calculation result indicates there is a character, the flag FFH is written into the address.

An example of the calculation is as follows:

When a character [A] has a reference point at the 120th dot in vertical direction, the flag FFH is written into a table address of the 10th byte (120/12=10). Step S38 judges whether a page is completed. If the page is not completed, the operation returns to Step S31. When the page is completed, a display mode is judged by using the prepared table of character coordinates (Step S40).

When the mode is judged to be A, the processing for displaying a 1/2-format image is performed (Step S42). The 1/2-format image display is such that 204 dots in vertical direction are distributed one by one to even field and odd field and interlaced so that an image is reduced vertically by a factor of 2. When the mode is B or C, the information stored in the image memory is displayed in a different predetermined portion, e.g., below (in mode B) or above (in mode C) on the screen of a display device (Step S43).

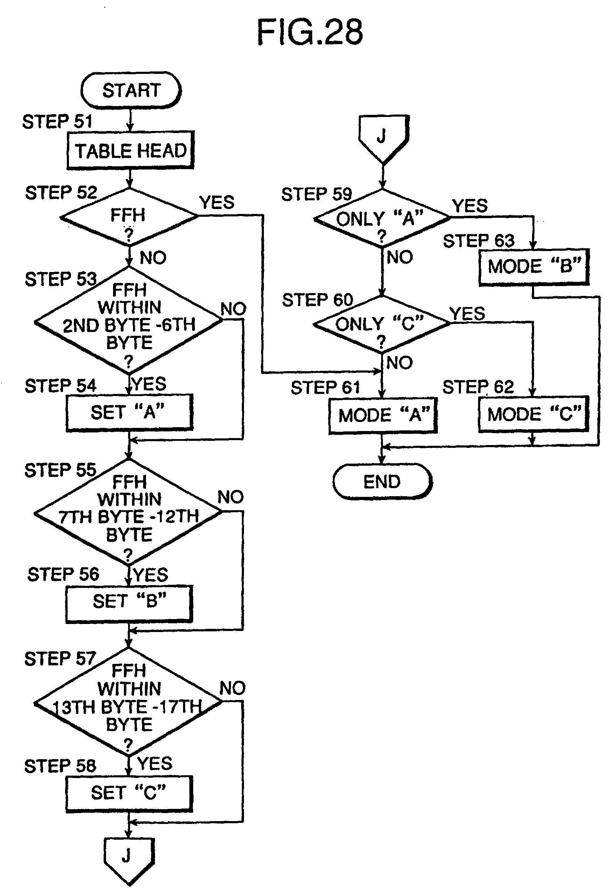

Figure 28 is a flow chart showing the procedure of display-mode discrimination.

This discrimination processing is executed by the CPU 2. The head address of the table is set (Step S51). the CPU examines whether data in the address is 0 (No character) or FFH (Character exists) (Step S52). When a character exists (a flag FFH is set), the operation proceeds to Step S61. If there is no character, the CPU examines whether a flag FFH is set within the 5th byte to 6th byte (Step S53). When no flag FFH is set (i.e., O is set), the operation proceeds to Step S55. When a flag FFH is set, [A] is set on working memory of the CPU (Step 54).

Next, the CPU examines whether a flag FFH is within the area from the 7th byte to the 12th byte or not (Step S55). After Steps S55, S56, S57 and S58, the CPU examines whether only [A] among [A], [B] and [C] is set on the working memory (Step S59). When only [A] is set, the output of the processing is set at MODE B (Step S63). If not only [A], the operation proceeds to Step 60. The CPU examines whether only [C] is set (Step S63). Mode [C] is set when only [C] is set (Step S62). If not only [C], mode [A] is set.

The decoding device according to the present invention enables a wide-television receiver having a reduced number of vertical scans to reliably display a complete subtitle-broadcast whose data relates to a television broadcast and is outputted in synchronism with the television broadcast. When the subtitle is vertically written and its display area is reduced in height by widening the television picture on the screen, the television receiver with the device according to the present invention can reduce the number of characters in the display column and arrange the rest in an adjacent column.

Referring now to Fig. 12, a teletext decoding device according to the present invention will be described as follows:

A video signal detected by a tuner (not shown) is inputted into the input control portion 1 which in turn extracts page data from a received video signal and performs error correction on the data by using an error correction circuit.

The error corrected page data with the page number is stored as a unit page in the memory 7. When a user desires reproducing the recorded page data, he enters the page number by pressing keys on a keypad of the adapted television receiver set. The desired page number through the interface (I/F) 8 is inputted into the CPU 2. The page data corresponding to the inputted page number is read from the memory 7 under the control of the CPU 2.

When the read-out page data consists of text and graphics, it is outputted in the form of an image signal (R, G,B,Y) through the display control portion 6. The character generating read-only-memory (CG-ROM) 3 holds therein character fonts which are used for converting character information into respective character image signals. The timer 4 can generate an interrupt to display a previously designated page or change a page by new one at a preset time interval.

Every time when a teletext page is received, the timer generates an interrupt requesting the CPU 2 to display a received page. However, if the teletext page changes its content only a few times a day, for example, as a "news" page, such unnecessarily frequent updating can be avoided by suitably changing the settings of the timer 4. The signal detecting portion 5 converts an image signal into a digital form, generates an area for scrolling a text on a display screen, simultaneously detects average and peak intensity values of images in two areas on the display screen image, compares the values, superimposes the page on the television picture and transfers the data to the CPU 2. The CPU 2 decides a scroll-displaying area based upon the received data in such a way that the page image may not overlap any character information indicated on the television image and may not be reversely affected by high intensity television signal.

Teletext page data superimposed on a television video signal transmitted during the vertical blanking period is entered into the input control portion 1 which in turn extracts the teletext data from the received video signal and generates and transmits an interrupt signal to the CPU 2. The CPU 2 recognizes the receipt of the teletext by the interrupt and performs error correction on the data, decodes a complete set of theteletext data, recognizing the continuity of the data, and stores the data into a received teletext-data storing portion 7a of the memory 7. When a user selects the page, the CPU 2 reads the page data from the memory 7 and, then, performs the processing operation according to a processing flow chart of Fig. 24. Namely, the CPU 2 prepares a presentable image conversion table 7b for one page (i.e., a screenful) and outputs characters one by one from the beginning of the table for displaying them in the scroll mode on the display screen. The scrolling display control portion 2a is used for preparing the presentable image conversion table 7b and displaying the data from the display control portion 6 according to the prepared presentable image conversion table 7b.

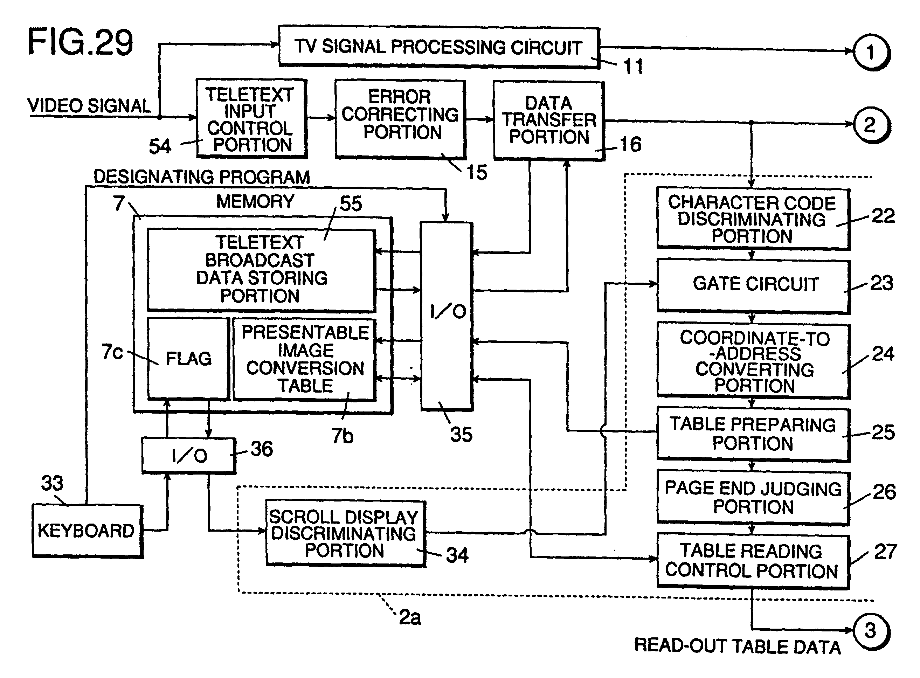

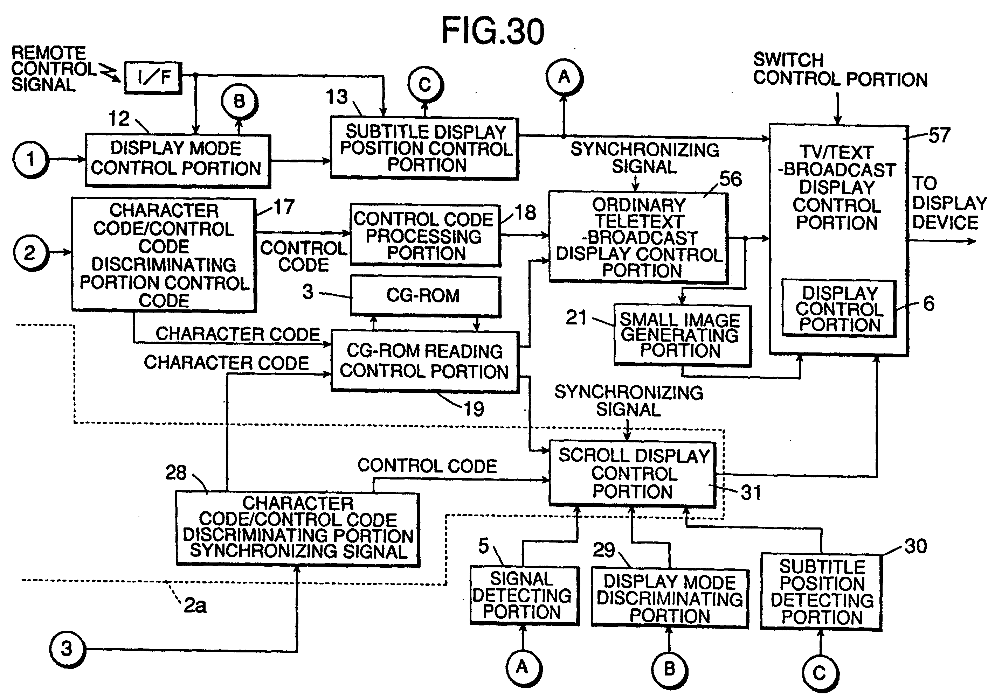

Figures 29 and 30 are block diagrams for showing functions, mainly, of the CPU 2 in this embodiment of the present invention, where is shown a teletext input control portion 54, a teletext data storing portion 55, an ordinary teletext display control portion 56, a teletext display control portion 57. Other components which are similar in function to those shown in Figs.13 and 14 are given same reference numbers.

The scroll display control portion 2a of Fig. 12 consists of a character code discriminator 22, a gate circuit 23, a coordinate-to-address converting portion 24, a table preparing portion 25, a page-end judging portion 26, a table reading control portion 27, a character code/control code discriminating portion 28, a scroll display control portion 31 and a scroll display discriminating portion 34.

In the above-mentioned construction of the embodiment, a section for processing ordinary television signals consists of a television signal processing circuit 11, a display mode control portion 12 and a subtitle display position control portion 13. A section for processing ordinary (conventional) teletext signals consists of a teletext input control portion 54, an error correction portion 15, a data transfer portion 16, a character code/control code discriminating portion 17, a control code processing portion 18, a CG-ROM (character-generating read-only memory) reading control portion 19, an ordinary teletext display control portion 56, a memory 7, a television/teletext display control portion 57, a keyboard 33, an input-output control portion 35 and a CG-ROM 3.

A teletext signal processing section, which is an embodiment of the present invention, consists of a character code discriminating portion 22, a gate circuit 23, a coordinate-to-address converting portion 24, a table preparing portion 25, a page-end judging portion 26, a table reading control portion 27, a character code/control code discriminating portion 28, a display mode discriminating portion 29, a subtitle position detecting portion 30, a scroll display control portion 31, a TV/teletext display control portion 57, a keyboard 33, a scroll display discriminating portion 34, an input/output control portion 36, a signal detecting portion 5 and a small page generating portion 21.

Referring to Figs. 29 and 30, the above-mentioned components will be described below:

The display mode control portion 12 controls different aspect screen modes according to a remote control signal input. The subtitle display position control portion 13 changes a subtitle location according to a remote control input. The teletext input control portion 54 extracts teletext data from an input video signal. The error correction portion 15 performs error correction of the extracted teletext data. The data transfer portion 16 performs writing and reading teletext data of each page into and from the memory 7. The character code/control code discriminating portion 17 discriminates character code and control code contained in the teletext data. The control code processing portion 18 performs processing operations for specifying character sizes, colors and coordinates and setting attributes according to respective control codes.

The CG-ROM reading control portion 19 receives a character code and reads a designated character from the CG-ROM 3. The ordinary teletext display control portion 56 displays an ordinary text-broadcast. The small image generating portion 21 generates a 1/2-format image of an ordinary teletext page. The character code discriminating portion 22 discriminates whether a received code is character code or not. The gate circuit 23 allows a signal to pass therethrough when a display mode is scroll display mode. The coordinate-to-address converting portion 24 determines an address of a presentable image conversion table 7b from the coordinates of a character display location, which is contained in a control code. The table preparing portion 25 prepares a presentable image conversion table according to the determined address.

The page-end judging portion 26 recognizes that a page (i.e. a screenful) is completed. The table reading control portion 27 sequentially reads data from the table, starting from the least address therein. The character code/ control code discriminating portion 28 discriminates a character code and control code read-out from the table. The display mode discriminating portion 29 recognizes a display mode according a control signal from the display control portion 12. The subtitle position detecting portion 30 detects a subtitle location according to a control signal from the subtitle display position control portion 13. The scroll display control portion 31 determines a scroll display area on the basis of the detection results received from the signal detecting portion 5, the display mode discriminating portion 29 and the subtitle position detecting portion 30.

The TV/teletext display control portion 57 receives a switch control signal, selects a TV video image or an ordinary teletext image or an 1/2-format ordinary teletext image or a scroll display image and, then, separately outputs the image onto the screen of a display device (not shown) or superimposes the teletext image on an ordinary television image displayed thereon. Namely, an image on the display screen is changed according to the switch control signal. But, a 1/2-format image, for example, may be shown not continuously but a few seconds before and after displaying the information the scroll mode.

The TV/teletext display control portion 57 includes the display control portion 6 (for teletext) shown in Fig. 13. The keyboard 33 is used for selecting a desired page and designating a scroll display mode in which a scroll display flag 7c is set on the memory 7. The scroll display discriminating portion 34 checks whether the scroll display flag 7c is set on the memory 7. The scroll display flag 7c is set in an area of the ROM where the CPU 2 may access at a high speed.

When an ordinary television program is received, a TV signal input is first processed through the television signal processing circuit 11, the display mode control portion 12 and the subtitle display position control portion 13. In this case, the TV/teletext display control portion 57 selects the television program receiving mode and transmits the processed data to the display device. In case of viewing an ordinary television program on a wide-aspect screen of a TV receiver set, a user is required only to control the display mode control portion 12 through a remote control to select a wide-screen image. If, at this time, a subtitle of a telefilm, for example, is displaced to undesirable position, the user controls the remote control unit to make the subtitle display position control portion 13 adjust the location of the subtitle.

When a teletext is received, the teletext input control portion 54 receives all teletext signals superimposed on the specified positions in a television video signal, the error correcting portion 15 performs error correction of the extracted teletext signals and the data transfer portion 16 transfers the error-corrected signals through the memory input/output control portion 35 into the teletext data storing portion 55 of the memory 7. When the user enters the number of a desired page through the keyboard 33 of the remote control, the designated teletext page is read from the teletext data storing portion 55 and outputted on the display screen.

The character code/control code discriminating portion 17 classifies the read-out teletext data into control codes and character codes. The control codes are processed by the control processing portion 18 and usually used for controlling a teletext receiver through the teletext display control portion 56. For example, the control codes are used for selecting character size and display color, flashing display and console control.

The character codes are transferred to the CG-ROM reading control portion 19 whereby dot patterns each representing actual characters corresponding to the received character codes are outputted. These dot-pattern data sets are usually sent to the teletext display control portion 56 wherein they are processed to form image signals to be displayed in the full-screen still-display mode or scroll display mode. The image signals are transferred to the TV/ teletext display control portion 32 whereby they are displayed in place of an ordinary television picture or superimposed on the television picture depending upon a selector control signal from the remote control unit (not shown). The above-mentioned operations are intended to display an ordinary television program and teletext program in the modes in which they were transmitted from a TV broadcast station.

The operation of the embodiment of the present invention when an image transmitted in the full-screen still-display mode is displayed in the scroll-display mode will be described as follows:

An image signal inputted into the teletext input control portion 14 is corrected for transmission error by the error correcting portion 15 and then transferred to the data transfer portion 16 which in turn writes the received teletext data of a unit page into the memory 7 and reads therefrom for subsequent display. The character code discriminating portion 22 checks the received code whether it is character code or not. The teletext data to be displayed in the scroll display mode passes the gate circuit 23.

For instance, when a user designates the scroll display mode through the keyboard 33, a scroll display flag 7c is set on the memory 7 and recognized by the scroll display discriminating portion 34 which generates a discriminating signal to drive the gate circuit 23. When the scroll display discriminating portion 34 recognized the scroll display flag 7c, the coordinate-to-address converting portion 24 calculates an address of the presentable image conversion table 7b according to the coordinates of the received character data.

On the basis of the address determined by the coordinate-to-address converting portion 24, the table preparing portion 25 prepares a presentable image conversion table 7b which is then entered into the memory 7 through the input/output (I/O) control portion 35. The page-end judging portion 26 recognizes that one page (i.e., a screenful) is prepared. The table reading control portion 27 through the I/O control portion 35 sequentially reads data from the table stored in the memory 7, starting from the least address therein. The character code/control code discriminating portion 28 classifies the read-out table data into character codes and control codes. The character codes are transferred to the CG-ROM reading control portion 19 wherein the aforementioned operation for receiving the ordinary teletext program is performed. The control codes are transferred to the scroll display control portion 31.

On the other hand, the display mode discriminating portion 29 recognizes a display mode according to a control signal from the display control portion 12. The subtitle position detecting portion 30 detects a subtitle location according to a control signal from the subtitle display-position control portion 13. The signal detecting portion 5 detects an optimal location for displaying the teletext page in scroll mode.

The scroll display control portion 31 determines a scroll displaying location on the basis of the detection results received from the signal detecting portion 5, the display mode discriminating portion 29 and the subtitle position detecting portion 30 and then transfers the determined location data to the TV/teletext display control portion 57 which generates an image signal to be scrollably displayed. The TV/teletext display control portion 57 also generates an image signal for a 1/2-format image which is prepared by the small image preparing portion 21 and is displayed as a small still-image on the display screen.

As described above, a video signal inputted into the teletext input control portion 54 is transferred to the transfer portion 16 of the CPU 2, whereby the page data extracted from the video signal is transferred into the memory 7. The page data to be reproduced is read from the memory 7 and transferred to the data transfer portion of the CPU 2. The character code/control code discriminating portion 17 examines whether the received code of the page data is a character code or not. If the code is judged not to be a character code, it is transferred to the control code processing portion 18 which, according to the received control information, determines the size and color of a character, specifies coordinates of a character to be displayed on the display screen and presets the attributes of each character.

When the code is judged by the character code/control code discriminating portion 17 to be a character code, it is transferred to the CG-ROM reading control portion 19 whereby dot-pattern data representing an actual character corresponding to the received character code is read-out and sent usually to the teletext display control portion 56. The scroll display judging portion 34 examines whether the scroll display flag is 1 (i.e., the flag is set). When the scroll display flag 7c is not set, the processing for single character display is performed. When the scroll display flag 7c is set, the coordinate-to-address converting portion 24 converts the coordinates of the transferred character into an address of the presentable image conversion table 7b. The coordinate-to-address conversion processing is as follows:

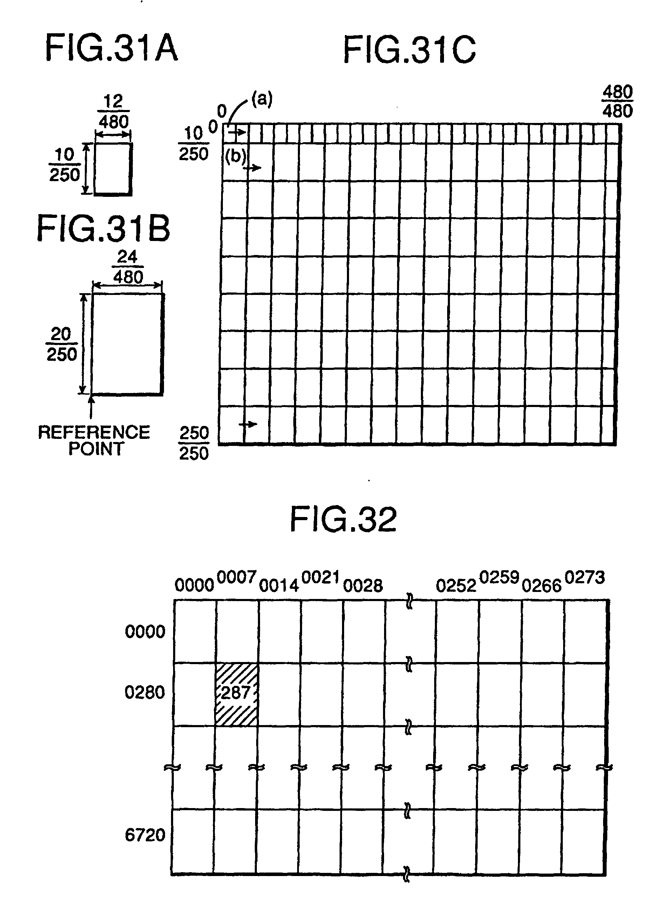

An address of a presentable image conversion table 7b is calculated from a specified presentation coordinates (reference points shown in Figs. 31A to 31C). Fig. 32 shows a memory map of a presentable image conversion table. The number of presentable pixels is 480 dots in a (horizontal) row by 250 dots in a (vertical) column. Fig. 31A shows a block of 10 dots in a column by 12 dots in a row. Fig. 31B illustrates a map of 20 dots in a column by 24 dots in a row corresponding to 4 blocks shown in Fig. 31A. Fig. 31C shows a map consisting of 1000 blocks including 40 blocks per row and 25 blocks per column. Similarly, Fig. 32 shows addresses corresponding to the respective coordinates shown in Fig. 16.

An example of determination of addresses is described as follows:

The numbers of dots in a column and in a row are divided by 10 dots and 12 dots (a minimal unit of a character size) respectively and respective rest values are rounded.

| Column: Rest | 0 = Quotient | Row: Rest | 0 = Quotient |
|---|---|---|---|
| | 4 = Quotient | | 4 = Quotient |
| | 8 = Quotient + 1 | | |

On the assumption that the number of bytes per block (character) is 7 and the number of horizontal blocks is 10, and, for example, X=12 and Y=16, 12 is divided by 12 to get a quotient 1 with a rest of 0 and 16 is divided by 10 to get a quotient 1 with a rest of 6. Consequently, the table address is determined as follows:

Table Address = (12/12) $\times$ 7 + (16/10) $\times$ 40 $\times$ 7 =

= 1 $\times$ 7 + 1 $\times$ 280 = 287.

According to the thus determined address, a presentable image conversion table 7b is prepared by the table preparing portion 25 and stored in the memory 7.

Upon completion of the above-mentioned operation, the page-end judging portion 26 judges whether a page is completed or not. If not, the character code/control code discriminating portion 17 examines whether the received subsequent code of the page is character code or not. The above-mentioned operation cycle is then repeated again. When the completion of the page is recognized by the page-end judging portion 26, the scroll display discriminating portion 34 judges whether the scroll display flag is set or not. When the flag is set, the scroll display control portion 31 starts scroll displaying according to the presentable image conversion table 7b prepared by the table preparing portion 25. Namely, the character information through the memory 7 is converted into an image signal by the CG-ROM portion 3 storing a character font corresponding to the character information. The image signal is then outputted through the TV/teletext display control portion 57. On the other hand, the display mode discriminating portion 29 examines which display mode of scroll display mode and full-screen still-display mode is requested. The respective display mode is obtained through the scroll display control portion 31.

In case of superimposing a scrollable text information on a television picture having a movable subtitle, the subtitle detecting portion 31 detects the subtitle location and the scroll area control portion 31 positions the scroll display at an optimal area where no interference may occur between the subtitle and the scrollable text information on the display screen. Furthermore, the signal detecting portion 5 detects peak values and average values of brightness on specified areas of a television picture and the scroll area control portion 31 moves a scroll display to an area where the scrollable character image may be easily read and visible at a relatively low surrounding brightness without impairing the visibility of the television picture.

Figures 17A to 17C are illustrative of the signal detecting portion 5 shown in Figs. 12 and 30. In Figs. 17A to 17C, there is shown an A/D converter 41, a synchronizing signal separating circuit 42, a timing signal generating circuit 43, an area selector switch 44, a peak level (MAX) detecting circuit 45, a MAX comparing circuit 46, an averaging (average level detecting) circuit 47, an average comparing circuit 48, a selecting portion 49 and an interface (I/F) 50.

The A/D converter 41 converts an input image signal into a digital signal. The synchronizing signal separating circuit 42 extracts a synchronizing signal from an input image signal. The timing signal generating circuit 43 generates timing signals representing two scroll areas A and B, respectively, as shown in Fig. 17B according to the synchronizing signal. The area selector switch 44 selectively outputs image signals in two display areas according to the corresponding timing signals.

The MAX detecting circuit 45 detects peak levels of images of two areas A and B respectively. The MAX comparing circuit 46 compares the maximal level values of two area images. The averaging circuit 47 detects average level values of images of two areas A and B respectively. The average comparing circuit 48 compares the average level values of two area images. According to an exemplified logic table of Fig. 17C, the selecting portion 49 selects one of two display areas, where a superimposable image may be more visible and the signal brightness level is lower than the other.

The image signal is converted into a digital signal by the A/D converter 41. Two scroll display areas on a screen image is generated by the timing signal generating circuit 43 according to a synchronizing signal and, at the same time, peak levels and average levels of images in two scroll display areas are detected by the MAX detecting circuit 45 and the averaging circuit 47 respectively and two peak values and two average values are compared by the comparing circuits 46 and 47 respectively. The selecting portion 49, on the basis of the comparison results, selects one of two areas, wherein the superimposable scroll display is more visible and the lower brightness (image level) of the screen image is obtained. The selected area data is transferred to the CPU 2.

In the present embodiment, two displaying areas A (top) and B (bottom) of the screen image shown in Fig. 17B are generated and compared with each other for selection of an area having less brightness and assuring higher visibility of a superimposable display. This facility, however, is not limited to the above-mentioned example but two areas to be examined for selection may be set at any other location, for example, the left side and the right side of the screen image, and, furthermore, three or more areas may be set for selection of optimal one among them.

The CPU 2 finally decides the scroll displaying area, for example, as shown in Fig. 18A or 18B or 18C or 18D on the basis of the data received from the selecting portion 49. Fig. 18A shows a horizontal display area (a window for transverse scroll mode display) set below on the screen image, whose width in the horizontal direction is limited by a horizontal mask signal (H) and whose width in the vertical direction is limited by a vertical mask signal (V). Fig. 18B shows a horizontal display area above on the screen image, wherein a sequence of characters is scrolled from right to left within the area. Fig. 18C shows a vertical display area (a window for longitudinal scroll mode display) set right on the screen image and Fig. 18D shows a vertical display area set left on the screen image. Information is displayed within the vertical display area, being scrolled upward. The above-mentioned facility can prevent the scroll display from overlapping any character image (e.g., a subtitle) of a television picture and can improve the visibility of the scroll display by selecting an screen image area having a relatively low brightness.

One of the advantages of the decoding device according to the present invention against the conventional devices is the provision of the signal detecting portion 5 that is a circuit for searching an optimal display area wherein the scrollable display proposed by the present invention is easily viewed by a user. A scrollable text image displayed as superimposed on an ordinary television picture may become unreadable by affection of the television picture elements. In this case, the signal detecting portion 5 is effective to recognize the content of the television picture and search an area wherein the information is easy to read. Conventional devices which are not provided with the signal detecting circuit proposed by the present invention can not replace the scroll display area or requests a user to replace the area to a suitable position by manually adjusting the display device.

Figure 19 is a flow chart for decoding a teletext page data by a teletext decoding device according to the present invention. Figure 20 depicts an example of a remote control transmitter according to the present invention. In Fig. 20, reference character A designates a trigger key for selecting a mode of the present invention, characters B, C and D designate screen-mode selecting keys and numerals 1 to 8 designate channel selecting keys. When a user presses the key A, a code A is entered into the interface 8. The CPU 2 reads code A and begins decoding operation according to the flow chart of Fig. 19. The CPU 2 sets a scroll display flag on the memory 7 (Step S10) and returns to the ordinary processing mode. The CPU 2 modifies a decoding protocol according to the flag. Namely, when scroll display flag 7c is set, the CPU 2 performs coordinate-to-address conversion and prepares a presentable image conversion table 7b. If no flag is set, the CPU 2 performs an ordinary "single-character display processing" in the same way as the aforementioned conventional display processing.

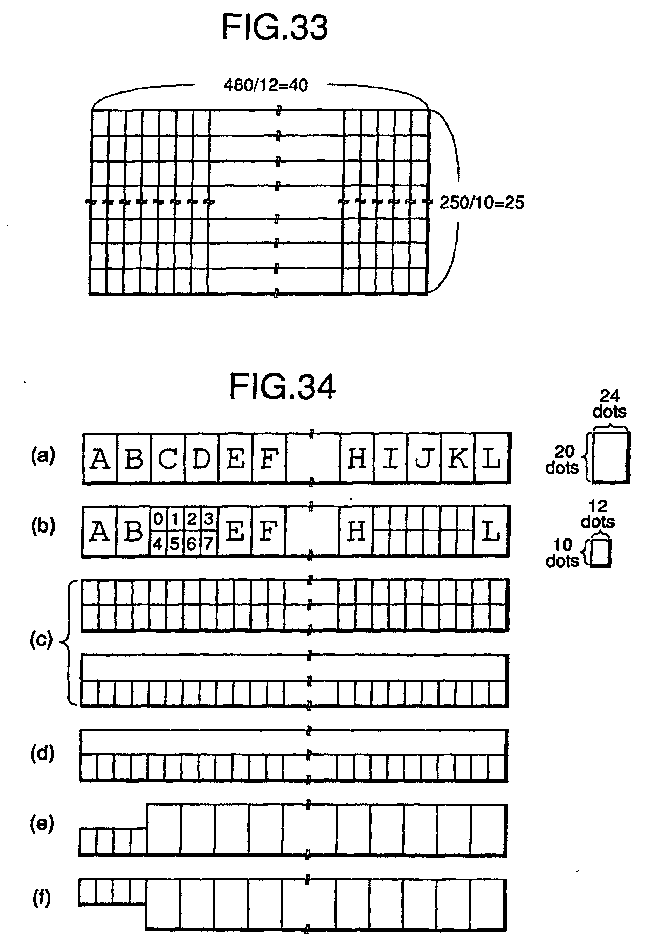

Figure 33 is illustrative of an area for teletext page display, which corresponds to the display area shown in Fig. 31C. Figure 22 is illustrative of a presentable image conversion table.

As described before with reference to Fig. 31C, the number of presentable pixels is 480 dots in a (horizontal) row by 250 dots in a (vertical) column. In the embodiment of the present invention, the display area is divided into 1000 blocks each having 12 dots per row and 10 dots per column. Each block has a respective table. The presentable image conversion table shown in Fig. 22 is a table in which character data is written in the following manner:

The coordinates of character data (Fig. 10) contained in a control code transmitted from a TV broadcasting station is first converted into a table address and, then, character data such as a character size, color, code and attributes (e.g., underline and other ornaments) are written into the addressed table area. in the teletext system, the minimum character size is defined as 12 by 10 dots and the minimum character display coordinates is defined as 4 by 4 dots. A row of characters is formed in such a manner that a reference character is first determined and other characters are arranged in a.row relative to the reference character therein.

As described above, the number of presentable pixels is 480 dots in a row × 250 dots in a column. When a display area is divided by a unit block of 12 × 10 dots, 40 blocks (480/12=40) in the horizontal direction and 25 blocks (250/10=25) in the vertical direction are obtained and a total number of blocks in an image screen is 1000 (40 × 25). Each block has a presentable image conversion table shown in Fig. 22.

The presentable image conversion table of Fig. 22 consists of seven elements - size data, color data, code of character set, character code 1, character code 2, attribute data and attribute parameters. In the element "size data", there is written a code indicating a character size, e.g., "vertically twice enlarged character" code or "horizontally twice enlarged character" code. In the element "color data", there is written color data of a character or graphics, which is a 1-byte record consisting of higher-order 4 bits describing a foreground image color and lower-order 4 bits describing a background color, each selectable from 16 colors.

In the element "character-set code", there is written a previously defined code specifying a character set selected from following character sets: Japanese KANJI character set (2 byte code), alphanumeric set (1 byte code), Japanese KATAKANA character set (1 byte code), Japanese HIRAGANA character set (1 byte code), mosaic set (1 byte code), external character set (1 byte or 2 byte code). The elements "character 1" and "character 2" contains each a record of a character code having a length specified by each character set code.

For instance, when the Japanese KANJI character set is selected as "character set", a 2-byte character code (the first 1 byte is segment data and the second 1 byte data is dot data) is written. When the Japanese HIRAGANA character set is selected, a 1-byte character code is written. The attribute data is used when a character is ornamentally processed, for example, by putting an underline. The attribute parameter is a parameter relating to the attribute data. The size data, color data, character-set code, attribute data and attribute parameter are control codes.

Referring to Fig. 32, a presentable image conversion table consists of seven elements and, therefore, there are addresses corresponding to 40 blocks "0000", "0007"..."0273" in the horizontal direction and addresses corresponding to 25 blocks "0000", "0280" (40 blocks × 7) ...."6720" in the vertical direction.

Accordingly, the minimum character size of 12 x10 dots may be a reliable standard character size. Therefore, at the stage of expressing any character, an address of a block table is calculated from its coordinates. The coordinate values are rounded along the block of 12 × 10 dots and then a character size, color code, character-set code (e.g., Japanese KANJI characters, KATAKANA characters, HIRAGANA characters, alphanumeric characters, external characters), character code, attribute (e.g., enclosure, underline, flashing) are entered into the table. There are 8 display colors.

After tables for one page are prepared, information is read out for display from each table, beginning at the beginning thereof. In the display processing, a scroll-display area of 20 dots in height is produced for a reference character of 20 dots in height. If a reference character is of 10 dots in height, two rows of characters may be displayed at a time within the area or a space (blank) is given to upper half (10-dots) of the area and a single row of characters is displayed in the lower half (10 dots) of the area. This judgement is made according to decisions predetermined respectively for assumable images of Fig. 34(a) to (f). For example, in the case of Fig. 34(c), decision is made to select single-line scroll display.

Namely, in an ordinary decoding process, a presentable image conversion table is prepared instead of displaying characters. The presentable image conversion table is a table that stores character information within a block having 12 dots in a row and 10 dots in a column, which is a unit division of a display area (of 250 dots in a column × 480 dots in a row) for displaying a teletext information. A block, which contains the operating reference point of a character or graphic character, may include data such as character or graphic character size, color, character set code (e.g., Japanese KANJI characters, KATAKANA characters, HIRAGANA characters, alphanumeric characters and external characters), character code, attribute (e.g., enclosure, underline and flashing) and attribute parameters. A presentable image conversion table for all data units within a page must be prepared. After completion of the presentable image conversion table, characters are decoded in the order of ascending order of addresses (i.e., first from the least address) in the table and displayed one by one in the scroll mode.

Character information is written only in area blocks each containing a character. Other blocks containing no character information (space or blank blocks) cause blank periods in displaying information in the scroll mode. Accordingly, a soft counter is provided, which operates with each vacant block (i.e., block table wherein no information is contained) and may skip the vacant block when it counts up the preset threshold value.

Figure 24 is a flow chart of processing for decoding teletext information by a decoding device according to the present invention. The decoding process is executed by a central processing unit (CPU). As previously described with reference to Figs.29 and 30, a received code is checked whether it is a character code or not (Step S20). If not, the control code processing is made for specifying a character size, color, coordinates and other attributes) (Step S21) and the operation proceeds to Step S26.

When the received code is recognized by Step S20 to be a character code, Step S22 examines whether the scroll display flag is set or not. If not, Step S23 performs displaying the character and the operation proceeds to Step S26. While the flag is set, an address of an added table is calculated by Step S24 from the currently specified coordinates by the method described with reference to Figs. 31A, 31B and 31C. The character size, character code and other attributes are written into the addressed table and then the operation proceeds to Step S26.

Step S26 examines whether a page is decoded to the end. If not, the operation returns to Step S20. When the page is completely decoded, Step S27 examines whether the scroll display flag is set. If not, the operation is finished. While the flag is set, Step S28 starts the scroll display according to the presentable image conversion table prepared by the decoding process.

The operation of the teletext decoding device according to the present invention is performed according to a software loaded in the CPU 2. Referring to Fig. 12, the operation is described as follows: The CPU 2 reads page data by 1 byte at a time from a memory 7 wherein the teletext page data is stored and then examines whether the data is a character code or a control code. When it is a character code, the CPU 2 recognizes that the display is conducted in the scroll mode and, then, calculates an address of a presentable image conversion table 7b from the current coordinate values and enters the character information into the addressed table.

The presentable image conversion table is an area of the memory 7, which is previously assigned to a conversion table. After a page is decoded (a table is prepared), character information is read from a least address within the table in the memory 7 in case of displaying a teletext page in the scroll mode, and font data for the character code is read from the CG-ROM 3 and transferred into the display control portion 6 for displaying the information in the scroll mode.

In the decoding operation, pattern data units of graphics and mosaics are not processed (cancellation of data units). When displaying, half-tone is set and a string of characters is scrolled from right to left on a display screen in the horizontal scroll mode or from bottom to top on the display screen in the vertical scroll mode. In Figs. 18A to 18D, there are shown examples of scroll-mode display. This enables a user to read a teletext page while enjoying a television program on the display screen.

Figures 25A to 25D illustrate examples of images displayed in different modes on the screen of a wide-aspect monitor. Fig. 25A shows an ordinary screen-mode image (aspect ratio of 4:3), Fig. 25B shows a screen image in mode A, Fig. 25C shows a screen image in mode B (aspect ratio of 16:9) and Fig. 25D shows another screen image in mode B. Numeral 51 designates an ordinary television picture image and numeral 52 designates a display area for teletext page data according to the present invention.

As is apparent from Figs. 25A to 25D, the different mode screen images have different screen sizes. This means that an ordinary scrolling display may disappear out of screen as, for example, shown in Fig. 25C. In case when a subtitle is replaced on the television picture by using a subtitle replacing function, the subtitle may overlap an area for scrolling teletext page information. Accordingly, the CPU 2 reads the current screen mode and the current state of the subtitle replacing function through the interface 8 and selects an optimal location of the scroll display area on the display screen. In Fig. 20, there is shown a remote control transmitter having display mode selecting keys B, C and D.

Figure 26 shows an example of generating a small insert by reducing a page of full-format still-image by a factor of 2 in both width and height. The scrolling display function according to the present invention may change the structure of a broadcast transmitted from a TV-broadcasting station. This may cause a problem of infringement of copyright. To avoid this and to examine a page structure, a 1/2-format page image is displayed a few seconds before or after displaying the image in the scroll mode.

A teletext receiver which decodes a subtitle page to be superimposed on a television picture will be described below:

In teletext systems, a page of 250 dots in a column by 480 dots in a row is displayed. In the television system NTSC (National Television System Committee Color System) which uses about 240 effective scanning lines per field, a teletext image can be displayed on a television receiver. In case of superimposing a subtitle page on a television picture on the screen of wide television receiver which may change the width and height of its screen image, the above-mentioned display area of 250 dots in a column x 480 dots in a row can not be assured if the television picture is enlarged. In this case, a user can not obtain the correct teletext information.

Accordingly, the present invention provides a device which comprises a detecting portion for detecting a teletext display area in the stage of decoding teletext page, a calculating portion for determining an optimal location of an area for displaying an entire teletext information when the display area detected by the detecting portion is reduced because of enlargement of television picture on a wide-vision display, and a display portion for displaying a teletext page in the display area selected by the calculating portion. The application of this device enables a user to view a complete and easily readable image of text information even on the wide screen of a wide television receiver.

In the process of decoding a teletext page, a table of character coordinates for detecting an area for indicating teletext information is prepared and, after decoding all data for a page, the display mode is judged according to the prepared table and then the information is displayed.

Figure 27 is a flow chart of data processing in the above-mentioned embodiment of the present invention.

The decoding processing is executed by the CPU 2. A received code is first checked whether it is a character code or not (Step S31). If not, the control code processing is performed (Step S36) and the operation proceeds to Step S39. When the code is judged to be a character code (Step S31), The current display mode is examined whether it is wide-aspect display mode (the number of effective scanning lines per field is less than 250) (Step S32) and the page display mode is checked whether it is a superimposing display (Step S33). If other than two modes is requested, an ordinary single character display is carried out (Step S35). When the superimposing mode is designated (Step S33), single character processing is performed (Step S34).

A character is decoded and the character font data is written into an image memory but it is not displayed. The coordinates of the character are converted into an address of the memory, wherein a flag (FFH) is set for indicating a 1-byte character exists. (Step S37). This is a table of 250/10 dots in vertical direction. The flag FFH is written into the address when the calculation result indicates there is a character. An example of the calculation is shown as follows:

When a character [A] has a reference point at the 120th dot in vertical direction, the flag FFH is written into a table address of the 10th byte (120/12=10). Step S38 judges whether a page is completed, and the operation returns to Step S31 if the page is not completed. When the page is completed, a display mode is judged by using the prepared table of character coordinates (Step S40).

The processing for displaying a 1/2-format image is performed (Step S42) when the mode is judged to be A (Step S42). The 1/2-format image display is such that 250 dots in vertical direction are distributed one by one to even field and odd field and interlaced so that an image is reduced vertically by a factor of 2. When the mode is B or C, the information stored in the image memory is displayed in a different predetermined area, e.g., below (in mode B) or above (in mode C) on the screen of a display device (Step S43).

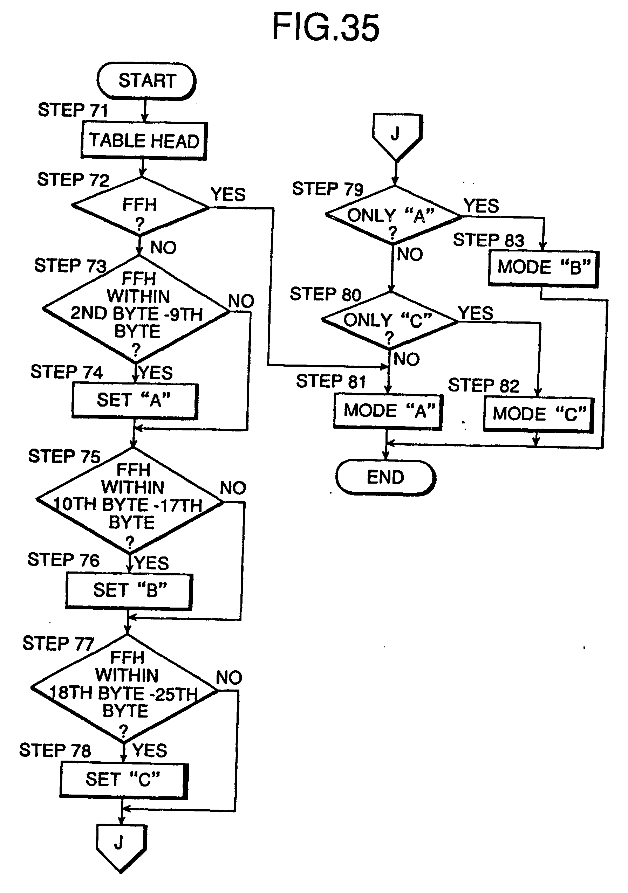

Figure 35 is a flow chart showing the procedure of display mode discrimination.

The display mode discrimination is executed by the CPU 2. The head address of the table is set (Step S71). The CPU 2 examines whether data in the address is 0 (No character) or FFH (Character exists) (Step S72). When there is a character (a flag FFH is set), the operation proceeds to Step S81. When there is no character, the CPU 2 examines whether a flag FFH is set within the 2nd byte to 9th byte (Step S73). When no flag FFH is set (i.e., O is set), the operation proceeds to Step S75. When a flag FFH is set, [A] is set on working memory of the CPU 2 (Step 74).

Next, the CPU 2 examines whether a flag FFH is within the area from the 10th byte to the 17th byte or not (Step S75). After Steps S75, S76, S77 and S78, the CPU 2 examines whether only [A] among [A], [B] and [C] is set on the working memory (Step S79). When only [A] is set, the output of the processing is set at MODE B (Step S83). If not only [A], the operation proceeds to Step 80. The CPU examines whether only [C] is set (Step S80). If only [C], the mode [C] is set (Step 82). If not onnly [C], mode [A] is set.

The decoding device according to the present invention enables a wide-television receiver having a reduced number of vertical scans to reliably display a complete subtitle broadcast whose data relates to a television broadcast and is outputted in synchronism with the television broadcast. When the subtitle is vertically written and its display area is reduced in height by widening the television picture on the screen, the television receiver with the device according to the present invention can reduce the number of characters in a column and arrange the resisure (overflow) in an adjacent column.

As is apparent from the foregoing description, the present invention offers following advantages:

In process of decoding text-broadcast program data, a full-screen still-image is converted into a scrollable image by using a presentable image conversion table, which is prepared for each character code including presentation coordinates, color code and attribute code, and the scrollable image is superimposed or horizontally scrolled or vertically scrolled in a single column on the screen of a television receiver set, thereby a user can read text information while viewing an ordinary television image on the screen.

In case of viewing a text-broadcasting program on a wide-aspect monitor, the location of a presentable image can be automatically changed to an optimal area and superimposed and scrolled thereon, thereby the overlaying of the text image on, for example, a subtitle of a telefilm on the monitor screen can be prevented. Namely, an area best suited for superimposing and/or scrolling the text information on a wide-aspect monitor is selected by a micro-computer in view of the displaying conditions of current television picture, e.g., there is a subtitle which can be detected by checking the state of a subtitle replacing function.

Text information can be superimposed on an area of television picture, which is previously selected from a plurality of possible areas by comparing values of picture brightness in respective areas in view of the visibility of both the text and picture, i.e., where a background brightness is relatively low and the information can not overlap any important items of the television picture. The information thus scrollably indicated threat assures easy readability.

A full-screen still-image received from a broadcasting station before being converted into a scrollable image can be displaced in a much reduced format as a small still insert for several seconds on a suitable area of a television screen. Namely, the device has means for displaying a full-screen still page in reduced size. This facility is used for spot displaying a small sized still image before and after scrolling display of the page image. It is effective to check the page structure and to avoid the infringement of copyright.

The device is provided with a timer which can make an interrupt requesting the CPU to display or update a previously designated text-broadcasting program or its pages at a preset time interval.

In process of demodulating subtitle data of a subtitle-broadcast program to be superimposed on a television picture, a presentation area of the text information is detected and an optimal location for displaying an entire information is calculated on the basis of the detected area if the display area is reduced, for example, on a wide-aspect screen of a wide television receiver, thereby the complete and well readable information can be assured even on the wide-aspect television screen.

In process of decoding teletext page data, a full-screen still image is converted into a scrollable image by using a presentable image conversion table prepared for each character code, which includes presentation coordinates, color code and attribute code, and then superimposed or horizontally scrolled or vertically scrolled in a single column on the screen of a television receiver set, thereby a user can easily read text information while viewing an ordinary television picture on the screen.

In case of viewing a teletext page on a wide-aspect monitor, location of a presentable page can be automatically changed to an optimal area and superimposed and scrolled thereon, preventing thereby the page image from overlapping a subtitle of a telefilm on the monitor screen. Namely, an area best suited for superimposing and/or scrolling the text information on a wide-aspect monitor is selected by a micro-computer in view of the displaying conditions of current television picture, e.g., there is a subtitle which can be detected by checking the state of a subtitle replacing function.

Teletext information can be superimposed on an area of television picture, which is previously selected by comparing values of television picture brightness in view of the visibility of both the page and picture, i.e., where a background brightness is relatively low and the page image can not overlap any important items of the television picture. Therefore, the teletext page information is scrollably indicated threat, assuring easy readability.

A full-screen still-page received from a broadcasting station before converting into a scrollable image can be compressed to a much reduced format and displayed as small still-image insert for several seconds on a suitable area of a television screen. Namely, the device has means for displaying a full-screen still page in reduced size. This facility is used for spot displaying a small sized still image before and after scrolling display of the page image. It is effective to check the page structure and to avoid the infringement of copyright.

The device is provided with a timer which can make an interrupt to the CPU to display or update a previously designated teletext page or subpage at a preset time interval.

In process of demodulating data of a subtitle page to be superimposed on a display screen, a presentation area of the teletext information is detected and an optimal location for displaying an entire text information is calculated on the basis of the detected area if the display area is reduced, for example, on a wide-aspect screen of a wide television receiver, thereby the complete and well readable subtitle can be assured even on the wide-aspect television screen.

The invention may be embodied in other specific forms and manners without departure from the scope thereof.

**Claims**

1.  A text-broadcast decoding device for use in a television receiver for receiving and decoding broadcast information including text-broadcast data, said broadcast information being superimposed upon unused lines in an ordinary television video signal transmitted during a vertical blanking period, the device including a memory (7) for storing the text-broadcast data as character data for one or more programs of full-screen still image display, **characterized by** means (25) operable in a text scrolling mode of the device for generating an image presentation and conversion table (7b) from character data read out of the memory (7), said table storing the text-broadcast data in information units, each of at least a character size of the text, a scrolling display control portion (2a) for controlling the display and scrolling of a sequence of the character images using said information units of the text-broadcast data as stored in and sequentially read out from the image presentation and conversion table, the text-broadcast character data including control data for each character representing the character's presentation coordinates and display features, a signal detecting portion (45, 47) for detecting signals of average brightness and peak brightness of a specified area on a television image, and an adaptive reproduction scrolling display control portion (31) for displacing, on the basis of the detected brightness, an area for presenting a scrolled text-broadcast program to an optimal location where the presented program can be easily read and does not affect the television picture.

2.  A text-broadcast decoding device according to claim 1, **characterized in that** the scrolling display control portion (2a) includes a coordinate-to-address converter (24) for converting said presentation coordinates represented by the control data of the character data in the text-broadcast information into addresses of the image presentation and conversion table and the table generating means (25) is arranged to prepare the image presentation and conversion table according to the addresses obtained by the coordinate-to-address converter (24).

3.  A text-broadcast decoding device according to claim 1 or claim 2, **characterized in that** information to be scrollably displayed by the scrolling display control portion is a superimposable text.

4.  A text-broadcast decoding device according to any preceding claim, **characterized in that** the image presentation and conversion table (7b) contains in each said information unit a character code and character data representing a character size, a color code representing a display color, and an attribute code representing an attribute, e.g., for ornamental character processing.

5.  A text-broadcast decoding device according to any preceding claim, **characterized in that** the device includes a display mode discriminating portion (29) for discriminating a screen mode involving displaying a text-broadcast program on a wide-aspect screen of a monitor, and an adaptive reproduction display control portion (31) for automatically selecting an optimal location for displaying the text-broadcast program on a display screen according to the display mode discriminated by the display discriminating portion.

6.  A text-broadcast decoding device according to any preceding claim, **characterized in that** the device includes a subtitle position detecting portion (30) for detecting a displaceable subtitle location, and an adaptive reproduction display control portion (31) operable when a text-broadcast program is superimposed on a television picture having a movable subtitle and the subtitle position detected by the subtitle position detecting portion (30) overlaps the scroll displaying area of the text-broadcast information to displace said displaying area of the text-broadcast information to an optimal location apart from the subtitle.

7.  A text-broadcast decoding device according to any preceding claim, **characterized in that** the device is arranged so that when a page of a full-screen still-image program transmitted from a television broadcasting station is to be converted into a scrollable image for display said page is also displayed as a reduced-size still-image insert in a display for several seconds.

8. A text-broadcast decoding device according to any preceding claim, **characterized in that** the table generating means is arranged to prepare the image presentation and conversion table for one page of text-broadcast data and the scrolling display control portion reads out the characters one by one from the beginning of the table and sequentially displays and scrolls them on a display screen.

9. A text-broadcast decoding device according to any preceding claim, **characterized in that** in case of displaying a horizontally scrollable single line of characters on a display screen, the scrolling display control portion first determines a reference character and then arranges all other characters in a line relative to the reference character.

10. A text-broadcast decoding device according to any preceding claim, **characterized in that** the device includes a timer (4) for performing an interrupt to cause a previously designated and preset text-broadcasting program or a page to be displayed at a preset time interval or to update the program or page at a preset time interval.

11. A text-broadcast decoding device according to claim 1, **characterized in that** the memory (7) is operable for storing the decoded text-broadcast data of each program together with a program number, and **in that** the device includes a central processing unit (2) for reading the text-broadcast data from the memory by the program number and a signal detecting portion (5) for converting an image signal portion of the ordinary television video signal into a digital signal, generating a scroll-displaying area on a display screen, detecting a peak intensity level and an average intensity level of said image in said area, comparing the image intensity levels, superimposing the text-broadcast program on the image and transferring the obtained data into the central processing unit which in turn determines a displaying area on the basis of the data received from the signal detecting portion to prevent the text-broadcast program image from overlapping any character in the television picture on the display screen.

12. A text-broadcast decoding device according to claim 11, **characterized in that** the signal detecting portion (5) includes an A-D converter (41) for converting an image signal into a digital signal, a timing pulse generating circuit (43) for generating a synchronizing signal for creating a scroll-displaying area on a display screen, a peak detecting circuit (45) for detecting peak levels of the image in two areas at the same time according to the synchronizing signal, an average level detecting circuit (47) for detecting average levels of the image in two areas at the same time and a comparator circuit (46) for comparing the signal levels from the peak detecting circuit and a comparator circuit (48) for comparing the signal levels from the average detecting circuit.

**Patentansprüche**

1. Textrundfunk-Decodierungsvorrichtung für die Verwendung in einem Fernsehempfänger zum Empfangen und Decodieren von Rundfunkinformationen, die Textrundfunk-Daten enthalten, wobei die Rundfunkinformationen nicht verwendeten Zeilen in einem normalen Fernsehvideosignal, die während einer vertikalen Austastperiode gesendet werden, überlagert werden, wobei die Vorrichtung einen Speicher (7) zum Speichern der Textrundfunk-Daten als Zeichendaten für ein oder mehrere Programme einer Vollbildschirm-Standbildanzeige enthält, **gekennzeichnet durch** Mittel (25), die in einer Textroll-Betriebsart der Vorrichtung betreibbar sind, um eine Bilddarstellungs- und Umsetzungstabelle (7b) aus aus dem Speicher (7) ausgelesenen Zeichendaten zu erzeugen, wobei die Tabelle die Textrundfunk-Daten in Informationseinheiten speichert, wovon jede wenigstens die Größe eines Zeichens des Texts hat, einen Rollanzeige-Steuerabschnitt (2a), der die Anzeige steuert und eine Folge der Zeichenbilder unter Verwendung der Informationseinheiten der Textrundfunk-Daten, die in der Bilddarstellungs- und Umsetzungstabelle gespeichert und daraus sequenziell ausgelesen werden, rollt, wobei die Textrundfunk-Zeichendaten Steuerdaten für jedes Zeichen, die die Zeichendarstellungskoordinaten und Anzeigemerkmale repräsentieren, enthalten, einen Signalerfassungsabschnitt (45, 47), der Signale mit durchschnittlicher Helligkeit und mit Spitzenhelligkeit eines spezifizierten Bereichs in einem Fernsehbild erfasst, und einen Rollanzeige-Steuerabschnitt (31) für adaptive Wiedergabe, der auf der Grundlage der erfassten Helligkeit einen Bereich für die Darstellung eines gerollten Textrundfunkprogramms an eine optimale Stelle verschiebt, an der das dargestellte Programm einfach gelesen werden kann und das Fernsehbild nicht nachteilig beeinflusst.

2. Textrundfunk-Decodierungsvorrichtung nach Anspruch 1, **dadurch gekennzeichnet, dass** der Rollanzeige-Steuerabschnitt (2a) einen Koordinaten-Adressen-Umsetzer (24) enthält, der die Darstellungskoordinaten, die durch die Steuerdaten der Zeichendaten in den Textrundfunkinformationen repräsentiert werden, in Adressen der Bilddarstellungs- und Umsetzungstabelle umsetzt, und die Tabellenerzeugungsmittel (25) so beschaffen sind, dass sie die Bilddarstellungs- und Umsetzungstabelle in Übereinstimmung mit den durch den Koordinaten-Adressen-Umsetzer (24) erhaltenen Adressen vorbereiten.

3. Textrundfunk-Decodierungsvorrichtung nach Anspruch 1 oder Anspruch 2, **dadurch gekennzeichnet, dass** die Informationen, die von dem Rollanzeige-Steuerabschnitt rollbar angezeigt werden, ein überlagerbarer Text sind.

4. Textrundfunk-Decodierungsvorrichtung nach einem vorhergehenden Anspruch, **dadurch gekennzeichnet, dass** die Bilddarstellungs- und Umsetzungstabelle (7b) in jeder der Informationseinheiten einen Zeichencode und Zeichendaten, die eine Zeichengröße repräsentieren, einen Farbcode, der eine Anzeigefarbe repräsentiert, und einen Attributcode, der ein Attribut repräsentiert, enthält, z. B. für eine verzierende Zeichenverarbeitung.

5. Textrundfunk-Decodierungsvorrichtung nach einem vorhergehenden Anspruch, **dadurch gekennzeichnet, dass** die Vorrichtung einen Anzeigebetriebsart-Unterscheidungsabschnitt (29), der eine Bildschirmbetriebsart unterscheidet, die die Anzeige eines Textrundfunkprogramms auf einem Breitbildschirm eines Monitors enthalt, und einen Anzeigesteuerabschnitt (31) für adaptive Wiedergabe, der eine optimale Stelle für die Anzeige des Textrundfunk-Programms auf einem Anzeigeschirm in Übereinstimmung mit der von dem Anzeigeunterscheidungsabschnitt unterschiedenen Anzeigebetriebsart automatisch auswählt, enthält.

6. Textrundfunk-Decodierungsvorrichtung nach einem vorhergehenden Anspruch, **dadurch gekennzeichnet, dass** die Vorrichtung einen Untertitelposition-Erfassungsabschnitt (30), der eine verschiebbare Untertitelstelle erfasst, sowie einen Anzeigesteuerabschnitt (31) für adaptive Wiedergabe enthält, der so betreibbar ist, dass er, wenn einem Fernsehbild mit einem beweglichen Untertitel ein Textrundfunkprogramm überlagert wird und die von dem Untertitelposition-Erfassungsabschnitt (30) erfasste Untertitelposition mit dem Rollanzeigebereich der Textrundfunkinformationen überlappt, den Anzeigebereich der Textrundfunkinformationen an eine optimale Stelle außerhalb des Untertitels verschiebt.

7. Textrundfunk-Decodierungsvorrichtung nach einem vorhergehenden Anspruch, **dadurch gekennzeichnet, dass** die Vorrichtung so beschaffen ist, dass dann, wenn eine Seite eines Vollbildschirm-Standbildprogramms, das von einer Fernsehsendestation gesendet wird, in ein rollbares Bild für die Anzeige umgesetzt werden soll, diese Anzeige ebenfalls als Standbildeinfügung mit verringerter Größe in einer Anzeige für mehrere Sekunden angezeigt wird.

8. Textrundfunk-Decodierungsvorrichtung nach einem vorhergehenden Anspruch, **dadurch gekennzeichnet, dass** die Tabellenerzeugungsmittel so beschaffen sind, dass sie die Bilddarstellungs- und Umsetzungstabelle für eine Seite aus Textrundfunk-Daten vorbereiten und der Rollanzeige-Steuerabschnitt die Zeichen einzeln nacheinander vom Anfang der Tabelle an ausliest, sequenziell anzeigt und sie auf einem Anzeigeschirm rollt.

9. Textrundfunk-Decodierungsvorrichtung nach einem vorhergehenden Anspruch, **dadurch gekennzeichnet, dass** im Fall einer Anzeige einer horizontal rollbaren einzelnen Zeichenzeile auf einem Anzeigeschirm der Rollanzeige-Steuerabschnitt zunächst ein Referenzzeichen bestimmt und dann alle anderen Zeichen in einer Zeile relativ zu dem Referenzzeichen anordnet.

10. Textrundfunk-Decodierungsvorrichtung nach einem vorhergehenden Anspruch, **dadurch gekennzeichnet, dass** die Vorrichtung ferner einen Zeitgeber (4) enthält, der eine Unterbrechung ausführt, um entweder die Anzeige eines im Voraus bezeichneten und im Voraus festgelegten Textrundfünk-Programms oder einer Seite in einem im Voraus festgelegten Zeitintervall oder die Aktualisierung des Programms oder der Seite in einem im Voraus festgelegten Zeitintervall zu veranlassen.

11. Textrundfunk-Decodierungsvorrichtung nach Anspruch 1, **dadurch gekennzeichnet, dass** der Speicher (7) so betreibbar ist, dass er die decodierten Textrundfunk-Daten jedes Programms zusammen mit einer Programmnummer speichert und dass die Vorrichtung eine Zentraleinheit (2), die die Textrundfünk-Daten anhand der Programmnummer aus dem Speicher liest, sowie einen Signalerfassungsabschnitt (5) enthält, der einen Bildsignalabschnitt des normalen Fernsehvideosignals in ein digitales Signal umsetzt, einen Rollanzeigebereich auf einem Anzeigeschirm erzeugt, einen Spitzenintensitätspegel und einen durchschnittlichen Intensitätspegel des Bildes in dem Bereich erfasst, die Bildintensitätspegel vergleicht, das Textrundfunkprogramm dem Bild überlagert und die erhaltenen Daten zur Zentraleinheit transportiert, die ihrerseits einen Anzeigebereich auf der Grundlage der vom Signalerfassungsabschnitt empfangenen Daten bestimmt, um zu verhindern, dass das Textrundfunkprogramm-Bild mit einem Zeichen in dem Fernsehbild auf dem Anzeigeschirm überlappt.

12. Textrundfunk-Decodierungsvorrichtung nach Anspruch 11, **dadurch gekennzeichnet, dass** der Signalerfassungsabschnitt (5) einen A/D-Umsetzer (41), der ein Bildsignal in ein digitales Signal umsetzt, eine Taktimpuls-Erzeugungsschaltung (43), die ein Synchronisationssignal erzeugt, um auf einem Anzeigeschirm einen Rollanzeigebereich zu erzeugen, eine Spitzenerfassungsschaltung (45), die Spitzenpegel des Bildes in zwei Bereichen gleichzeitig in Übereinstimmung mit dem Synchronisationssignal erfasst, eine Durchschnittspegel-Erfassungsschaltung (47), die Durchschnittspegel des Bildes in zwei Bereichen gleichzeitig erfasst, sowie eine Komparatorschaltung (46), die die Signalpegel von der Spitzenerfassungsschaltung vergleicht, und eine Komparatorschaltung (48), die die Signalpegel von der Durchschnittserfassungsschaltung vergleicht, enthält.

**Revendications**

1. Dispositif de décodage de télédiffusion de texte utilisé dans un récepteur de télévision pour recevoir et décoder des informations de télédiffusion comprenant des données de télédiffusion de texte, lesdites informations de télédiffusion étant superposées sur des lignes non utilisées d'un signal vidéo de télévision ordinaire émises pendant une période de suppression verticale, le dispositif comprenant une mémoire (7) destinée à stocker les données de télédiffusion de texte sous la forme de données de caractère d'un ou plusieurs programmes d'affichage d'images fixes plein écran, **caractérisé par** un moyen (25) susceptible de fonctionner dans un mode de défilement de texte du dispositif, destiné à la génération d'une table de présentation et de conversion d'image (7b) à partir des données de caractère extraites de la mémoire (7), ladite table stockant les données de télédiffusion de texte dans des unités d'informations chacune présentant au moins une taille de caractère du texte, une partie de contrôle d'affichage de défilement (2a) destinée à contrôler l'affichage et le défilement d'une séquence d'images de caractère en utilisant lesdites unités d'informations des données de télédiffusion de texte stockées et extraites de manière séquentielle de la table de présentation et de conversion d'image, les données de caractère de télédiffusion de texte comprenant des données de contrôle de chaque caractère représentant les coordonnées de présentation de caractère et les caractéristiques d'affichage, une partie de détection de signal (45,47) destinée à la détection de signaux de luminosité moyenne et de luminosité de crête d'une zone spécifique dans une image de télévision, et une partie de contrôle d'affichage défilant à reproduction adaptative (31) destinée à déplacer, en fonction de la luminosité détectée, une zone destinée à présenter un programme de télédiffusion de texte défilant à un emplacement optimal où le programme présenté est facile à lire et n'influe pas sur l'image de télévision.

2. Dispositif de décodage de télédiffusion de texte selon la revendication 1, **caractérisé en ce que** la partie de contrôle d'affichage de défilement (2a) comprend un convertisseur coordonnées-adresses (24) destiné à convertir lesdites coordonnées de présentation, représentées par les données de contrôle des données de caractère présentes dans les informations de télédiffusion de texte, en adresses de la table de présentation et de conversion d'image et le moyen de génération de table (25) est disposé de manière à préparer la table de présentation et de conversion d'image en fonction des adresses obtenues par le convertisseur coordonnées-adresses (24).

3. Dispositif de décodage de télédiffusion de texte selon la revendication 1 ou la revendication 2, **caractérisé en ce que** les informations destinées à être affichées en défilement par la partie de contrôle d'affichage de défilement sont des textes superposables.

4. Dispositif de décodage de télédiffusion de texte selon l'une quelconque des revendications précédentes, **caractérisé en ce que** la table de présentation et de conversion d'image (7b) comporte dans chacune desdites unités d'information un code de caractère et des données de caractère représentant une taille de caractère, un code de couleur représentant une couleur d'affichage et un code d'attribut représentant un attribut, par exemple, pour traiter l'enrichissement des caractères.

5. Dispositif de décodage de télédiffusion de texte selon l'une quelconque des revendications précédentes, **caractérisé en ce que** le dispositif comprend une partie de discrimination de mode d'affichage (29) destinée à discriminer un mode écran comprenant l'affichage d'un programme de télédiffusion de texte sur un écran à affichage large d'un moniteur, et une partie de contrôle d'affichage à reproduction adaptative (31) destinée à sélectionner automatiquement un emplacement optimal pour afficher le programme de télédiffusion de texte sur un écran d'affichage en fonction du mode d'affichage discriminé par la partie de discrimination d'affichage.

6. Dispositif de décodage de télédiffusion de texte selon l'une quelconque des revendications précédentes, **caractérisé en ce que** le dispositif comporte une partie de détection de position de sous-titre (30) destinée à détecter un emplacement de sous-titre mobile, et une partie de contrôle d'affichage de reproduction adaptative (31) opérationnelle lorsqu'un programme de télédiffusion de texte est superposé à une image de télévision présentant un sous-titre mobile, et la position du sous-titre détectée par la partie de détection de position de sous-titre (30) chevauche partiellement la zone d'affichage défilant des informations de télédiffusion de texte afin de déplacer ladite zone d'affichage des informations de télédiffusion à un emplacement optimal distinct du sous-titre.

**7.** Dispositif de décodage de télédiffusion de texte selon l'une quelconque des revendications précédentes, **caractérisé en ce que** ce dispositif est disposé de telle sorte que, lorsqu'une page issue d'un programme d'image fixe plein écran émis par une station d'émission de télévision doit être convertie en image défilante pour affichage, ladite page est également affichée sous la forme d'une incrustation d'image fixe de taille réduite dans un affichage pendant plusieurs secondes.

**8.** Dispositif de décodage de télédiffusion de texte selon l'une quelconque des revendications précédentes, **caractérisé en ce que** le moyen de génération de table est disposé de manière à préparer la table de présentation et de conversion d'image pour une page de données de télédiffusion de texte et la partie de contrôle d'affichage défilant extrait les caractères un par un depuis le début de la table et les affiche de manière séquentielle avant de les faire défiler sur un écran d'affichage.

**9.** Dispositif de décodage de télédiffusion de texte selon l'une quelconque des revendications précédentes, **caractérisé en ce que**, dans le cas de l'affichage d'une ligne de caractère unique à défilement horizontal sur un écran d'affichage, la partie de contrôle d'affichage de défilement détermine en premier lieu un caractère de référence et dispose ensuite tous les autres caractères sur une ligne relative au caractère de référence.

**10.** Dispositif de décodage de télédiffusion de texte selon l'une quelconque des revendications précédentes, **caractérisé en ce que** le dispositif comprend une horloge (4) destinée à mettre en oeuvre une interruption afin de déclencher l'affichage d'un programme ou d'une page de télédiffusion de texte préalablement désigné le) et préinitialisé(e) selon un intervalle préinitialisé ou d'actualiser le programme ou la page dans l'intervalle de durée de préinitialisation.

**11.** Dispositif de décodage de télédiffusion selon la revendication 1, **caractérisé en ce que** la mémoire (7) est susceptible d'être mise en fonctionnement pour stocker les données décodées de télédiffusion de texte de chaque programme associées à un numéro de programme, et **en ce que** le dispositif comporte une unité centrale de traitement (2) destinée à lire les données de télédiffusion de texte dans la mémoire grâce au numéro de programme, et une parie de détection de signal (5) destinée à convertir une partie de signal d'image du signal vidéo ordinaire de télévision en signal numérique, à générer une zone d'affichage défilant sur un écran d'affichage, à détecter un niveau d'intensité de crête et un niveau d'intensité moyen de ladite image dans ladite zone, à comparer les niveaux d'intensité d'image, à superposer le programme de télédiffusion de texte à l'image et à transférer les données obtenues dans l'unité centrale de traitement, laquelle à son tour détermine une zone d'affichage en fonction des données reçues de la partie de détection de signal afin d'éviter que l'image de programme de télédiffusion de texte ne chevauche un caractère présent dans l'image télévisée affichée à l'écran.

**12.** Dispositif de décodage de télédiffusion de texte selon la revendication 11, **caractérisé en ce que** la partie de détection de signal (5) comprend un convertisseur analogique-numérique (41) destiné à convertir un signal d'image en un signal numérique, un circuit de génération d'impulsions d'horloge (43) destiné à générer un signal synchronisé pour créer une zone d'affichage défilante sur un écran d'affichage, un circuit de détection de crête (45) destiné à détecter simultanément les niveaux de crête de l'image dans deux régions en fonction du signal synchronisé, un circuit de détection de niveau moyen (47) destiné à détecter simultanément les niveaux moyens dans deux régions, et un circuit de comparaison (46) destiné à comparer les niveaux de signal provenant du circuit de détection de crête et un circuit de comparaison (48) destiné à comparer les niveaux de signal provenant du circuit de détection de niveau moyen.

PROGRAM CONTROL DATA | PAGE DATA (1ST PAGE) | PAGE DATA (n-TH PAGE)

PROGRAM DATA (5TH LAYER)

| PROGRAM DATA HEADER | DATA UNIT | PAGE DATA HEADER | DATA UNIT | PAGE DATA HEADER | DATA UNIT |

DATA GROUP (4TH LAYER)

DATA GROUP 0

| SOH | DATA GROUP HEADER | DATA GROUP HEADER | CRC | | CRC |

DATA GROUP n

| SOH | DATA GROUP HEADER | DATA GROUP HEADER | CRC | | CRC |

DATA PACKET (3RD LAYER)

| PFX (14) | DATA BLOCK (176) | CHECK CODE (82) |

SYNCHRONIZING PORTION

DATA PACKET (272)

DATA LINE (2ND LAYER)

| (16) | (8) | INFORMATION BIT (190) | CHECK CODE (82) |

— BYTE SYNCHRONIZING SIGNAL

BIT SYNCHRONIZING SIGNAL

TRANSMISSION (1ST LAYER)

WHITE LEVEL OF IMAGE SIGNAL
LEVEL 1 OF CHARACTER SIGNAL

100
70

COLOR BURST
HORIZONTAL SYNCHRONIZING SIGNAL

PEDESTAL LEVEL OF IMAGE SIGNAL
LEVEL "0" OF CHARACTER SIGNAL

1H
(63.555 μs)

FIG.1
( PRIOR ART )

EP 0 700 211 B1

# FIG.2
## ( PRIOR ART )

| b4 b3 b2 b1 | | b8 | 0 | 0 | 0 | 0 | 0 | 0 | 0 | 0 | 1 | 1 | 1 | 1 | 1 | 1 | 1 | 1 |
| --- | --- | --- | --- | --- | --- | --- | --- | --- | --- | --- | --- | --- | --- | --- | --- | --- | --- | --- |
| | | b7 | 0 | 0 | 0 | 0 | 1 | 1 | 1 | 1 | 0 | 0 | 0 | 0 | 1 | 1 | 1 | 1 |
| | | b6 | 0 | 0 | 1 | 1 | 0 | 0 | 1 | 1 | 0 | 0 | 1 | 1 | 0 | 0 | 1 | 1 |
| | | b5 | 0 | 1 | 0 | 1 | 0 | 1 | 0 | 1 | 0 | 1 | 0 | 1 | 0 | 1 | 0 | 1 |
| | | | 00 | 01 | 02 | 03 | 04 | 05 | 06 | 07 | 08 | 09 | 10 | 11 | 12 | 13 | 14 | 15 |
| 0 0 0 0 | 0 | | | | SP | | | | | | | | 10/0 | | | | | |
| 0 0 0 1 | 1 | | | | | | | | | | | | | | | | | |
| 0 0 1 0 | 2 | | | | | | | | | | | | | | | | | |
| 0 0 1 1 | 3 | | | | | | | | | | | | | | | | | |
| 0 1 0 0 | 4 | | CO | | GL | | | | | | CI | | GR | | | | | |
| 0 1 0 1 | 5 | | CONTROL | | CHARACTER | | | | | | CONTROL | | CHARACTER | | | | | |
| 0 1 1 0 | 6 | | CODE | | CODE | | | | | | CODE | | CODE | | | | | |
| 0 1 1 1 | 7 | | AREA | | AREA | | | | | | AREA | | AREA | | | | | |
| 1 0 0 0 | 8 | | | | | | | | | | | | | | | | | |
| 1 0 0 1 | 9 | | | | | | | | | | | | | | | | | |
| 1 0 1 0 | 10 | | | | | | | | | | | | | | | | | |
| 1 0 1 1 | 11 | | | | | | | | | | | | | | | | | |
| 1 1 0 0 | 12 | | | | | | | | | | | | | | | | | |
| 1 1 0 1 | 13 | | | | | | | | | | | | | | | | | |
| 1 1 1 0 | 14 | | | | | | | | | | | | | | | | | |
| 1 1 1 1 | 15 | | | | DEL | | | | | | | | | | | | | 15/15 |

EP 0 700 211 B1

# FIG.3
## ( PRIOR ART )

| | | |
|---|---|---|
| CHARACTER AND GRAPHIC CHARACTER SETS | JAPANESE KANJI CHARACTERS (2-BYTE CODE) 362 | JIS 6226(1983)1ST LEVEL CHARACTERS 2965, NON-KANJI CHARACTERS 524, ADDITIONAL CHARACTERS 173 |
| | ALPHANUMERIC CHARACTER SET (1-BYTE CODE) 94 | ROMAN CHARACTERS 52, NUMERIC CHARACTERS 10, SYMBOLS 32 |
| | JAPANESE KATAKANA CHARACTER SET (1-BYTE CODE) 94 | KATAKANA CHARACTERS 86, SYMBOLS 8 |
| | JAPANESE HIRAGANA CHARACTER SET (1-BYTE CODE) 91 | HIRAGANA CHARACTERS 83, SYMBOLS 8 |
| | MOSAIC SET (1-BYTE CODE) 1290 | MOSAIC SETS A, B, C, D |
| | EXTERNAL CHARACTER SET (1-BYTE CODE) 1410 | 15 SETS OF DRCS · 1-15 (EACH 94 CHARACTERS) |
| | EXTERNAL CHARACTER SET (2-BYTE CODE) 1224 | 2ND LEVEL (DJCS) CARACTERS 3386, DRCS · O 8836 |
| | MACRO CODE SET (1-BYTE CODE) 94 | DEFAULT MACRO 6/0-6/15, MACRO BY MACRO DEFINITION |
| CODE SET CONTROL FUNCTION | BASIC CONTROL CODE SET (CO) (e.g., NUL) 24 | START, END, OPERATING POSITION, IMAGE ERASING, ESC.,SHIFT, US. AND SO ON |
| | ADDITIONAL CONTROL CODE SET (e. g., BKF) 48 | SELECTION OF FOREGROUND COLOR (CMLAO-7), COLOR SELECTION, PALETTE SELECTION |
| | SPECIAL CODE SET (SP, DEL) 2 | SPACE, DELETE |

EP 0 700 211 B1

# FIG.4A
## ( PRIOR ART )

TV SIGNAL

CHARACTER
SIGNAL

MIX 61

RF
MODULATOR 62

63

# FIG.4B
## ( PRIOR ART )

64

TUNER 65

IF
DEMODULATOR 66

IMAGE
SIGNAL

MIX 68

MONITOR 69

TEXT-BROADCAST
DECODER 67

EP 0 700 211 B1

# FIG.5
## ( PRIOR ART )

VIDEO SIGNAL →

81 — INPUT CONTROL PORTION

84 — DISPLAY CONTROL PORTION → IMAGE (R, G, B, Y)

82 — C P U

85 — MEMORY

83 — CG-ROM

86 — I/F ← KEY

# FIG.6
## ( PRIOR ART )

```
                START

STEP 1      ◇ CHARACTER
              CODE ?  ──── YES
                 │ NO                    │
STEP 2                        STEP 4
   CONTROL CODE          SINGLE CHARACTER
   PROCESSING            DISPLAY PROCESSING
                 │                      │
                 └──────────┬───────────┘
STEP 3      ◇ PAGE END ?
   NO ───────      │ YES
                  END
```

# FIG.7
## ( PRIOR ART )

WHITE LEVEL

100% - - - - - - - - - - - - - - - - - - - - - - - - - - - - - - - - - - - - - - - - - - - - - - - - - - - - - - - - - - - - - - -

45 BYTES  |  45 BYTES

2 1 2  40 BYTES  |  2 1 2  8  32 BYTES

LOGIC 1

55(16)%
DATA LEVEL

40CODES INCLUDING CHARACTER CODES, GRAPHIC CHARACTER CODES AND CONTROL CODES

40 CODES INCLUDING CHARACTER CODES, GRAPHIC CHARACTER CODES AND CONTROL CODES

LOGIC 0

0(12)%
BLACK LEVEL

MAGAZINE AND ROW ADDRESS
FRAMING CODE
CLOCK RUN

PAGE NUMBER,SUBCODE, CONTROL CODE
MAGAZINE AND ROW ADDRESS
FRAMING CODE
CLOCK RUN

EP 0 700 211 B1

# FIG.8A
# ( PRIOR ART )

# FIG.8
# ( PRIOR ART )

| FIG.8A | FIG.8B |
|--------|--------|

EIGHT HAMMING CODES PECULIAR TO PAGE-HEADER

| PAGE NUMBER | | TIME CODE- 'MINUTES' | |
|---|---|---|---|
| UNITS | TENS | UNITS | TENS |
| $2^0 \ldots 2^3$ | $2^0 \ldots 2^3$ | $2^0 \ldots 2^3$ | $2^0 \ldots 2^2$ |
| P M · · · · | P M · · · · | P M · · · · | P M · · · · |

| PAGE HEADER (ROW 0) | CLOCK RUN-IN | CLOCK RUN-IN | FRAMING CODE | MAGAZINE AND ROW-ADDRESS · · | PAGE NUMBER UNITS | PAGE NUMBER TENS | TIME 'MINU · · UNIT · · | TIME 'MINU · · TENS · · |
|---|---|---|---|---|---|---|---|---|
| ROW 1 | CLOCK · · · · · · | CLOCK · · · · · · | FRAMING · · · · · · | MAGAZINE AND · · · · · · · · · · · | | | | |
| ROW 2 | CLOCK · · · · · · | CLOCK · · · · · · | FRAMING · · · · · · | MAGAZINE AND · · · · · · · · · · · | | | | |
| ROW 3 | CLOCK · · · · · · | CLOCK · · · · · · | FRAMING · · · · · · | MAGAZINE AND · · · · · · · · · · · | | | | |
| ROW 4 etc | | | | | | | | |

| 1 | 0 | 1 | 0 | 1 | 0 | 1 | 0 | 1 | · · · · · · | 1 | 1 | 1 | 0 | · · · · · · | P | M | · · · · · · | P | M | · · · · · · | P | M |

CLOCK RUN-IN SEQUENCE    FRAMING CODE    $2^0 \ldots 2^2$ MAGAZINE NUMBER    $2^0 \ldots 2^4$ ROW ADDRESS

SYNCHRONIZATION     MAGAZINE AND ROW ADDRESS GROUP

HAMMING CODES COMMON TO ALL ROWS

EP 0 700 211 B1

# FIG.8B
## ( PRIOR ART )

EIGHT HAMMING CODES PECULIAR TO PAGE-HEADER

FIRST CHARACTER
OF PAGE HEADER

|  | UNITS | TENS |  |  |  |
|---|---|---|---|---|---|
| $C_4$ | $2^0 \cdot \cdots \cdot 2^{3\,\prime\prime}$ | $2^0 \cdots 2^{1\,\prime}$ | $C_5 \cdots C_6$ | $C_{10} \cdots \cdots C_{14}$ | |

| P | M | P | M | · · · · | P | M | P | M | P | M | P | M | P | · · · · | M | P | · · · · | M | M | · · · · | M |

TIME HOUR·· UNIT··

TIME HOUR·· TENS··

CONTR·· GROUP··

CONTR·· GROUP··

CHARACTER BYTES

| M | MASSAGE BITES |
|---|---|
| P | PROTECTION BITES |
| M | CONTROL BITES |

$C_4$   ERASE

$C_{12}$
$C_{13}$ } UNALLOCATED
$C_{14}$

EP 0 700 211 B1

EIGHT HAMMING CODES PECULIAR TO PAGE-HEADER

| FIG.9A | FIG.9B |
|--------|--------|

PAGE NUMBER | TIME CODE- 'MINUTES'

UNITS | TENS | UNITS | TENS

$2^0$ $2^1$ $2^2$ $2^3$ $2^0$ $2^1$ $2^2$ $2^3$ $2^0$ $2^1$ $2^2$ $2^3$ $2^0$ $2^1$ $2^2$ C4

P M P M P M P M P M P M P M P M P M P M P M P M P M P M P M P M

PAGE HEADER (ROW 0)

| CLOCK RUN-IN | CLOCK RUN-IN | FRAMING CODE | MAGAZINE AND ROW-ADDRESS GROUP | PAGE NUMBER UNITS | PAGE NUMBER TENS | TIME 'MINUTES' UNITS | TIME 'MINUTES' TENS |

ROW 1

| CLOCK RUN-IN | CLOCK RUN-IN | FRAMING CODE | MAGAZINE AND ROW-ADDRESS GROUP | | | | |

ROW 2

| CLOCK RUN-IN | CLOCK RUN-IN | FRAMING CODE | MAGAZINE AND ROW-ADDRESS GROUP | | | | |

ROW 3 etc

1 0 1 0 1 0 1 0 1 0 1 0 1 0 1 0 1 0 1 1 1 0 0 1 0 0 P M P M P M P M P M P M P M P M

$2^0$ $2^1$ $2^2$ $2^0$ $2^1$ $2^2$ $2^3$ $2^4$

CLOCK RUN-IN SEQUENCE | FRAMING CODE | MAGAZINE NUMBER | ROW ADDRESS

SYNCHRONIZATION | MAGAZINE AND ROW ADDRESS GROUP

HAMMING CODES COMMON TO ALL ROWS

EP 0 700 211 B1

# FIG.9B
## ( PRIOR ART )

EIGHT HAMMING CODES PECULIAR TO PAGE-HEADER

TIME CODE- 'MINUTES'

UNITS | TENS

$2^0$ $2^1$ $2^2$ $2^3$ $2^0$ $2^1$

$C_5$ $C_6$ $C_7$ $C_8$ $C_9$ $C_{10}$ $C_{11}$ $C_{12}$ $C_{13}$ $C_{14}$

FIRST CHARACTER OF PAGE HEADER

P M P M P M P M P M P M P M M M M M

TIME "HOURS" UNITS

TIME "HOURS" TENS

CONTROL GROUP A

CONTROL GROUP B

CHARACTER BYTES

M̄ MASSAGE BITES

P̄ PROTECTION BITES

M̄ CONTROL BITES

$C_4$ ERASE
$C_5$ NEWS FLASH
$C_6$ SUBTITLE
$C_7$ SUPPRESS HEADER
$C_8$ UPDATE
$C_9$ INTERRUPTED SEQUENCE
$C_{10}$ INHIBIT DISPLAY
$C_{11}$ MAGAZINE SERIAL
$C_{12}$
$C_{13}$ } UNALLOCATED
$C_{14}$

43

# FIG.10
## ( PRIOR ART )

| b3 | b2 | b1 | b0 | ROW / COLUMN | b6=0, b5=0, b4=0 → 0 | b6=0, b5=0, b4=1 → 1 | b6=0, b5=1, b4=0 → 2 | b6=0, b5=1, b4=1 → 3 | b6=1, b5=0, b4=0 → 4 | b6=1, b5=0, b4=1 → 5 | b6=1, b5=1, b4=0 → 6 | b6=1, b5=1, b4=1 → 7 |
|---|---|---|---|---|---|---|---|---|---|---|---|---|
| 0 | 0 | 0 | 0 | 0 | | | SP | 0 | @ | P | | p |
| 0 | 0 | 0 | 1 | 1 | | | ! | 1 | A | Q | a | q |
| 0 | 0 | 1 | 0 | 2 | | | " | 2 | B | R | b | r |
| 0 | 0 | 1 | 1 | 3 | | | # | 3 | C | S | c | s |
| 0 | 1 | 0 | 0 | 4 | | | ¥ | 4 | D | T | d | t |
| 0 | 1 | 0 | 1 | 5 | | | % | 5 | E | U | e | u |
| 0 | 1 | 1 | 0 | 6 | | | & | 6 | F | V | f | v |
| 0 | 1 | 1 | 1 | 7 | | | ' | 7 | G | W | g | w |
| 1 | 0 | 0 | 0 | 8 | | | ( | 8 | H | X | h | x |
| 1 | 0 | 0 | 1 | 9 | | | ) | 9 | I | Y | i | y |
| 1 | 0 | 1 | 0 | 10 | | | * | : | J | Z | j | z |
| 1 | 0 | 1 | 1 | 11 | | | + | ; | K | [ | k | { |
| 1 | 1 | 0 | 0 | 12 | | | , | < | L | ' | l | l |
| 1 | 1 | 0 | 1 | 13 | | | - | = | M | ] | m | } |
| 1 | 1 | 1 | 0 | 14 | | | . | > | N | ^ | n | ‾ |
| 1 | 1 | 1 | 1 | 15 | | | / | ? | O | _ | o | DEL |

# FIG.11
## ( PRIOR ART )

EP 0 700 211 B1

# FIG.12

```
VIDEO ──────────→ ┌─────────────┐              ┌─────────────┐
SIGNAL            │     1        │              │      6      │
                  │   INPUT      │              │  DISPLAY    │ ──→ IMAGE
                  │  CONTROL     │ ←══════════→ │  CONTROL    │    (R,G,B,Y)
                  │  PORTION     │              │  PORTION    │
                  └─────────────┘              └─────────────┘

                  ┌─────────────┐              ┌─────────────┐
                  │  CPU    2    │              │      7      │
                  │ ┌─────────┐ │              │             │
                  │ │ SCROLL  │ │ ←══════════→ │   MEMORY    │
                  │ │DISPLAY  │ │              │             │
                  │ │CONTROL  │ │              └─────────────┘
                  │ │PORTION  │ │
                  │ └─────────┘ │
                  └─────────────┘
                    2a

                  ┌─────────────┐              ┌─────────────┐
                  │     3       │              │      8      │
                  │             │              │             │
                  │  CG · ROM   │ ←══════════→ │     I/F     │ ←→ KEY
                  │             │              │             │
                  └─────────────┘              └─────────────┘

                  ┌─────────────┐
                  │     4       │
                  │             │
                  │   TIMER     │ ←─────
                  │             │
                  └─────────────┘

                  ┌─────────────┐
                  │     5       │
                  │  SIGNAL     │
                  │ DETECTING   │ ←─────
                  │  PORTION    │
                  └─────────────┘

VIDEO ──────────────→
SIGNAL
```

# FIG.13

SELECTING PROGRAM

- VIDEO SIGNAL
- 11 — TV SIGNAL PROCESSING CIRCUIT → ①
- 14 — TEXT-BROADCAST INPUT CONTROL PORTION
- 15 — ERROR CORRECTING PORTION
- 16 — DATA TRANSFER PORTION → ②
- 7 MEMORY
- 7a — TEXT BROADCAST DATA STORING PORTION
- 7c — FLAG
- 7b — PRESENTABLE IMAGE CONVERSION TABLE
- 35 — I/O
- 36 — I/O
- 33 — KEYBOARD
- 34 — SCROLL DISPLAY DISCRIMINATING PORTION
- 22 — CHARACTER CODE DISCRIMINATION PORTION
- 23 — GATE CIRCUIT
- 24 — COORDINATE-TO-ADDRESS CONVERTER
- 25 — TABLE PREPARING PORTION
- 26 — PAGE END JUDGING PORTION
- 27 — TABLE READING CONTROL PORTION
- 2a
- READ-OUT TABLE DATA → ③

EP 0 700 211 B1

# FIG.14

REMOTE CONTROL SIGNAL

I/F

(B)

12 DISPLAY MODE CONTROL PORTION

(1)

(C)

13 SUBTITLE DISPLAY POSITION CONTROL PORTION

(A)

SYNCHRONIZING SIGNAL

SWITCH CONTROL PORTION

TV/TEXT -BROADCAST DISPLAY CONTROL PORTION

32

TO DISPLAY DEVICE

17 CHARACTER CODE/CONTROL CODE DISCRIMINATING PORTION CONTROL CODE

(2)

CONTROL CODE

18 CONTROL CODE PROCESSING PORTION

20 ORDINARY TEXT-BROADCAST DISPLAY CONTROL PORTION

3 CG-ROM

21 SMALL IMAGE GENERATING PORTION

DISPLAY CONTROL PORTION

6

CHARACTER CODE

CHARACTER CODE

CG-ROM READING CONTROL PORTION CHARACTER CODE

19

SYNCHRONIZING SIGNAL

CONTROL CODE

SCROLL DISPLAY CONTROL PORTION

31

28 CHARACTER CODE/CONTROL CODE DISCRIMINATING PORTION SYNCHRONIZING SIGNAL

2a

(3)

5 SIGNAL DETECTING PORTION

29 DISPLAY MODE DISCRIMINATING PORTION

30 SUBTITLE POSITION DETECTING PORTION

(A)

(B)

(C)

EP 0 700 211 B1

EP 0 700 211 B1

# FIG.15A

$\frac{8}{256}$

$\frac{12}{256}$

# FIG.15B

$\frac{16}{256}$

$\frac{24}{256}$

REFERENCE POINT

# FIG.15C

(a)

$\frac{12}{256}$ 0

(b)

$\frac{204}{256}$

$\frac{248}{256}$

# FIG.16

49

## FIG.17A

## FIG.17B

## FIG.17C

| MAX | AVERAGE | DISPLAY AREA DATA OUTPUT |
|-----|---------|--------------------------|
| A | A | B |
| A | B | B |
| B | A | A |
| B | B | A |

EP 0 700 211 B1

# FIG.18A

SCREEN IMAGE

V

HORIZONTAL
DISPLAY AREA

H

# FIG.18C

SCREEN IMAGE

V

VERTICAL
DISPLAY AREA

H

# FIG.18B

V

VERTICAL
MASK
SIGNAL

H HORIZONTAL
MASK SIGNAL

# FIG.18D

V

H

EP 0 700 211 B1

# FIG.19

STEP 10

START

SETTING A SCROLL
DISPLAY FLAG

ORDINARY
PROCESSING

# FIG.20

| POWER | CHAR-ACTER | TV | |
|---|---|---|---|
| A | B | C | D |
| 1 | 2 | 3 | 4 |
| 5 | 6 | 7 | 8 |

# FIG.21

248/8=31

204/12=17

# FIG.22

| | |
|---|---|
| n+0 | SIZE DATA |
| n+1 | COLOR DATA |
| n+2 | CHARACTER SET CODE |
| n+3 | CHARACTER CODE 1 |
| n+4 | CHARACTER CODE 2 |
| n+5 | ATTRIBUTE DATA |
| n+6 | ATTRIBUTE PARAMETER |

# FIG.23

(a) A B C D E F H I J K L

16 dots
24 dots

(b) A B 0 1 2 3 / 4 5 6 7 E F H L

8 dots
12 dots

(c)

(d)

(e)

(f)

# FIG.24

START

STEP 20

CHARACTER CODE ? — YES

NO

STEP 21

CONTROL CODE PROCESSING

STEP 22

SCROLL DISPLAY FLAG ? — YES

NO

STEP 23

SINGLE CHARACTER DISPLAY PROCESSING

STEP 24

COORDINATE-TO -ADDRESS CONVERSION

STEP 25

TABLE PREPARATION

STEP 26

NO — PAGE END ?

YES

STEP 27

SCROLL DISPLAY FLAG=1 ? — NO

STEP 28 — YES

SCROLL DISPLAY

END

## FIG.25A

## FIG.25B

## FIG.25C

## FIG.25D

# FIG.26

SCREEN IMAGE

SMALL
SCREEN IMAGE — 53

# FIG.27

START

**STEP 31**
CHARACTER CODE ? — NO

YES

**STEP 32**
WIDE MODE ? — NO

YES

**STEP 33**
SUPERIMPOSING ? — NO

**STEP 34** YES

**STEP 35**
SINGLE CHARACTER DISPLAY

**STEP 36**
CONTROL CODE PROCESSING

SINGLE CHARACTER PROCESSING

**STEP 37**
PREPARING A CHARACTER COORDINATE TABLE

**STEP 39**
PAGE END ? — NO

YES

END

**STEP 38**
NO — PAGE END ?

**STEP 40** YES
DISPLAY MODE JUDGMENT

**STEP 41**
MODE "A" ? — NO

**STEP 43**

**STEP 42** YES
1/2-FORMAT IMAGE DISPLAY

DISPLAY POSITION CHANGE

END

# FIG.28

START

STEP 51
TABLE HEAD

STEP 52
FFH ? — YES

NO

STEP 53
FFH WITHIN 2ND BYTE -6TH BYTE ? — NO

STEP 54 YES
SET "A"

STEP 55
FFH WITHIN 7TH BYTE -12TH BYTE ? — NO

STEP 56 YES
SET "B"

STEP 57
FFH WITHIN 13TH BYTE -17TH BYTE ? — NO

STEP 58 YES
SET "C"

J

J

STEP 59
ONLY "A" ? — YES

NO

STEP 63
MODE "B"

STEP 60
ONLY "C" ? — YES

NO

STEP 61
MODE "A"

STEP 62
MODE "C"

END

# FIG.29

FIG.30

# FIG.31A

# FIG.31C

# FIG.31B

REFERENCE
POINT

# FIG.32

# FIG.33

480/12=40

250/10=25

# FIG.34

24 dots

20 dots

(a) | A | B | C | D | E | F | | H | I | J | K | L |

12 dots

10 dots

(b) | A | B | 0 1 2 3 / 4 5 6 7 | E | F | | H | | | | | | | | L |

(c)

(d)

(e)

(f)

# FIG.35

START

STEP 71 → TABLE HEAD

STEP 72 → FFH ? — YES

NO

STEP 73 → FFH WITHIN 2ND BYTE -9TH BYTE ? — NO

STEP 74 ↓ YES → SET "A"

STEP 75 → FFH WITHIN 10TH BYTE -17TH BYTE ? — NO

STEP 76 ↓ YES → SET "B"

STEP 77 → FFH WITHIN 18TH BYTE -25TH BYTE ? — NO

STEP 78 ↓ YES → SET "C"

J

J

STEP 79 → ONLY "A" ? — YES

NO

STEP 83 → MODE "B"

STEP 80 → ONLY "C" ? — YES

NO

STEP 81 → MODE "A"

STEP 82 → MODE "C"

END